# EUROPÄISCHE PATENTANMELDUNG

(11) **EP 2 113 172 A1**
(43) Veröffentlichungstag der Anmeldung: **04.11.2009**
(21) Anmeldenummer: 08155303.4
(22) Anmeldetag: 28.04.2008
(51) Int. Cl.: A01N 43/08

(54) **Verfahren zur verbesserten Nutzung des Produktionspotentials transgener Pflanzen**

(71) Anmelder: Bayer CropScience AG, 40789 Monheim (DE)
(72) Erfinder: Die Erfindernennung liegt noch nicht vor

(57) **Zusammenfassung**

Die Erfindung betrifft ein Verfahren zur Verbesserung der Nutzung des Produktionspotentials transgener Pflanzen.

Der Anteil transgener Pflanzen in der Landwirtschaft ist in den letzten Jahren deutlich gestiegen, wenn auch regionale Unterschiede derzeit noch erkennbar sind. So hat sich beispielsweise der Anteil an transgenem Mais in den USA seit 2001 von 26% auf 52% verdoppelt, während transgener Mais in Deutschland bisher kaum eine praktische Rolle spielt. In anderen europäischen Ländern, beispielsweise in Spanien, liegt der Anteil an transgenem Mais aber bereits bei etwa 12%.

## Beschreibung

Die Erfindung betrifft ein Verfahren zur Verbesserung der Nutzung des Produktionspotentials transgener Pflanzen.

Der Anteil transgener Pflanzen in der Landwirtschaft ist in den letzten Jahren deutlich gestiegen, wenn auch regionale Unterschiede derzeit noch erkennbar sind. So hat sich beispielsweise der Anteil an transgenem Mais in den USA seit 2001 von 26% auf 52% verdoppelt, während transgener Mais in Deutschland bisher kaum eine praktische Rolle spielt. In anderen europäischen Ländern, beispielsweise in Spanien, liegt der Anteil an transgenem Mais aber bereits bei etwa 12%.

Transgene Pflanzen werden vor allem eingesetzt, um das Produktionspotential der jeweiligen Pflanzensorte bei möglichst geringem Einsatz von Produktionsmitteln möglichst günstig zu nutzen. Die genetische Veränderung der Pflanzen zielt dazu vor allem darauf ab, in den Pflanzen eine Resistenz gegen bestimmte Schädlinge oder Schadorganismen oder aber auch Herbizide sowie gegen abiotischen Stress (beispielsweise Dürre, Hitze oder erhöhte Salzgehalte) zu erzeugen. Ebenso kann eine Pflanze genetisch modifiziert werden, um bestimmte Qualitäts- oder Produktmerkmale, wie z.B. den Gehalt an ausgewählten Vitaminen oder Ölen, zu erhöhen oder bestimmte Fasereigenschaften zu verbessern.

Eine Herbizidresistenz bzw. -toleranz kann beispielsweise durch den Einbau von Genen in die Nutzpflanze zur Expression von Enzymen zur Detoxifikation bestimmter Herbizide erreicht werden, die somit selbst in Gegenwart dieser Herbizide zur Bekämpfung von Unkräutern und Ungräsern möglichst ungehindert wachsen können. Als Beispiele seien Baumwoll-Sorten bzw. Mais-Sorten genannt, die den herbiziden Wirkstoff Gyphosate (Roundup®), (Roundup Ready®, Monsanto) oder die Herbizide Glufosinate oder Oxynil tolerieren.

In jüngerer Zeit wurden zudem Nutzpflanzen entwickelt, die zwei oder mehrere genetische Veränderungen enthalten ("stacked transgenic plants" oder mehrfach-transgene Kulturen). So hat beispielsweise die Firma Monsanto mehrfach-transgene Maissorten entwickelt, die gegen den Maiszünsler (*Ostrinia nubilalis*) und den Maiswurzelbohrer (*Diabrotica virgifera*) resistent sind. Ebenso sind Mais- oder Baumwollkulturen bekannt, die sowohl gegen den Maiswurzelbohrer bzw. den Baumwollkapselwurm resistent sind als auch das Herbizid Roundup® tolerieren.

Es hat sich nunmehr gezeigt, dass sich die Nutzung des Produktionspotentials transgener Nutzpflanzen nochmals verbessern läßt, wenn die Pflanzen mit einem oder mehreren Tetronsäure - Derivat(en) behandelt werden. Dabei schließt der Begriff "Behandlung" alle Maßnahmen ein, die zu einem Kontakt zwischen diesen Wirkstoffen und mindestens einem Pflanzenteil führen. Unter "Pflanzenteilen" sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Saatgut sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Saatgut.

Tetronsäure-Derivate und ihre herbiziden oder insektiziden Wirkungen sind aus dem Stand der Technik umfangreich bekannt. Es ist bekannt, dass bestimmte substituierte Δ³-Dihydrofuran-2-on-Derivate herbizide Eigenschaften besitzen (vgl. DE-A-4 014 420). Die Synthese der als Ausgangsverbindungen verwendeten Tetronsäurederivate (wie z.B. 3-(2-Methyl-phenyl)-4-hydroxy-5-(4-fluorphenyl)-Δ³-dihydrofuranon-(2)) ist ebenfalls in DE-A-4 014 420 beschrieben. Ähnlich strukturierte Verbindungen ohne Angabe einer insektiziden und/oder akariziden Wirksamkeit sind aus der Publikation Campbell et al., J. Chem. Soc., Perkin Trans. 1, 1985, (8) 1567-76 bekannt. Weiterhin sind 3-Aryl-Δ³-dihydrofuranon-Derivate mit herbiziden, akariziden und insektiziden Eigenschaften aus EP-A-528 156, EP-A-0 647 637, WO 95/26 345, WO 96/20 196, WO 96/25 395, WO 96/35 664, WO 97/01 535, WO 97/02 243, WO 97/36 868, WO 98/05638, WO 98/25928, WO 99/16748, WO 99/43649, WO 99/48869, WO 99/55673, WO 00/42850, WO 01/17972, WO 01/23354, WO 01/74770, WO 03/013 249, WO 04/024 688, WO 04/080 962, WO 04/111 042, WO 05/092897, WO 06/000355, WO 06/029799, WO 06/089633, WO 07/048545, WO 07/073856 und WO 07/096058 bekannt.

Aus diesen Dokumenten sind dem Fachmann Verfahren zur Herstellung, zur Verwendung und zur Wirkung von Tetronsäure-Derivaten (TSD) ohne weiteres geläufig. Daher werden sie bezüglich der erfindungsgemäß einsetzbaren Wirkstoffe sowie deren Herstellung und Verwendung vollumfänglich in Bezug genommen.

Die erfindungsgemäß einsetzbaren TSD weisen die allgemeine Formel (I) wie folgt auf: 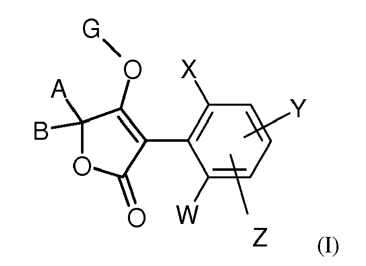 in welcher
- W: für Wasserstoff, Alkyl, Alkenyl, Alkinyl, Halogen, Alkoxy, Halogenalkyl, Halogenalkoxy oder Cyano steht,
- X: für Halogen, Alkyl, Alkenyl, Alkinyl, Alkoxy, Alkoxy-alkoxy, Halogenalkyl, Halogenalkoxy oder Cyano steht,
- Y: für Wasserstoff, Halogen, Alkyl, Alkenyl, Alkinyl, Alkoxy, Cyano, Halogenalkyl, Halogenalkoxy oder für jeweils gegebenenfalls substituiertes Phenyl oder Hetaryl steht,
- Z: für Wasserstoff, Halogen, Alkyl, Halogenalkyl, Cyano, Alkoxy oder Halogenalkoxy steht,
- A: für Wasserstoff, jeweils gegebenenfalls durch Halogen substituiertes Alkyl, Alkenyl, Alkoxyalkyl, Alkylthioalkyl, gesättigtes oder ungesättigtes, gegebenenfalls substituiertes Cycloalkyl steht,
- B: für Wasserstoff, Alkyl oder Alkoxyalkyl steht, oder
- A und B: gemeinsam mit dem Kohlenstoffatom an das sie gebunden sind für einen gesättigten oder ungesättigten, gegebenenfalls mindestens ein Heteroatom enthaltenden unsubstituierten oder substituierten Cyclus stehen,
- G: für Wasserstoff (a) oder für eine der Gruppen 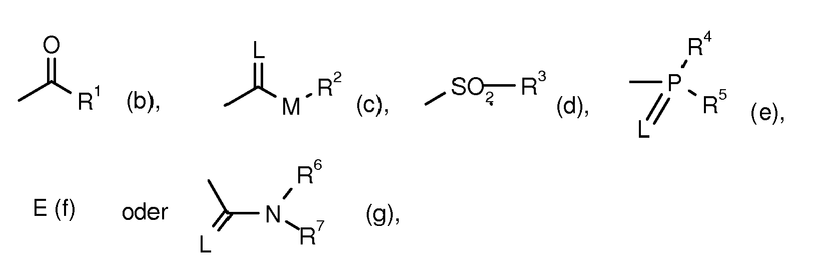
steht,
worin
- E: für ein Metallionäquivalent oder ein Ammoniumion steht,
- L: für Sauerstoff oder Schwefel steht,
- M: für Sauerstoff oder Schwefel steht,
- R¹: für jeweils gegebenenfalls durch Halogen substituiertes Alkyl, Alkenyl, Alkoxyalkyl, Alkylthioalkyl, Polyalkoxyalkyl oder gegebenenfalls durch Halogen, Alkyl oder Alkoxy substituiertes Cycloalkyl, das durch mindestens ein Heteroatom unterbrochen sein kann, jeweils gegebenenfalls substituiertes Phenyl, Phenylalkyl, Hetaryl, Phenoxyalkyl oder Hetaryloxyalkyl steht,
- R²: für jeweils gegebenenfalls durch Halogen substituiertes Alkyl, Alkenyl, Alkoxyalkyl, Polyalkoxyalkyl oder für jeweils gegebenenfalls substituiertes Cycloalkyl, Phenyl oder Benzyl steht,
- R³, R⁴: und R⁵ unabhängig voneinander für jeweils gegebenenfalls durch Halogen substituiertes Alkyl, Alkoxy, Alkylamino, Dialkylamino, Alkylthio, Alkenylthio, Cycloalkylthio oder für jeweils gegebenenfalls substituiertes Phenyl, Benzyl, Phenoxy oder Phenylthio stehen,
- R⁶ und R⁷: unabhängig voneinander für Wasserstoff, jeweils gegebenenfalls durch Halogen substituiertes Alkyl, Cycloalkyl, Alkenyl, Alkoxy, Alkoxyalkyl, für gegebenenfalls substituiertes Phenyl, für gegebenenfalls substituiertes Benzyl stehen, oder gemeinsam mit dem N-Atom, an das sie gebunden sind, für einen gegebenenfalls durch Sauerstoff oder Schwefel unterbrochenen Cyclus stehen.

In einer bevorzugten Ausführungsform der Erfindung wird mindestens ein insektizid wirksames TSD-Derivat zur Behandlung transgener Nutzpflanzen verwendet. Der Begriff "insektizid wirksam" oder "insektizid" umfaßt im Sinne der Erfindung insektizide, akarizide, molluskizide, nematizide, ovizide Wirkungen, sowie eine abschreckende (repellent), verhaltensändernde (behavior modifier) oder sterilisierende (sterilant) Wirkung auf Schädlinge.

### Besonders bevorzugte insektizide Wirkstoffe sind Verbindungen der Formel (I), in welcher

- W: besonders bevorzugt für Wasserstoff, Methyl, Ethyl, Chlor, Brom oder Methoxy steht,
- X: besonders bevorzugt für Chlor, Brom, Methyl, Ethyl, Propyl, i-Propyl, Methoxy, Ethoxy oder Trifluormethyl steht,
- Y und Z: besonders bevorzugt unabhängig voneinander für Wasserstoff, Fluor, Chlor, Brom, Methyl, Ethyl, Propyl, i-Propyl, Trifluormethyl oder Methoxy stehen,
- A: besonders bevorzugt für Methyl, Ethyl, Propyl, i-Propyl, Butyl, i-Butyl, sec.-Butyl, tert.-Butyl, Cyclopropyl, Cyclopentyl oder Cyclohexyl steht,
- B: besonders bevorzugt für Wasserstoff, Methyl oder Ethyl steht,
- A, B: und das Kohlenstoffatom an das sie gebunden sind, besonders bevorzugt für gesättigtes C₅- C₆-Cycloalkyl stehen, worin gegebenenfalls ein Ringglied durch Sauerstoff ersetzt ist und welches gegebenenfalls einfach durch Methyl, Ethyl, Methoxy, Ethoxy, Propoxy oder Butoxy substituiert ist,
- G: besonders bevorzugt für Wasserstoff (a) oder für eine der Gruppen 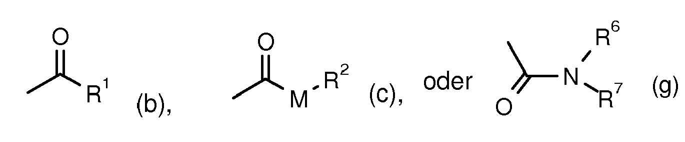
steht,
in welchen
- M: für Sauerstoff oder Schwefel steht,
- R¹: besonders bevorzugt für C₁-C₈-Alkyl, C₂-C₄-Alkenyl, Methoxymethyl, Ethoxymethyl, Ethylthiomethyl, Cyclopropyl, Cyclopentyl oder Cyclohexyl,
für gegebenenfalls durch Fluor, Chlor, Brom, Cyano, Nitro, Methyl, Ethyl, Methoxy, Trifluormethyl oder Trifluormethoxy substituiertes Phenyl,
für jeweils gegebenenfalls durch Chlor oder Methyl substituiertes Pyridyl oder Thienyl steht,
- R²: besonders bevorzugt für C₁-C₈-Alkyl, C₂-C₄-Alkenyl, Methoxyethyl, Ethoxyethyl oder für Phenyl oder Benzyl steht,
- R⁶ und: R⁷ unabhängig voneinander besonders bevorzugt für Methyl, Ethyl oder zusammen für einen C₅-Alkylenrest stehen, in welchem die C₃-Methylengruppe durch Sauerstoff ersetzt ist.
Ganz besonders bevorzugt sind Verbindungen der Formel (I), in welcher
- W: ganz besonders bevorzugt für Wasserstoff oder Methyl steht,
- X: ganz besonders bevorzugt für Chlor, Brom oder Methyl steht,
- Y und Z: ganz besonders bevorzugt unabhängig voneinander für Wasserstoff, Chlor, Brom oder Methyl stehen,
- A, B: und das Kohlenstoffatom an das sie gebunden sind, ganz besonders bevorzugt für gesättigtes C₅-C₆-Cycloalkyl stehen, in welchem gegebenenfalls ein Ringglied durch Sauerstoff ersetzt ist und welches gegebenenfalls einfach durch Methyl, Trifluormethyl, Methoxy, Ethoxy, Propoxy oder Butoxy substituiert ist,
- G: ganz besonders bevorzugt für Wasserstoff (a) oder für eine der Gruppen 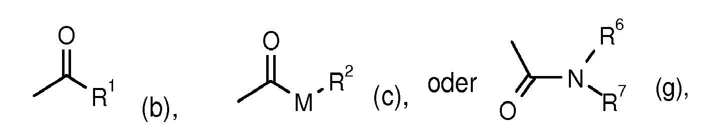
steht,
in welchen
- M: für Sauerstoff oder Schwefel steht,
- R¹: ganz besonders bevorzugt für C₁-C₈-Alkyl, C₂-C₄-Alkenyl, Methoxymethyl, Ethoxymethyl, Ethylthiomethyl, Cyclopropyl, Cyclopentyl, Cyclohexyl oder
für gegebenenfalls einfach durch Fluor, Chlor, Brom, Methyl, Methoxy, Trifluormethyl, Trifluormethoxy, Cyano oder Nitro substituiertes Phenyl,
für jeweils gegebenenfalls durch Chlor oder Methyl substituiertes Pyridyl oder Thienyl steht,
- R²: ganz besonders bevorzugt für C₁-C₈-Alkyl, C₂-C₄-Alkenyl, Methoxyethyl, Ethoxyethyl, Phenyl oder Benzyl steht,
- R⁶ und R⁷: unabhängig voneinander ganz besonders bevorzugt für Methyl, Ethyl oder zusammen für einen C₅-Alkylenrest stehen, in welchem die C₃-Methylengruppe durch Sauerstoff ersetzt ist.

Insbesondere bevorzugt sind Verbindungen der Formel (I-1) Spirodiclofen und (I-2) Spiromesifen:

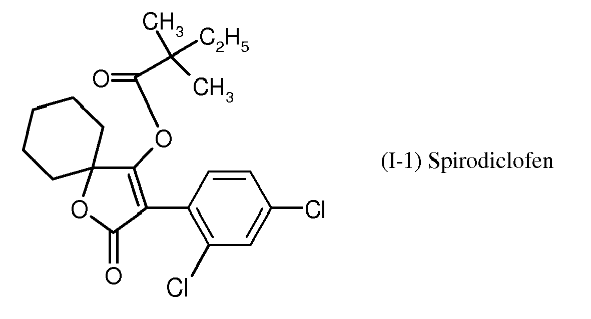

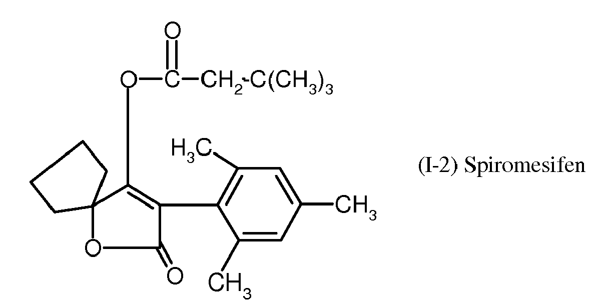

Die Verbindungen der Formel (I) können auch in Abhängigkeit von der Art der Substitution als optische Isomere oder Isomerengemische in unterschiedlicher Zusammensetzung vorliegen.

Die Verbindungen der Formel (I) sind - wie oben bereits erwähnt - dem Fachmann bekannt; ebenso wie deren Herstellung (siehe die eingangs bereits zitierten Dokumente).

Bevorzugt sind Mischungen aus zwei oder mehr, vorzugsweise zwei oder drei, besonders bevorzugt zwei, der insektizid wirksamen Verbindungen.

Gemäß dem erfindungsgemäß vorgeschlagenen Verfahren werden transgene Pflanzen, insbesondere Nutzpflanzen mit TSD Derivaten behandelt, um die landwirtschaftliche Produktivität zu steigern. Bei transgenen Pflanzen im Sinne der Erfindung handelt es sich um Pflanzen, die mindestens ein Gen oder Genfragment codieren, das sie nicht durch Befruchtung übernommen haben. Dieses Gen oder Genfragment kann von einer anderen Pflanze derselben Spezies, von Pflanzen unterschiedlicher Spezies, aber auch von Organismen aus dem Reich der Tiere oder Mikroorganismen (einschließlich Viren) stammen oder abgeleitet sein ("Fremdgen") und/oder ggf. bereits gegenüber der natürlich vorkommenden Sequenz Mutationen aufweisen. Auch die Verwendung synthetischer Gene ist erfindungsgemäß möglich und wird hier ebenso unter den Terminus "Fremdgen" subsumiert. Es ist auch möglich, dass eine transgene Pflanze zwei oder mehr Fremdgene unterschiedlicher Herkunft codiert.

Das "Fremdgen" im Sinne der Erfindung ist des weiteren **dadurch gekennzeichnet, dass** es eine Nukleinsäuresequenz umfasst, die in der transgenen Pflanze eine bestimmte biologische oder chemische Funktion bzw. Aktivität ausübt. In der Regel codieren diese Gene Biokatalysatoren, wie z.B. Enzyme oder Ribozyme, oder aber umfassen regulatorische Sequenzen, wie beispielsweise Promotoren oder Terminatoren zur Beeinflussung der Expression endogener Proteine. Dazu können sie aber auch regulatorische Proteine codieren wie beispielsweise Repressoren oder Induktoren. Das Fremdgen kann des weiteren ebenso der gezielten Lokalisation eines Genprodukts der transgenen Pflanze dienen und dazu beispielsweise eine Signalsequenz codieren. Auch Inhibitoren, wie beispielsweise antisense-RNA können durch das Fremdgen codiert werden.

Vielfältige Verfahren zur Herstellung transgener Pflanzen sowie Verfahren zur gezielten Mutagenese, zur Gentransformation und Klonierung sind dem Fachmann ohne weiteres bekannt, so beispielsweise aus: Willmitzer, 1993, Transgenic plants, In: Biotechnology, A Multivolume Comprehensive Treatise, Rehm et al. (eds.), Vol.2, 627-659, VCH Weinheim, Germany; McCormick et al., 1986, Plant Cell Reports 5 : 81-84; EP-A 0221044; EP-A 0131624, oder Sambrook et al., 1989, "Molecular Cloning: A Laboratory Manual", 3rd Ed., Cold Spring Harbor Laboratory Press, Cold Spring Harbor, NY; Winnacker, 1996, "Gene und Klone", 2. Aufl., VCH Weinheim oder Christou, 1996, Trends in Plant Science 1 : 423-431. Beispiele für Transit- oder Signalpeptide oder zeit- oder ortspezifische Promotoren sind z.B. in Braun et al., 1992, EMBO J. 11 : 3219-3227; Wolter et al., 1988, Proc. Natl. Acad. Sci. USA 85 : 846-850; Sonnewald et al., 1991, Plant J. 1 : 95-106 offenbart.

Ein Beispiel für eine komplexe genetische Manipulation einer Nutzpflanze ist die so genannte GURT-Technologie ("Genetic Use Restriction Technologies"), die der technischen Kontrolle der Vermehrung der jeweiligen transgenen Pflanzensorte dient. Dazu werden in der Regel zwei oder drei Fremdgene in die Nutzpflanze einkloniert, die in einem komplexen Wechselspiel nach der Gabe eines externen Stimulus eine Kaskade auslösen, die zum Absterben des sich anderenfalls entwickelnden Embryos führt. Der externe Stimulus (beispielsweise ein Wirkstoff oder ein anderer chemischer oder abiotischer Reiz) kann dazu beispielsweise mit einem Repressor interagieren, der damit nicht mehr die Expression einer Rekombinase unterdrückt, so dass die Rekombinase einen Inhibitor spalten kann und damit die Expression eines Toxins erlaubt, das das Absterben des Embryos bewirkt. Beispiele für diese Art der transgenen Pflanzen sind in US 5,723,765 oder US 5,808,034 offenbart.

Dem Fachmann sind demnach Verfahren zur Generierung transgener Pflanzen bekannt, die aufgrund der Integration regulatorischer Fremdgene und der damit ggf. vermittelten Überexpression, Suppression oder Inhibierung endogener Gene oder Gensequenzen oder der Existenz oder Expression von Fremdgenen oder deren Fragmente veränderte Eigenschaften aufweisen.

Wie bereits oben ausgeführt, ermöglicht das erfindungsgemäße Verfahren eine Verbesserung der Ausnutzung des Produktionspotentials transgener Pflanzen. Dies kann einerseits ggf. darauf zurückzuführen sein, dass die Aufwandmenge des erfindungsgemäß einsetzbaren Wirkstoffs reduziert werden kann; beispielsweise durch eine Verminderung der eingesetzten Dosis oder aber durch eine Reduktion der Anzahl der Applikationen. Andererseits kann ggf. der Ertrag der Nutzpflanzen quantitativ und/oder qualitativ gesteigert werden. Dies gilt vor allem bei einer transgen erzeugten Resistenz gegen biotischen oder abiotischen Streß. Werden beispielsweise insektizide TSD eingesetzt, kann die Dosierung des Insektizids u.U. auf eine subletale Dosis begrenzt werden, ohne damit die gewünschte Wirkung des Wirkstoffs auf die Schädlinge signifikant abzuschwächen.

Diese synergistischen Wirkungen können je nach Pflanzenarten bzw. Pflanzensorten, deren Standort und Wachstumsbedingungen (Böden, Klima, Vegetationsperiode, Ernährung) variieren und können vielfältig sein. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Diese Vorteile sind auf eine erfindungsgemäß erreichte synergistische Wirkung zwischen dem einsetzbaren TSD und dem jeweiligen Wirkprinzip der genetischen Veränderung der transgenen Pflanze zurückzuführen. Mit dieser durch den Synergismus bedingten Reduzierung der Produktionsmittel bei gleichzeitiger Ertrags- oder Qualitätserhöhung sind erhebliche ökonomische und ökologische Vorteile verbunden.

Eine Liste mit dem Fachmann bekannten Beispielen transgener Pflanzen unter Nennung der jeweils betroffenen Struktur in der Pflanze bzw. dem durch die genetische Veränderung exprimierten Protein in der Pflanze ist in **Tabelle 1** zusammengestellt. Darin ist der betroffenen Struktur bzw. dem exprimierten Prinzip jeweils eine bestimmte Merkmalsausprägung im Sinne einer Toleranz gegenüber einem bestimmten Streßfaktor zugeordnet. Eine ähnliche Liste (**Tabelle 3**) stellt - in etwas geänderter Anordnung - ebenso Beispiele von Wirkprinzipien, damit induzierten Toleranzen und möglichen Nutzpflanzen zusammen. Weitere Beispiele von transgenen Pflanzen, die für die erfindungsgemäße Behandlung geeignet sind, sind in den **Tabellen 4** sowie **5** und **6** zusammengestellt.

In einer vorteilhaften Ausführungsform werden die TSD zur Behandlung transgener Pflanzen enthaltend mindestens ein Gen oder Genfragment zur Codierung eines Bt-Toxins eingesetzt. Bei einem Bt-Toxin handelt es sich um ein ursprünglich aus dem Bodenbakterium *Bacillus thuringiensis* stammendes oder abgeleitetes Protein, das entweder der Gruppe der *crystal toxins (Cry)* oder der *cytolytic toxins (Cyt)* zugehörig ist. Sie werden in dem Bakterium ursprünglich als Protoxine gebildet und werden erst im alkalischen Milieu - beispielsweise im Verdauungstrakt bestimmter Fraßinsekten - zu ihrer aktiven Form metabolisiert. Dort bindet das dann aktive Toxin an bestimmte Kohlenwasserstoffstrukturen an Zelloberflächen und verursacht eine Porenbildung, die das osmotische Potential der Zelle zerstören und damit Zelllysis bewirken kann. Der Tod der Insekten ist die Folge. Bt-Toxine sind vor allem wirksam gegen bestimmte Schädlingsarten aus den Ordnungen der Lipidoptera (Schmetterlinge), Homoptera (Gleichflügler), Diptera (Zweiflügler) und Coleoptera (Käfer) in all ihren Entwicklungsstadien; also von der Eilarve über ihre juvenilen bis hin zu ihren adulten Formen.

Es ist seit langem bekannt, Gensequenzen codierend Bt-Toxine, Teile davon oder aber von Bt-Toxin abgeleitete Proteine oder Peptide mit Hilfe gentechnologischer Verfahren in landwirtschaftliche Nutzpflanzen einzuklonieren und somit transgene Pflanzen mit endogenen Resistenzen gegen Bt-Toxin empfindlichen Schädlinge zu erzeugen. Die mindestens ein Bt-Toxin oder daraus abgeleitete Proteine codierenden transgenen Pflanzen werden im Sinne der Erfindung als "Bt-Pflanzen" definiert.

Die "erste Generation" solcher Bt-Pflanzen enthielt in der Regel nur die Gene, die die Bildung eines bestimmten Toxins ermöglichten und somit nur gegen eine Gruppe von Schaderregern resistent machten. Beispiele für eine kommerziell erhältliche Mais-Sorte mit dem Gen zur Bildung des Cry1Ab Toxins ist "YieldGard®" von Monsanto, die gegen den Maiszünsler resistent ist. Die Resistenz gegen andere Schaderreger aus der Familie der Lepidopteren wird dagegen in der Bt-Baumwoll-Sorte (Bollgard®) durch Einklonieren der Gene zur Bildung des Cry1Ac Toxins erzeugt. Wiederum andere transgene Kulturpflanzen exprimieren Gene zur Bildung von Bt-Toxinen mit Wirkung gegen Schaderreger aus der Ordnung der Coleopteren. Als Beispiele dafür sei die Bt-Kartoffel-Sorte "NewLeaf®" (Monsanto) genannt, die das Cry3A Toxin bilden kann und somit gegen den Kartoffelkäfer ("Colorado Potatoe Beetle") resistent ist, bzw. die transgene Mais-Sorte "YieldGard®" (Monsanto), die das Cry 3Bb1 Toxin bilden und somit gegen verschiedene Arten des Maiswurzelbohrers geschützt ist.

In einer "zweiten Generation" wurden die oben bereits beschriebenen mehrfach-transgenen Pflanzen generiert, die mindestens zwei Fremdgene enthalten oder exprimieren.

Erfindungsgemäß bevorzugt sind transgene Pflanzen mit Bt-Toxinen aus der Gruppe der *Cry-*Familie (siehe z.B. Crickmore et al., 1998, Microbiol. Mol. Biol. Rev. 62 : 807-812), die insbesondere wirksam sind gegen Lepidopteren, Coleopteren oder Dipteren. Beispiele für Gene codierend die Proteine sind:
cry1Aa1, cry1Aa2, cry1Aa3, cry1Aa4, cry1Aa5, cry1Aa6, cry1Aa7, cry1Aa8, cry1Aa9, cry1Aa10, cry1Aa11 cry1Ab1, cry1Ab2, cry1Ab3, cry1Ab4, cry1Ab5, cry1Ab6, cry1Ab7, cry1Ab8, cry1Ab9, cry1Ab10, cry1Ab11, cry1Ab12, cry1Ab13, cry1Ab14, cry1Ac1, cry1Ac2, cry1Ac3, cry1Ac4, cry1Ac5, cry1Ac6, cry1Ac7, cry1Ac8, cry1Ac9, cry1Ac10, cry1Ac11, cry1Ac12, cry1Ac13, cry1Ad1, cry1Ad2, cry1Ae1, cry1Af1, cry1Ag1, cry1Ba1, cry1Ba2, cry1Bb1, cry1Bc1, cry1Bd1, cry1Be1, cry1Ca1, cry1Ca2, cry1Ca3, cry1Ca4, cry1Ca5, cry1Ca6, cry1Ca7, cry1Cb1, cry1Cb2, cry1Da1, cry1Da2, cry1Db1, cry1Ea1, cry1Ea2, cry1Ea3, cry1Ea4, cry1Ea5, cry1Ea6, cry1Eb1, cry1Fa1, cry1Fa2, cry1Fb1, cry1Fb2, cry1Fb3, cry1Fb4, cry1Ga1, cry1Ga2, cry1Gb1, cry1Gb2, cry1Ha1, cry1Hb1, cry1Ia1, cry1Ia2, cry1Ia3, cry1Ia4, cry1Ia5, cry1Ia6, cry1Ib1, cry1Ic1, cry1Id1, cry1Ie1, cry1I-like, cry1Ja1, cry1Jb1, cry1Jc1, cry1Ka1, cry1-like, cry2Aa1, cry2Aa2, cry2Aa3, cry2Aa4, cry2Aa5, cry2Aa6, cry2Aa7, cry2Aa8, cry2Aa9, cry2Ab1, cry2Ab2, cry2Ab3, cry2Ac1, cry2Ac2, cry2Ad1, cry3Aa1, cry3Aa2, cry3Aa3, cry3Aa4, cry3Aa5, cry3Aa6, cry3Aa7, cry3Ba1, cry3Ba2, cry3Bb1, cry3Bb2, cry3Bb3, cry3Ca1, cry4Aa1, cry4Aa2, cry4Ba1, cry4Ba2, cry4Ba3, cry4Ba4, cry5Aa1, cry5Ab1, cry5Ac1, cry5Ba1, cry6Aa1, cry6Ba1, cry7Aa1, cry7Ab1, cry7Ab2, cry8Aa1, cry8Ba1, cry8Ca1, cry9Aa1, cry9Aa2, cry9Ba1, cry9Ca1, cry9Da1, cry9Da2, cry9Ea1, cry9 like, cry10Aa1, cry10Aa2, cry11Aa1, cry11Aa2, cry11Ba1, cry11Bb1, cry12Aa1, cry13Aa1, cry14Aa1, cry15Aa1, cry16Aa1, cry17Aa1, cry18Aa1, cry18Ba1, cry18Ca1, cry19Aa1, cry19Ba1, cry20Aa1, cry21Aa1, cry21Aa2, cry22Aa1, cry23Aa1, cry24Aa1, cry25Aa1, cry26Aa1, cry27Aa1, cry28Aa1, cry28Aa2, cry29Aa1, cry30Aa1, cry31Aa1, cyt1Aa1, cyt1Aa2, cyt1Aa3, cyt1Aa4, cyt1Ab1, cyt1Ba1, cyt2Aa1, cyt2Ba1, cyt2Ba2, cyt2Ba3, cyt2Ba4, cyt2Ba5, cyt2Ba6, cyt2Ba7, cyt2Ba8, cyt2Bb1.

Besonders bevorzugt sind die Gene oder Genabschnitte der Subfamilien cry1, cry2, cry3, cry5 und cry9, insbesondere bevorzugt sind cry1Ab, cry1Ac, cry3A, cry3B und cry9C.

Weiterhin bevorzugt ist es, Pflanzen einzusetzen, die neben den Genen für ein oder mehrere Bt-Toxine ggf. auch Gene zur Expression beispielsweise eines Protease- bzw. Peptidase-Inhibitors (wie in WO-A 95/35031), von Herbizidresistenzen (z.B. gegen Glufosinate oder Glyphosate durch Expression des pat- oder bar-Gens) oder zur Ausbildung von Nematoden-, Pilz- oder Virusresistenzen (z.B. durch Expression einer Glucanase, Chitinase) enthalten oder exprimieren. Sie können aber auch in ihren metabolischen Eigenschaften genetisch modifiziert sein, so daß eine qualitative und/oder quantitative Änderung von Inhaltsstoffen (z.B. durch Modifikationen des Energie-, Kohlenhydrat-, Fettsäure- oder Stickstoffwechsels oder diese beeinflussende Metabolitflüsse) zeigen (siehe oben).

Eine Liste mit Beispielen von Wirkprinzipien, die durch eine genetische Modifikation in eine Nutzpflanze eingebracht werden können, und die sich für die erfindungsgemäße Behandlung allein oder in Kombination eignen, ist in **Tabelle 2** zusammengestellt. Diese Tabelle enthält unter der Angabe "AP" (aktives Prinzip) das jeweils betroffene Wirkprinzip und dem zugeordnet den damit zu kontrollierenden Schädling.

In einer besonders bevorzugten Variante wird das erfindungsgemäße Verfahren zur Behandlung transgener Gemüse-, Mais-, Soja-, Baumwoll-, Tabak-, Reis-, Kartoffel und Zuckerrübensorten eingesetzt. Dabei handelt es sich vorzugsweise um Bt-Pflanzen.

Bei den Gemüsepflanzen bzw. -sorten handelt es sich beispielsweise um folgende Nutzpflanzen:
○ Kartoffeln: vorzugsweise Stärkekartoffeln, Süßkartoffeln und Speisekartoffeln;
○ Wurzelgemüse: vorzugsweise Möhren (Karotten), Kohlrüben (Speiserüben, Stoppelrüben, Mairüben, Herbstrüben, Teltower Rübchen), Schwarzwurzeln, Topinambur, Wurzelpetersilie, Pastinake, Rettich und Meerrettich;
○ Knollengemüse: vorzugsweise Kohlrabi, Rote Bete (Rote Rübe), Sellerie (Knollensellerie), Radies und Radieschen;
○ Zwiebelgemüse: vorzugsweise Porree, Lauch und Zwiebeln (Steck- und Samenzwiebel);
○ Kohlgemüse: vorzugsweise Kopfkohl (Weißkohl, Rotkohl, Blattkohl, Wirsingkohl), Blumenkohl, Sprossenkohl, Brokkoli, Grünkohl, Markstammkohl, Meerkohl und Rosenkohl;
○ Fruchtgemüse: vorzugsweise Tomaten (Freiland- ,Strauch-, Fleisch-, Gewächshaus-, Cocktail-, Industrie- und Frischmarkt-Tomaten), Melonen, Eierfrucht, Auberginen, Paprika (Gemüse- und Gewürzpaprika, Spanischer Pfeffer), Peperoni, Kürbis, Zucchini und Gurken (Freiland-, Gewächshaus-, Schlangen- und Einlegegurken);
○ Gemüsehülsenfrüchte: vorzugsweise Buschbohnen (als Schwertbohnen, Perlbohnen, Flageoletbohnen, Wachsbohnen, Trockenkochbohnen mit grün- und gelbhülsigen Sorten), Stangenbohnen (als Schwertbohnen, Perlbohnen, Flageoletbohnen, Wachsbohnen mit grün-, blau- und gelbhülsigen Sorten), Dicke Bohnen (Ackerbohnen, Puffbohnen, Sorten mit weiß und schwarz gefleckten Blüten), Erbsen (Platterbsen, Kichererbsen, Markerbsen, Schalerbsen, Zuckererbsen, Palerbsen, Sorten mit hell- und dunkelgrünem Frischkorn) und Linsen;
○ Blatt- und Stielgemüse: vorzugsweise Chinakohl, Kopfsalat, Pflücksalat, Feldsalat, Eisbergsalat, Romanasalat, Eichblattsalat, Endivien, Radicchio, Lollo rosso-Salat, Ruccola-Salat, Chicoree, Spinat, Mangold (Blatt- und Stielmangold) und Petersilie;
○ Sonstige Gemüse: vorzugsweise Spargel, Rhabarber, Schnittlauch, Artischocken, Minzen, Sonnenblumen, Knollenfenchel, Dill, Gartenkresse, Senf, Mohn, Erdnuß, Sesam und Salatzichorien.

Bt-Gemüse einschließlich beispielhafter Methoden zu ihrer Herstellung sind ausführlich beschrieben beispielsweise in Barton et al., 1987, Plant Physiol. 85 : 1103-1109 ; Vaeck et al., 1987, Nature 328 : 33-37 ; Fischhoff et al., 1987, Bio/Technology 5 : 807-813. Bt-Gemüsepflanzen sind darüber hinaus bereits bekannt als kommerziell erhältliche Varianten, beispielsweise die Kartoffelsorte NewLeaf^{®} (Monsanto). Ebenso beschreibt die US 6,072,105 die Herstellung von Bt-Gemüse.

Ebenso ist auch bereits Bt-Baumwolle dem Grunde nach bekannt, beispielsweise aus der US-A-5,322,938 oder aus Prietro-Samsonör et al., J. Ind. Microbiol. & Biotechn. 1997, 19, 202, und H. Agaisse und D. Lereclus, J. Bacteriol. 1996, 177, 6027. Auch Bt-Baumwolle ist bereits in verschiedenen Variationen kommerziell erhältlich, beispielsweise unter den Namen NuCOTN® (Deltapine (USA)). Im Rahmen der vorliegenden Erfindung ist die Bt-Baumwolle NuCOTN33® und NuCOTN33B® besonders bevorzugt.

Auch die Verwendung und Herstellung von Bt-Mais ist bereits lange bekannt, beispielsweise aus Ishida, Y., Saito, H., Ohta, S., Hiei, Y., Komari, T., and Kumashiro, T. (1996). High efficiency transformation of maize (Zea mayz L.) mediated by Agrobacterium tumefaciens. Nature Biotechnology 4: 745-750. Auch die EP-B-0485506 beschreibt die Herstellung von Bt-Maispflanzen. Bt-Mais ist weiterhin in verschiedenen Variationen kommerziell erhältlich, beispielsweise unter folgenden Namen (Firma/Firmen jeweils in Klammern): KnockOut® (Novartis Seeds), NaturGard® (Mycogen Seeds), Yieldgard® (Novartis Seeds, Monsanto, Cargill, Golden Harvest, Pioneer, DeKalb u. a.), Bt-Xtra® (DeKalb) und StarLink® (Aventis CropScience, Garst u. a.). Im Sinne der vorliegenden Erfindung sind vor allem die folgenden Maissorten besonders bevorzugt: KnockOut®, NaturGard®, Yieldgard®, Bt-Xtra® und StarLink®.

Auch für Sojabohne sind Roundup®Ready Sorten oder Sorten mit einer Resistenz gegen das Herbizid Liberty Link® erhältlich und erfindungsgemäß behandelbar. Bei Reis sind eine Vielzahl von Linien des so genannten "Golden Rice" erhältlich, die sich gleichermaßen dadurch auszeichnen, dass sie durch eine transgene Modifikation einen erhöhten Gehalt an Provitamin A aufweisen. Auch hierbei handelt es sch um Beispiele für Pflanzen, die nach dem erfindungsgemäßen Verfahren mit den geschilderten Vorteilen behandelt werden können.

Das erfindungsgemäße Verfahren eignet sich zur Bekämpfung einer Vielzahl von Schadorganismen, die insbesondere in Gemüse, Mais bzw. Baumwolle auftreten, insbesondere Insekten und Spinnentieren, ganz besonders bevorzugt Insekten und Spinnmilben. Zu den erwähnten Schädlingen gehören:
○ aus der Ordnung der Isopoda: zum Beispiel Armadillidium spp., Oniscus spp., Porcellio spp..
○ aus der Ordnung der Diplopoda: zum Beispiel Blaniulus spp..
○ aus der Ordnung der Chilopoda zum Beispiel Geophilus spp., Scutigera spp..
○ aus der Ordnung der Symphyla: zum Beispiel Scutigerella spp..
○ aus der Ordnung der Thysanura: zum Beispiel Lepisma spp..
○ aus der Ordnung der Collembola: zum Beispiel Onychiurus spp..
○ aus der Ordnung der Orthoptera: zum Beispiel Blattella spp., Periplaneta spp., Leucophaea spp., Acheta spp., Gryllotalpa spp., Locusta migratoria migratorioides, Melanoplus spp., Schistocerca spp..
○ aus der Ordnung der Dermaptera: zum Beispiel Forficula spp..
○ aus der Ordnung des Isoptera: zum Beispiel Reticulitermes spp., Reticulitermes spp., Coptotermes spp..
○ aus der Ordnung der Thysanoptera: zum Beispiel Frankliniella spp., Kakothrips spp., Hercinothrips spp., Scirtothrips spp., Taeniothrips spp., Thrips spp..
○ aus der Ordnung der Heteroptera: zum Beispiel Eurygaster spp., Stephanitis spp., Lygus spp., Aelia spp., Eurydema spp., Dysdercus spp., Piesma spp..
○ aus der Ordnung der Homoptera: zum Beispiel Aleurodes spp., Bemisia spp., Trialeurodes spp., Brevicoryne spp., Cryptomyzus spp., Aphis spp., Eriosoma spp., Hyalopterus spp., Phylloxera spp., Pemphigus spp., Macrosiphum spp., Myzus spp., Phorodon spp., Rhopalosiphum spp., Empoasca spp., Euscelis spp., Eulecanium spp., Saissetia spp., Aonidiella spp., Aspidiotus spp., Nephotettix spp., Laodelphax spp., Nilaparvata spp., Sogatella spp., Pseudococcus spp., Psylla spp., Aphrophora spp., Aeneolamia spp., Aphidina ssp.,
○ aus der Ordnung der Lepidoptera: zum Beispiel Pectinophora spp., Bupalus spp., Cheimatobia spp., Cnephasia spp., Hydraecia spp., Lithocolletis spp., Hyponomeuta spp., Plutella spp., Plutella xylostella, Malacosoma spp., Euproctis spp., Lymantria spp., Bucculatrix spp., Phytometra spp., Scrobipalpa spp., Phthorimaea spp., Gnorimoschema spp., Autographa spp., Evergestis spp., Lacanobia spp., Cydia spp., Pseudociaphila spp., Phyllocnistis spp., Agrotis spp., Euxoa spp., Feltia spp., Earias spp., Heliothis spp., Helicoverpa spp., Bombyx spp., Laphygma spp., Mamestra spp., Panolis spp., Prodenia spp., Spodoptera spp., Trichoplusia spp., Carpocapsa spp., Pieris spp., Chilo spp., Ostrinia spp., Pyrausta spp., Ephestia spp., Galleria spp., Cacoecia spp., Capua spp., Choristoneura spp., Clysia spp., Hofmannophila spp., Homona spp., Tineola spp., Tinea spp., Tortrix spp..
○ aus der Ordnung der Coleoptera: zum Beispiel Anobium spp., Rhizopertha spp., Bruchidius spp., Acanthoscelides spp., Hylotrupes spp., Aclypea spp., Agelastica spp., Leptinotarsa spp., Psylliodes spp., Chaetocnema spp., Cassida spp., Bothynoderes spp., Clivina spp., Ceutorhynchus spp., Phyllotreta spp., Apion spp., Sitona spp., Bruchus spp., Phaedon spp., Diabrotica spp., Psylloides spp., Epilachna spp., Atomaria spp., Oryzaephilus spp., Anthonomus spp., Sitophilus spp., Otiorhynchus spp., Cosmopolites spp., Ceuthorrynchus spp., Hypera spp., Dermestes spp., Trogoderma spp., Anthrenus spp., Attagenus spp., Lyctus spp., Meligethes spp., Ptinus spp., Niptus spp., Gibbium spp., Tribolium spp., Tenebrio spp., Agriotes spp., Conoderus spp., Melolontha spp., Amphimallon spp., Costelytra spp..
○ aus der Ordnung der Hymenoptera: zum Beispiel Diprion spp., Hoplocampa spp., Lasius spp., Monomorium spp., Vespa spp..
○ aus der Ordnung der Diptera: zum Beispiel Drosophila spp., Chrysomyxa spp., Hypoderma spp., Tannia spp., Bibio spp., Oscinella spp., Phorbia spp., Pegomyia spp., Ceratitis spp., Dacus spp., Tipula spp..
○ aus der Klasse der Arachnida: zum Beispiel Scorpio maurus, Latrodectus mactans.
○ aus der Ordnung der Acarina: zum Beispiel Acarus spp., Bryobia spp., Panonychus spp., Tetranychus spp., Eotetranychus spp., Oligonychus spp., Eutetranychus spp., Eriophyes spp., Phyllocoptruta spp., Tarsonemus spp., Rhipicephalus spp., Rhipicephalus spp., Ixodes spp., Amblyomma spp..
○ aus der Klasse der Helminthen: zum Beispiel Meloidogyne spp., Heterodera spp., Globodera spp., Radopholus spp., Pratylenchus spp., Tylenchulus spp., Tylenchorhynchus spp., Rotylenchus spp., Heliocotylenchus spp., Belonoaimus spp., Longidorus spp., Trichodorus spp., Xiphinema spp., Ditylenchus spp., Aphelenchoides spp., Anguina spp..
○ aus der Klasse der Gastropoda: zum Beispiel Deroceras spp., Arion spp., Lymnaea spp., Galba spp., Succinea spp..
○ aus der Ordnung der Thysanoptera,
○ aus der Ordnung der Hemiptera: zum Beispiel Spezies der Unterordnung Sternorrhyncha

Bevorzugt eignet sich das erfindungsgemäße Verfahren zur Bekämpfung von Agriotes spp., Melolontha spp., Aphis spp., Cnephasia spp., Ostrinia spp., Agrotis spp., Hydraecia spp., Tipula spp., Myzus spp., Bemisia spp., Trialeurodes spp., Oscinella spp., Tetranychus spp., Lygus spp., Leptinotarsa spp., Psylliodes spp., Phytometra spp., Deroceras spp., Psylla spp., Blaniulus spp., Onychiurus spp., Piesma spp., Atomaria spp., Aclypea spp., Chaetocnema spp., Cassida spp., Bothynoderes spp., Clivina spp., Scrobipalpa spp., Phthorimaea spp., Gnorimoschema spp., Mamestra spp., Autographa spp., Arion spp., Gryllotalpa spp., Eurydema spp., Meligethes spp., Ceutorhynchus spp., Phyllotreta spp., Plutella xylostella, Evergestis spp., Lacanobia spp., Pieris spp., Forficula spp., Hypera spp., Apion spp., Otiorhynchus spp., Sitona spp., Acanthoscelides spp., Kakothrips spp., Bruchus spp., Cydia spp., Pseudociaphila spp., Heliothis spp., Helicoverpa spp., Prodenia spp., Spodoptera spp., Chilo spp und Diabrotica spp., Aphindina ssp., Frankliniella spp., Kakothrips spp., Hercinothrips spp., Scirtothrips spp., Taeniothrips spp., Thrips spp., Scorpio maurus, Latrodectus mactans.

Die erfindungsgemäß einsetzbaren Wirkstoffe sind besonders geeignet zur Bekämpfung von Insekten aus der Unterordnung der Homoptera und Hemiptera sowie Spinnentiere aus der Unterordnung der Acarina.

Insbesondere ist das erfindungsgemäße Verfahren zur Behandlung von Bt-Gemüse, Bt-Mais, Bt-Baumwolle, Bt-Soja, Bt-Tabak sowie auch Bt-Reis, Bt-Zuckerrüben oder Bt-Kartoffeln geeignet zur Kontrolle von Blattläusen (Aphidina), Weißen Fliegen (Aleyrodina), Thrips (Thysanoptera), Spinnmilben (Acarina), Schild- oder Schmierläusen (Coccoidae bzw. Pseudococcoidae).

Die erfindungsgemäß einsetzbaren Wirkstoffe können in üblichen Formulierungen eingesetzt werden, wie Lösungen, Emulsionen, Spritzpulver, wasser- und ölbasierte Suspensionen, Pulver, Stäubemittel, Pasten, lösliche Pulver, lösliche Granulate, Streugranulate, Suspensions-Emulsions-Konzentrate, Wirkstoff-imprägnierte Naturstoffe, Wirkstoff-imprägnierte synthetische Stoffe, Düngemittel sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Die Herstellung der Formulierungen erfolgt entweder in geeigneten Anlagen oder auch vor oder während der Anwendung.

Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole, Alkyl- oder Alkylphenol-sulfonate und Dispergiermittel, z.B. ligninsulfonsaures Natrium, 2,2'-dinaphthylmethan-6,6'-disulfonsaures Natrium enthalten.

Stäubemittel erhält man durch Vermahlen des Wirkstoffes mit fein verteilten festen Stoffen, z.B. Talkum, natürlichen Tonen wie Kaolin, Bentonit, Pyrophillit oder Diatomeenerde. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Als Hilfsstoffe können solche Stoffe Verwendung finden, die geeignet sind, dem Mittel selbst oder und/oder davon abgeleitete Zubereitungen (z.B. Spritzbrühen, Saatgutbeizen) besondere Eigenschaften zu verleihen, wie bestimmte technische Eigenschaften und/oder auch besondere biologische Eigenschaften. Als typische Hilfsmittel kommen in Frage: Streckmittel, Lösemittel und Trägerstoffe.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (poly-)Ether, der einfachen und substituierten Amine, Amide, Lactame (wie N-Alkylpyrrolidone) und Lactone, der Sulfone und Sulfoxide (wie Dimethylsysulfoxid).

Im Falle der Benutzung von Wasser als Streckmittel können z.B. auch organische Lösemittel als Hilfslösungsmittel verwendet werden. Als flüssige Lösemittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylsulfoxid, sowie Wasser.

Als feste Trägerstoffe kommen beispielsweise in Frage:
z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Papier, Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage nicht-ionische und/oder ionische Stoffe, z.B. aus den Klassen der Alkohol-POE- und/oder POP-Ether, Säure- und/oder POP- POE-Ester, Alkyl-Aryl- und/oder POP- POE-Ether, Fett- und/oder POP- POE-Addukte, POE- und/oder POP-Polyol Derivate, POE- und/oder POP-Sorbitan- oder-Zucker-Addukte, Alky- oder Aryl-Sulfate, Sulfonate und Phosphate oder die entsprechenden PO-Ether-Addukte. Ferner geeignete Oligo- oder Polymere, z.B. ausgehend von vinylischen Monomeren, von Acrylsäure, aus EO und/oder PO allein oder in Verbindung mit z.B. (poly-) Alkoholen oder (poly-) Aminen. Ferner können Einsatz finden Lignin und seine Sulfonsäure-Derivate, einfache und modifizierte Cellulosen, aromatische und/oder aliphatische Sulfonsäuren sowie deren Addukte mit Formaldehyd.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Weitere Additive können Duftstoffe, mineralische oder vegetabile gegebenenfalls modifizierte Öle, Wachse und Nährstoffe (auch Spurennährstoffe), wie Salze von Eisen, Mangan, Bor, Kupfer, Kobalt, Molybdän und Zink sein.

Weiterhin enthalten sein können Stabilisatoren wie Kältestabilisatoren, Konservierungsmittel, Oxidationsschutzmittel, Lichtschutzmittel oder andere die chemische und / oder physikalische Stabilität verbessernde Mittel.

Diese einzelnen Formulierungstypen sind im Prinzip bekannt und beispielsweise beschrieben in: Winnacker-Küchler, 1986, "Chemische Technologie", Band 7, 4. Aufl., C. Hauser Verlag München; van Falkenberg, 1972-73, "Pesticides Formulations", 2nd Ed., Marcel Dekker N.Y.; Martens, 1979, "Spray Drying Handbook", 3rd Ed., G. Goodwin Ltd. London.

Der Fachmann kann aufgrund seiner allgemeinen Fachkenntnisse geeignete Formulierungshilfen auswählen (siehe dazu beispielsweise Watkins, "Handbook of Insecticide Dust Diluents and Carriers", 2nd Ed., Darland Books, Caldwell N.J.; v. Olphen, "Introduction to Clay Colloid Chemistry", 2nd Ed., J. Wiley & Sons, N.Y.; Marsden, "Solvents Guide", 2nd Ed., Interscience, N.Y. 1950; McCutcheon's, "Detergents and Emulsifiers Annual", MC Publ. Corp., Ridgewood, N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1967; Winnacker-Küchler, "Chemische Technologie", Band 7, 4. Aufl., C. Hanser Verlag München 1986.

Die Formulierungen enthalten im Allgemeinen zwischen 0,01 und 98 Gew.-% Wirkstoff, vorzugsweise zwischen 0,5 und 90 %. In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 5 bis 80 Gew.-% betragen. Staubförmige Formulierungen enthalten meistens 5 bis 20 Gew.-% an Wirkstoff, versprühbare Lösungen etwa 2 bis 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Mit den äußeren Bedingungen wie Temperatur, Feuchtigkeit u.a. kann auch die erforderliche Aufwandmenge variieren. Sie kann innerhalb weiter Grenzen schwanken, z.B. zwischen 0,1 g/ha und 5,0 kg/ha oder mehr Aktivsubstanz. Vorzugsweise liegt sie jedoch zwischen 0,1 g/ha und 1,0 kg/ha. Aufgrund der synergistischen Effekte zwischen Bt-Gemüse und Insektizid sind Aufwandmengen von 0,1 bis 500 g/ha, besonders bevorzugt.

Für Verbindungen der Formel (I) sind Aufwandmengen von 10 bis 500 g/ha bevorzugt, besonders bevorzugt sind 10 bis 200 g/ha.

Die erfindungsgemäßen Wirkstoffe können in ihren handelsüblichen Formulierungen sowie in den aus diesen Formulierungen bereiteten Anwendungsformen in Mischungen mit anderen Wirkstoffen, wie Insektiziden, Lockstoffen, Sterilantien, Akariziden, Nematiziden, Fungiziden, wachstumsregulierenden Stoffen oder Herbiziden vorliegen.

Auch eine Mischung mit anderen bekannten Wirkstoffen, wie Herbiziden, Düngemitteln, Wachstumsregulatoren, Safenern, Semiochemicals, oder auch mit Mitteln zur Verbesserung der Pflanzeneigenschaften ist möglich.

Der Wirkstoffgehalt der aus den handelsüblichen Formulierungen bereiteten Anwendungsformen kann von 0,00000001 bis zu 95 Gew.-%, vorzugsweise zwischen 0,00001 und 1 Gew.-% Wirkstoff liegen.

**Tabelle 1**

| | |
|---|---|
| Pflanze: Mais | |
| Betroffene Struktur bzw. Exprimiertes Prinzip | Merkmal der Pflanze / Toleranz gegenüber |
| Acetolactatsynthase (ALS) | Sulfonylharnstoffverbindungen, Imidazolinone |
| | Triazolpyrimidine, Pyrimidyloxybenzoate, |
| | Phthalide |
| Acetyl-CoA-Carboxylase (ACCase) | Aryloxyphenoxyalkancarbonsäure, |
| | Cyclohexandion |
| Hydroxyphenylpyruvat-Dioxygenase (HPPD) | Isooxazole wie Isoxaflutol oder Isoxachlortol, |
| | Trione wie Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP- Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, zyklisches Imid, |
| | Phenylpyrazol, Pyridinderivat, |
| | Phenopylat, Oxadiazol usw. |
| Cytochrom P450 z.B. P450 SU1 | Xenobiotika und Herbizide wie |
| | Sulfonylharnstoff |
| Dimboa-Biosynthese (Bx1-Gen) | Helminthosporium turcicum, |
| | Rhopalosiphum maydis, Diplodia |
| | maydis, Ostrinia nubilalis, lepidoptera sp. |
| CMIII (kleiner grundlegender Peptidbaustein | Pflanzenpathogene z.B. Fusarium, Alternaria, |
| aus dem Maiskorn) | Sclerotina |
| Com- SAFP (Zeamatin) | Pflanzenpathogene, z.B. Fusarium, |
| | Alternaria, Sclerotina, Rhizoctonia, |
| | Chaetomium, Phycomycen |
| Hm1-Gen | Cochliobulus |
| Chitinasen | Pflanzenpathogene |
| Glucanasen | Pflanzenpathogene |
| Hüllproteine | Viren wie das Maisverzwergungsvirus |
| | (MDMV) |
| Toxine von Bacillus thuringiensis, VIP 3, | Lepidoptera, Coleoptera, Diptera, |
| Bacillus-cereus-Toxin, Photorabdus und | Nematoden, z.B. Ostrinia nubilalis, |
| Toxine von Xenorhabdus | Heliothis zea, Heerwürmer z.B. |
| | Spodoptera frugiperda, Maiswurzelbohrer, |
| | Sesamia sp., Aprotis ipsilon, Asiatischer Mais-zünsler, Rüsselkäfer |
| 3- Hydroxysteroidoxidase | Lepidoptera, Coleoptera, Diptera, Nematoden, |
| | z.B. Ostrinia nubilalis, Heliothis zea, |
| | Heerwürmer z.B. Spodoptera frugiperda, |
| | Maiswurzelbohrer, Sesamia sp., Aprotis ipsilon, |
| | Asiatischer Maiszünsler, Rüsselkäfer |
| Peroxidase | Lepidoptera, Coleoptera, Diptera, Nematoden, |
| | z.B. Ostrinia nubilalis, Heliothis zea, |
| | Heerwürmer z.B. Spodoptera frugiperda, |
| | Maiswurzelbohrer, Sesamia sp., Aprotis ipsilon, |
| | Asiatischer Maiszünsler, Rüsselkäfer |
| Aminopeptidase-Inhibitoren z.B. Leucin | Lepidoptera, Coleoptera, Diptera, |
| Aminopeptidase-Inhibitoren (LAPI) | Nematoden, z.B. Ostrinia nubilalis, |
| | Heliothis zea, Heerwürmer z.B. Spodoptera |
| | frugiperda, Maiswurzelbohrer, Sesamia sp., |
| | Aprotis ipsilon, Asiatischer Maiszünsler, |
| | Rüsselkäfer |
| Limonensynthase | Maiswurzelbohrer |
| Lektin | Lepidoptera, Coleoptera, Diptera, Nematoden, |
| | z.B. Ostrinia nubilalis, Heliothis zea, |
| | Heerwürmer z.B. Spodoptera frugiperda, |
| | Maiswurzelbohrer, Sesamia sp., Aprotis ipsilon, |
| | Asiatischer Maiszünsler, Rüsselkäfer |
| Protease-Inhibitoren z.B. Cystatin, Patatin, | Rüsselkäfer, Maiswurzelbohrer |
| Virgiferin, CPTI | |
| Ribosomeninaktivierendes Protein | Lepidoptera, Coleoptera, Diptera, Nematoden, |
| | z.B. Ostrinia nubilalis, Heliothis zea, |
| | Heerwürmer z.B. Spodoptera frugiperda, |
| | Maiswurzelbohrer, Sesamia sp., Aprotis ipsilon, |
| | Asiatischer Mais zünsler, Rüsselkäfer |
| 5C9-Maispolypeptid | Lepidoptera, Coleoptera, Diptera, Nematoden, |
| | z.B. Ostrinia nubilalis, Heliothis zea, |
| | Heerwürmer z.B. Spodoptera frugiperda, |
| | Maiswurzelbohrer, Sesamia sp., Aprotis ipsilon, |
| | Asiatischer Mais zünsler, Rüsselkäfer |
| HMG-CoA-Reductase | Lepidoptera, Coleoptera, Diptera, Nematoden, |
| | z.B. Ostrinia nubilalis, Heliothis zea, |
| | Heerwürmer z.B. Spodoptera frugiperda, |
| | Maiswurzelbohrer, Sesamia sp., Aprotis ipsilon, |
| | Asiatischer Mais zünsler, Rüsselkäfer |
| Pflanze: Weizen | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone |
| | Triazolpyrimidine, Pyrimidyloxybenzoate, |
| | Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, zyklische Imide, Phenylpyrazole, |
| | Pyridinderivate, Phenopylat, Oxadiazole usw. |
| Cytochrom P450 z.B. P450 SU1 | Xenobiotika und Herbizide wie etwa |
| | Sulfonylharnstoffverbindungen |
| Pilzbekämpfendes Polypeptid AlyAFP | Pflanzenpathogene, z.B. Septoria und Fusarium |
| Glucoseoxidase | Pflanzenpathogene, z.B. Fusarium, Septoria |
| Pyrrolnitrinsynthese-Gene | Pflanzenpathogene, z.B. Fusarium, Septoria |
| Serin/Threonin-Kinasen | Pflanzenpathogene, z.B. Fusarium, Septoria |
| | und andere Krankheiten |
| Polypeptid mit der Wirkung, eine Über- | Pflanzenpathogene, z.B. Fusarium, Septoria und |
| empfindlichkeitsreaktion auszulösen | andere Krankheiten |
| Gene der systemischen erworbenen | Virale, bakterielle Pilz- und Nematoden- |
| Widerstandskraft (SAR) | Pathogene |
| Chitinasen | Pflanzenpathogene |
| Glucanasen | Pflanzenpathogene |
| Doppelstrang-Ribonuclease | Viren wie etwa BYDV und MSMV |
| Hüllproteine | Viren wie etwa BYDV und MSMV |
| Toxine von Bacillus thuringiensis, VIP 3, | Lepidoptera, Coleoptera, Diptera, |
| Bacillus-cereus-Toxine, Photorabdus und | Nematoden |
| Toxine von Xenorhabdus | |
| 3- Hydroxysteroidoxidase | Lepidoptera, Coleoptera, Diptera, |
| | Nematoden |
| Peroxidase | Lepidoptera, Coleoptera, Diptera, |
| | Nematoden |
| Aminopeptidase-Inhibitoren, z.B. Leucin | Lepidoptera, Coleoptera, Diptera, |
| Aminopeptidase-Inhibitor | Nematoden |
| Lektine | Lepidoptera, Coleoptera, Diptera, |
| | Nematoden, Blattläuse |
| Protease-Inhibitoren, z.B. Cystatin, Patatin, | Lepidoptera, Coleoptera, Diptera, |
| Virgiferin, CPTI | Nematoden, Blattläuse |
| Ribosomeninaktivierendes Protein | Lepidoptera, Coleoptera, Diptera, |
| | Nematoden, Blattläuse |
| HMG-CoA-Reductase | Lepidoptera, Coleoptera, Diptera, |
| | Nematoden, z.B. Ostrinia nubilalis, |
| | Heliothis zea, Heerwürmer z.B. Spodoptera |
| | frugiperda, Maiswurzelbohrer, Sesamia sp., |
| | Aprotis ipsilon, Asiatischer Maiszünsler, |
| | Rüsselkäfer |
| Pflanze: Gerste | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, zyklische Imide, |
| | Phenylpyrazole, Pyridinderivate, |
| | Phenopylat, Oxadiazole usw. |
| Cytochrom P450 z.B. P450 SU1 | Xenobiotika und Herbizide wie etwa |
| | Sulfonylharnstoffverbindungen |
| Pilzbekämpfendes Polypeptid AlyAFP | Pflanzenpathogene, z.B. Septoria und Fusarium |
| Glucoseoxidase | Pflanzenpathogene, z.B. Fusarium, Septoria |
| Pyrrolnitrinsynthese-Gene | Pflanzenpathogene, z.B. Fusarium, Septoria |
| Serin/Threonin-Kinasen | Pflanzenpathogene, z.B. Fusarium, Septoria und andere Krankheiten |
| Polypeptid mit der Wirkung, eine Überempfindlichkeitsreaktion auszulösen | Pflanzenpathogene, z.B. Fusarium, Septoria und andere Krankheiten |
| Gene der systemischen erworbenen | Virale, bakterielle Pilz- und Nematoden- |
| Widerstandskraft (SAR) | Pathogene |
| Chitinasen | Pflanzenpathogene |
| Glucanasen | Pflanzenpathogene |
| Doppelstrang-Ribonuclease | Viren wie etwa BYDV und MSMV |
| Hüllproteine | Viren wie etwa BYDV und MSMV |
| Toxine von Bacillus thuringiensis, VIP 3, | Lepidoptera, Coleoptera, Diptera, |
| Bacillus-cereus-Toxine, Photorabdus und | Nematoden |
| Toxine von Xenorhabdus | |
| 3- Hydroxysteroidoxidase | Lepidoptera, Coleoptera, Diptera, |
| | Nematoden |
| Peroxidase | Lepidoptera, Coleoptera, Diptera, |
| | Nematoden |
| Aminopeptidase-Inhibitoren, z.B. Leucin | Lepidoptera, Coleoptera, Diptera, |
| Aminopeptidase-Inhibitor | Nematoden |
| Lektine | Lepidoptera, Coleoptera, Diptera, |
| | Nematoden, Blattläuse |
| Protease-Inhibitoren, z.B. Cystatin, Patatin, | Lepidoptera, Coleoptera, Diptera, |
| Virgiferin, CPTI | Nematoden, Blattläuse |
| Ribosomeninaktivierendes Protein | Lepidoptera, Coleoptera, Diptera, |
| | Nematoden, Blattläuse |
| HMG-CoA-Reductase | Lepidoptera, Coleoptera, Diptera, |
| | Nematoden, Blattläuse |
| Pflanze: Reis | |
| Betroffene Struktur/ Exprimiertes Prinzip | Merkmal der Pflanze / Toleranz gegenüber |
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie |
| | Bromoxynil und Loxinyl |
| 5-Enolpyruvyl-3-phosphoshikimat | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, zyklische Imide, |
| | Phenylpyrazole, Pyridinderivate, |
| | Phenopylat, Oxadiazole usw. |
| Cytochrom P450 z.B. P450 SU1 | Xenobiotika und Herbizide wie etwa |
| | Sulfonylharnstoffverbindungen |
| Pilzbekämpfendes Polypeptid AlyAFP | Pflanzenpathogene |
| Glucoseoxidase | Pflanzenpathogene |
| Pyrrolnitrinsynthese-Gene | Pflanzenpathogene |
| Serin/Threonin-Kinasen | Pflanzenpathogene |
| Phenylalanin-Ammoniak-Lyase (PAL) | Pflanzenpathogene, z.B. bakterieller |
| | Blattmehltau und induzierbare Reisbräune |
| Phytoalexine | Pflanzenpathogene, z.B. bakterieller |
| | Blattmehltau und Reisbräune |
| B-1,3-Glucanase (Antisense) | Pflanzenpathogene, z.B. bakterieller |
| | Blattmehltau und Reisbräune |
| Rezeptorkinase | Pflanzenpathogene, z.B. bakterieller |
| | Blattmehltau und Reisbräune |
| Polypeptid mit der Wirkung, eine | Pflanzenpathogene |
| Überempfindlichkeitsreaktion auszulösen | |
| Gene der systemischen erworbenen | Virale, bakterielle Pilz- und Nematoden- |
| Widerstandskraft (SAR) | Pathogene |
| Chitinasen | Pflanzenpathogene, z.B. bakterieller |
| | Blattmehltau und Reisbräune |
| Glucanasen | Pflanzenpathogene |
| Doppelstrang-Ribonuclease | Viren wie etwa BYDV und MSMV |
| Hüllproteine | Viren wie etwa BYDV und MSMV |
| Toxine von Bacillus thuringiensis, VIP 3, | Lepidoptera, z.B. Stengelbohrer, Coleoptera, |
| Bacillus-cereus-Toxine, Photorabdus und | z.B. Rüsselkäfer wie Lissorhoptrus oryzophilus, |
| Toxine von Xenorhabdus | Diptera, Reiszikaden, z.B. braunrückige |
| | Reiszikade |
| 3- Hydroxysteroidoxidase | Lepidoptera, z.B. Stengelbohrer, Coleoptera, |
| | z.B. Rüsselkäfer wie Lissorhoptrus oryzophilus, |
| | Diptera, Reiszikaden, z.B. braunrückige |
| | Reiszikade |
| Peroxidase | Lepidoptera, z.B. Stengelbohrer, Coleoptera, |
| | z.B. Rüsselkäfer wie Lissorhoptrus oryzophilus, |
| | Diptera, Reiszikaden, z.B. braunrückige |
| | Reiszikade |
| Aminopeptidase-Inhibitoren, z.B. Leucin | Lepidoptera, z.B. Stengelbohrer, Coleoptera, |
| Aminopeptidase-Inhibitor | z.B. Rüsselkäfer wie Lissorhoptrus |
| | oryzophilus, Diptera, Reiszikaden, z.B. |
| | braunrückige Reiszikade |
| Lektine | Lepidoptera, z.B. Stengelbohrer, Coleoptera, |
| | z.B. Rüsselkäfer wie Lissorhoptrus |
| | oryzophilus, Diptera, Reiszikaden, z.B. |
| | braunrückige Reiszikade |
| Protease-Inhibitoren, | Lepidoptera, z.B. Stengelbohrer, Coleoptera, |
| | z.B. Rüsselkäfer wie Lissorhoptrus oryzophilus, |
| | Diptera, Reiszikaden z.B. braunrückige |
| | Reiszikade |
| Ribosomeninaktivierendes Protein | Lepidoptera, z.B. Stengelbohrer, Coleoptera, |
| | z.B. Rüsselkäfer wie Lissorhoptrus |
| | oryzophilus, Diptera, Reiszikaden, z.B. |
| | braunrückige Reiszikade |
| HMG-CoA-Reductase | Lepidoptera, z.B. Stengelbohrer, Coleoptera, |
| | z.B. Rüsselkäfer wie Lissorhoptrus |
| | oryzophilus, Diptera, Reiszikaden z.B. |
| | braunrückige Reiszikade |
| Pflanze: Sojabohne | |
| Betroffene Struktur/ Exprimiertes Prinzip | Merkmal der Pflanze / Toleranz gegenüber |
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, zyklische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Pilzbekämpfendes Polypeptid AlyAFP | Bakterielle und Pilz-Pathogene wie etwa |
| | Fusarium, Sklerotinia, Weißstängeligkeit |
| Oxalatoxidase | Bakterielle und Pilz-Pathogene wie etwa |
| | Fusarium, Sklerotinia, Weißstängeligkeit |
| Glucoseoxidase | Bakterielle und Pilz-Pathogene wie etwa |
| | Fusarium, Sklerotinia, Weißstängeligkeit |
| Pyrrolnitrinsynthese-Gene | Bakterielle und Pilz-Pathogene wie etwa |
| | Fusarium, Sklerotinia, Weißstängeligkeit |
| Serin/Threonin-Kinasen | Bakterielle und Pilz-Pathogene wie etwa |
| | Fusarium, Sklerotinia, Weißstängeligkeit |
| Phenylalanin-Ammoniak-Lyase (PAL) | Bakterielle und Pilz-Pathogene wie etwa |
| | Fusarium, Sklerotinia, Weißstängeligkeit |
| Phytoalexine | Pflanzenpathogene, z.B. bakterieller Blatt-mehltau und Reisbräune |
| B-1,3-glucanase (Antisense) | Pflanzenpathogene, z.B. bakterieller Blatt-mehltau und Reisbräune |
| Rezeptorkinase | Bakterielle und Pilz-Pathogene wie etwa Fusarium, Sklerotinia, Weißstängeligkeit |
| Polypeptid mit der Wirkung, eine Über- | Pflanzenpathogene |
| Empfindlichkeitsreaktion auszulösen | |
| Gene der systemischen erworbenen | Virale, bakterielle Pilz- und Nematoden- |
| Widerstandskraft (SAR) | Pathogene |
| Chitinasen | Bakterielle und Pilz-Pathogene wie etwa |
| | Fusarium, Sklerotinia, Weißstängeligkeit |
| Glucanasen | Bakterielle und Pilz-Pathogene wie etwa |
| | Fusarium, Sklerotinia, Weißstängeligkeit |
| Doppelstrang-Ribonuclease | Viren wie etwa BPMV und SbMV |
| Hüllproteine | Viren wie etwa BYDV und MSMV |
| Toxine von Bacillus thuringiensis, VIP 3, | Lepidoptera, Coleoptera, Blattläuse |
| Bacillus-cereus-Toxine, Photorabdus und | |
| Toxine von Xenorhabdus | |
| 3- Hydroxysteroidoxidase | Lepidoptera, Coleoptera, Blattläuse |
| Peroxidase | Lepidoptera, Coleoptera, Blattläuse |
| Aminopeptidase-Inhibitoren, z.B. Leucin | Lepidoptera, Coleoptera, Blattläuse |
| Aminopeptidase-Inhibitor | |
| Lektine | Lepidoptera, Coleoptera, Blattläuse |
| Protease-Inhibitoren, z.B. Virgiferin | Lepidoptera, Coleoptera, Blattläuse |
| Ribosomeninaktivierendes Protein | Lepidoptera, Coleoptera, Blattläuse |
| HMG-CoA-Reductase | Lepidoptera, Coleoptera, Blattläuse |
| Barnase | Nematoden, z.B. Wurzelknotennematoden und Zystennematoden |
| Schlüpfauslösefaktor für Zystennematoden | Zystennematoden |
| Prinzipien zur Verhinderung der Nahrungs-aufnahme | Nematoden, z.B. Wurzelknoten-Nematoden und Zystennematoden |
| Pflanze: Kartoffel | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosat-Oxidoreductase | Glyphosat oder Sulfosat |
| Protoporphyrinogenoxidase (PROTOX) | Diphenylether, zyklische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Schwarzfleckigkeit |
| (Antisense) | |
| Metallothionein | Bakterielle und Pilz-Pathogene wie etwa |
| | Phytophtora |
| Ribonuclease | Phytophtora, Verticillium, Rhizoctonia |
| Pilzbekämpfendes Polypeptid AlyAFP | Bakterielle und Pilz-Pathogene wie etwa |
| | Phytophtora |
| Oxalatoxidase | Bakterielle und Pilz-Pathogene wie etwa |
| | Phytophtora, Verticillium, Rhizoctonia |
| Glucoseoxidase | Bakterielle und Pilz-Pathogene wie etwa |
| | Phytophtora, Verticillium, Rhizoctonia |
| Pyrrolnitrinsynthese-Gene | Bakterielle und Pilz-Pathogene wie etwa |
| | Phytophtora, Verticillium, Rhizoctonia |
| Serin/Threonin-Kinasen | Bakterielle und Pilz-Pathogene wie etwa |
| | Phytophtora, Verticillium, Rhizoctonia |
| Cecropin B | Bakterien wie etwa Corynebacterium |
| | sepedonicum, Erwinia carotovora |
| Phenylalanin-Ammoniak-Lyase (PAL) | Bakterielle und Pilz-Pathogene wie etwa |
| | Phytophtora, Verticillium, Rhizoctonia |
| Phytoalexine | Bakterielle und Pilz-Pathogene wie etwa |
| | Phytophtora, Verticillium, Rhizoctonia |
| B-1,3-glucanase (Antisense) | Bakterielle und Pilz-Pathogene wie etwa |
| | Phytophtora, Verticillium, Rhizoctonia |
| Rezeptorkinase | Bakterielle und Pilz-Pathogene wie etwa |
| | Phytophtora, Verticillium, Rhizoctonia |
| Polypeptid mit der Wirkung, eine Über- | Bakterielle und Pilz-Pathogene wie etwa |
| empfindlichkeitsreaktion auszulösen | Phytophtora, Verticillium, Rhizoctonia |
| Gene der systemischen erworbenen Widerstandskraft (SAR) | Virale, bakterielle Pilz- und Nematoden-Pathogene |
| Chitinasen | Bakterielle und Pilz-Pathogene wie etwa |
| | Phytophtora, Verticillium, Rhizoctonia |
| Barnase | Bakterielle und Pilz- Pathogene wie etwa |
| | Phytophtora, Verticillium, Rhizoctonia |
| Gen 49 zur Steuerung des Widerstandes gegen | Bakterielle und Pilz-Pathogene wie etwa |
| Krankheiten | Phytophtora, Verticillium, Rhizoctonia |
| Trans-Aldolase (Antisense) | Schwarzfleckigkeit |
| Glucanasen | Bakterielle und Pilz-Pathogene wie etwa |
| | Phytophtora, Verticillium, Rhizoctonia |
| Doppelstrang-Ribonuclease | Viren wie etwa PLRV, PVY und TRV |
| Hüllproteine | Viren wie etwa PLRV, PVY und TRV |
| 17kDa oder 60 kDa Protein | Viren wie etwa PLRV, PVY und TRV |
| Einschlussproteine des Kerns z.B. a oder b | Viren wie etwa PLRV, PVY und TRV |
| Pseudoubiquitin | Viren wie etwa PLRV, PVY und TRV |
| Replicase | Viren wie etwa PLRV, PVY und TRV |
| Toxine von Bacillus thuringiensis, VIP 3, | Coleoptera, z.B. Kartoffelkäfer, Blattläuse |
| Bacillus-cereus-Toxine, Photorabdus und | |
| Toxine von Xenorhabdus | |
| 3- Hydroxysteroidoxidase | Coleoptera, z.B. Kartoffelkäfer, Blattläuse |
| Peroxidase | Coleoptera, z.B. Kartoffelkäfer, Blattläuse |
| Aminopeptidase-Inhibitoren, z.B. Leucin | Coleoptera, z.B. Kartoffelkäfer, Blattläuse |
| Aminopeptidase-Inhibitor | |
| Stilbensynthase | Coleoptera, z.B. Kartoffelkäfer, Blattläuse |
| Lektine | Coleoptera, z.B. Kartoffelkäfer, Blattläuse |
| Protease-Inhibitoren, z.B. Cystatin, Patatin | Coleoptera, z.B. Kartoffelkäfer, Blattläuse |
| Ribosomeninaktivierendes Protein | Coleoptera, z.B. Kartoffelkäfer, Blattläuse |
| HMG-CoA-Reductase | Coleoptera, z.B. Kartoffelkäfer, Blattläuse |
| Schlüpfauslösefaktor für Zystennematoden | Zystennematoden |
| Barnase | Nematoden, z.B. Wurzelknoten-Nematoden und |
| | Zystennematoden |
| Prinzipien zur Verhinderung der Nahrungs- | Nematoden, z.B. Wurzelknoten-Nematoden und |
| aufnahme | Zystennematoden |
| Pflanze: Tomate | |
| Betroffene Struktur/ Exprimiertes Prinzip | Merkmal der Pflanze / Toleranz gegenüber |
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, zyklische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Schwarzfleckigkeit |
| (Antisense) | |
| Metallothionein | Bakterielle und Pilz-Pathogene wie etwa |
| | Phytophtora |
| Ribonuclease | Phytophtora, Verticillium, Rhizoctonia |
| Pilzbekämpfendes Polypeptid AlyAFP | Bakterielle und Pilz-Pathogene wie etwa |
| | die bakterielle Fleckenkrankheit, Fusarium, Weichfäule, echter Mehltau, Krautfäule, Samtfleckenkrankheit etc. |
| Oxalatoxidase | Bakterielle und Pilz-Pathogene wie etwa die bakterielle Fleckenkrankheit, Fusarium, Weichfäule, echter Mehltau, Krautfäule, Samtfleckenkrankheit etc. |
| Glucoseoxidase | Bakterielle und Pilz-Pathogene wie etwa die bakterielle Fleckenkrankheit, Fusarium, Weichfäule, echter Mehltau, Krautfäule, Samtfleckenkrankheit etc. |
| Pyrrolnitrinsynthese-Gene | Bakterielle und Pilz-Pathogene wie etwa die bakterielle Fleckenkrankheit, Fusarium, Weichfäule, echter Mehltau, Krautfäule, Samtfleckenkrankheit etc. |
| Serin/Threonin-Kinasen | Bakterielle und Pilz-Pathogene wie etwa die bakterielle Fleckenkrankheit, Fusarium, Weichfäule, echter Mehltau, Krautfäule, Samtfleckenkrankheit etc. |
| Cecropin B | Bakterielle und Pilz-Pathogene wie etwa die bakterielle Fleckenkrankheit, Fusarium, Weichfäule, echter Mehltau, Krautfäule, Samtfleckenkrankheit etc. |
| Phenylalanin-Ammoniak-Lyase (PAL) | Bakterielle und Pilz-Pathogene wie etwa die bakterielle Fleckenkrankheit, Fusarium, Weichfäule, echter Mehltau, Krautfäule, Samtfleckenkrankheit etc. |
| Cf-Gene, z.B. Cf 9 Cf5 Cf4 Cf2 | Samtfleckenkrankheit |
| Osmotin | Dürrfleckenkrankheit |
| Alpha Hordothionin | Bakterien |
| Systemin | Bakterielle und Pilz-Pathogene wie etwa die bakterielle Fleckenkrankheit, Fusarium, Weichfäule, echter Mehltau, Krautfäule, Samtfleckenkrankheit etc. |
| Polygalacturonase-Inhibitoren | Bakterielle und Pilz-Pathogene wie etwa die bakterielle Fleckenkrankheit, Fusarium, Weichfäule, echter Mehltau, Krautfäule, Samtfleckenkrankheit etc. |
| Prf-Steuerungsgen | Bakterielle und Pilz-Pathogene wie etwa die bakterielle Fleckenkrankheit, Fusarium, Weichfäule, echter Mehltau, Krautfäule, Samtfleckenkrankheit etc. |
| 12 Fusariumresistenz-Stelle | Fusarium |
| Phytoalexine | Bakterielle und Pilz-Pathogene wie etwa die bakterielle Fleckenkrankheit, Fusarium, Weichfäule, echter Mehltau, Krautfäule, Samtfleckenkrankheit etc. |
| B-1,3-glucanase (Antisense) | Bakterielle und Pilz-Pathogene wie etwa die bakterielle Fleckenkrankheit, Fusarium, Weichfäule, echter Mehltau, Krautfäule, Samtfleckenkrankheit etc. |
| Rezeptorkinase | Bakterielle und Pilz-Pathogene wie etwa die bakterielle Fleckenkrankheit, Fusarium, Weichfäule, echter Mehltau, Krautfäule, |
| | Samtfleckenkrankheit etc. |
| Polypeptid mit der Wirkung, eine Über-empfindlichkeitsreaktion auszulösen | Bakterielle und Pilz-Pathogene wie etwa die bakterielle Fleckenkrankheit, Fusarium, Weichfäule, echter Mehltau, Krautfäule, Samtfleckenkrankheit etc. |
| Gene der systemischen erworbenen | Virale, bakterielle Pilz- und Nematoden- |
| Widerstandskraft (SAR) | Pathogene |
| Chitinasen | Bakterielle und Pilz-Pathogene wie etwa die bakterielle Fleckenkrankheit, Fusarium, Weichfäule, echter Mehltau, Krautfäule, Samtfleckenkrankheit etc. |
| Barnase | Bakterielle und Pilz-Pathogene wie etwa die bakterielle Fleckenkrankheit, Fusarium, Weichfäule, echter Mehltau, Krautfäule, Samtfleckenkrankheit etc. |
| Glucanasen | Bakterielle und Pilz-Pathogene wie etwa die bakterielle Fleckenkrankheit, Fusarium, Weichfäule, echter Mehltau, Krautfäule, Samtfleckenkrankheit etc. |
| Doppelstrang-Ribonuclease | Viren wie etwa PLRV, PVY und ToMoV |
| Hüllproteine | Viren wie etwa PLRV, PVY und ToMoV |
| 17kDa oder 60 kDa Protein | Viren wie etwa PLRV, PVY und ToMoV |
| Einschlussproteine des Kerns z.B. a oder b oder | Viren wie etwa PLRV, PVY und ToMoV |
| Nucleoprotein | TRV |
| Pseudoubiquitin | Viren wie etwa PLRV, PVY und ToMoV |
| Replicase | Viren wie etwa PLRV, PVY und ToMoV |
| Toxine von Bacillus thuringiensis, VIP 3, | Lepidoptera z.B. Heliothis, weiße Fliege |
| Bacillus-cereus-Toxine, Photorabdus und | Blattläuse |
| Toxine von Xenorhabdus | |
| 3- Hydroxysteroidoxidase | Lepidoptera z.B. Heliothis, weiße Fliege, Blattläuse |
| Peroxidase | Lepidoptera z.B. Heliothis, weiße Fliege, Blattläuse |
| Aminopeptidase-Inhibitoren, z.B. Leucin | Lepidoptera z.B. Heliothis, weiße Fliege, |
| Aminopeptidase-Inhibitor | Blattläuse |
| Lektine | Lepidoptera z.B. Heliothis, weiße Fliege, Blattläuse |
| Protease-Inhibitoren, z.B. Cystatin, Patatin | Lepidoptera z.B. Heliothis, weiße Fliege, Blattläuse |
| Ribosomeninaktivierendes Protein | Lepidoptera z.B. Heliothis, weiße Fliege, Blattläuse |
| Stilbensynthase | Lepidoptera z.B. Heliothis, weiße Fliege, Blattläuse |
| HMG-CoA-Reductase | Lepidoptera z.B. Heliothis, weiße Fliege, Blattläuse |
| Schlüpfauslösefaktor für Zystennematoden | Zystennematoden |
| Barnase | Nematoden, z.B. Wurzelknoten-Nematoden und Zystennematoden |
| Prinzipien zur Verhinderung der Nahrungsaufnahme | Nematoden, z.B. Wurzelknoten-Nematoden und Zystennematoden |
| Acetolactatsynthase (ALS) | Sulfonylharnstoffverbindungen, Imidazolinone Triazolpyrimidine, |
| Acetyl-CoA-Carboxylase (ACCase) | Pyrimidyloxybenzoate, Phthalide Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle und Pilz-Pathogene |
| Metallothionein | Bakterielle und Pilz-Pathogene |
| Ribonuclease | Bakterielle und Pilz-Pathogene |
| Pilzbekämpfendes Polypeptid AlyAFP | Bakterielle und Pilz-Pathogene |
| Oxalatoxidase | Bakterielle und Pilz-Pathogene |
| Glucoseoxidase | Bakterielle und Pilz-Pathogene |
| Pyrrolnitrinsynthese-Gene | Bakterielle und Pilz-Pathogene |
| Serin/Threonin-Kinasen | Bakterielle und Pilz-Pathogene |
| Cecropin B | Bakterielle und Pilz-Pathogene, Fäule, Samtfleckenkrankheit, etc |
| Phenylalanin-Ammoniak-Lyase (PAL) | Bakterielle und Pilz-Pathogene |
| Cf-Gene, z.B. Cf 9 Ct5 Cf4 Cf2 | Bakterielle und Pilz-Pathogene |
| Osmotin | Bakterielle und Pilz-Pathogene |
| Alpha Hordothionin | Bakterielle und Pilz-Pathogene |
| Systemin | Bakterielle und Pilz-Pathogene |
| Polygalacturonase-Inhibitoren | Bakterielle und Pilz-Pathogene |
| Prf-Steuerungsgen | Bakterielle und Pilz-Pathogene |
| 12 Fusariumresistenz-Stelle | Fusarium |
| Phytoalexine | Bakterielle und Pilz-Pathogene |
| B-1,3-glucanase (Antisense) | Bakterielle und Pilz-Pathogene |
| Rezeptorkinase | Bakterielle und Pilz-Pathogene |
| Polypeptid mit der Wirkung, eine Über-empfindlichkeitsreaktion auszulösen | Bakterielle und Pilz-Pathogene |
| Gene der systemischen erworbenen | Virale, bakterielle Pilz- und Nematoden- |
| Widerstandskraft (SAR) | Pathogene |
| Chitinasen | Bakterielle und Pilz-Pathogene |
| Barnase | Bakterielle und Pilz-Pathogene |
| Glucanasen | Bakterielle und Pilz-Pathogene |
| Doppelstrang-Ribonuclease | Viren wie etwa CMV, TEV |
| Hüllproteine | Viren wie etwa CMV, TEV |
| 17kDa oder 60 kDa Protein | Viren wie etwa CMV, TEV |
| Einschlussproteine des Kerns z.B. a oder b oder | Viren wie etwa CMV, TEV |
| Nucleoprotein | |
| Pseudoubiquitin | Viren wie etwa CMV, TEV |
| Replicase | Viren wie etwa CMV, TEV |
| Toxine von Bacillus thuringiensis, VIP 3, | Lepidoptera, weiße Fliege, Blattläuse |
| Bacillus-cereus-Toxine, Photorabdus und | |
| Toxine von Xenorhabdus | |
| 3- Hydroxysteroidoxidase | Lepidoptera, weiße Fliege, Blattläuse |
| Peroxidase | Lepidoptera, weiße Fliege, Blattläuse |
| Aminopeptidase-Inhibitoren, z.B. Leucin | Lepidoptera, weiße Fliege, Blattläuse |
| Aminopeptidase-Inhibitor | |
| Lektine | Lepidoptera, weiße Fliege, Blattläuse |
| Protease-Inhibitoren, z.B. Cystatin, Patatin | Lepidoptera, weiße Fliege, Blattläuse |
| Ribosomeninaktivierendes Protein | Lepidoptera, weiße Fliege, Blattläuse |
| Stilbensynthase | Lepidoptera, weiße Fliege, Blattläuse |
| HMG-CoA-Reductase | Lepidoptera, weiße Fliege, Blattläuse |
| Schlüpfauslösefaktor für Zystennematoden | Zystennematoden |
| Barnase | Nematoden, z.B. Wurzelknoten-Nematoden und |
| | Zystennematoden |
| Prinzipien zur Verhinderung der Nahrungs- | Nematoden, z.B. Wurzelknoten-Nematoden und |
| aufnahme | Zystennematoden |
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Bakterielle und Pilz-Pathogene wie |
| (Antisense) | Botrytis und echter Mehltau |
| Metallothionein | Bakterielle und Pilz-Pathogene wie Botrytis und echter Mehltau |
| Ribonuclease | Bakterielle und Pilz-Pathogene wie Botrytis und echter Mehltau |
| Pilzbekämpfendes Polypeptid AlyAFP | Bakterielle und Pilz-Pathogene wie Botrytis und echter Mehltau |
| Oxalatoxidase | Bakterielle und Pilz-Pathogene wie Botrytis und echter Mehltau |
| Glucoseoxidase | Bakterielle und Pilz-Pathogene wie Botrytis und echter Mehltau |
| Pyrrolnitrinsynthese-Gene | Bakterielle und Pilz-Pathogene wie Botrytis und echter Mehltau |
| Serin/Threonin-Kinasen | Bakterielle und Pilz-Pathogene wie Botrytis und echter Mehltau |
| Cecropin B | Bakterielle und Pilz-Pathogene wie Botrytis und echter Mehltau |
| Phenylalanin-Ammoniak-Lyase (PAL) | Bakterielle und Pilz-Pathogene wie Botrytis und echter Mehltau |
| Cf-Gene, z.B. Cf 9 Cf5 Cf4 Cf2 | Bakterielle und Pilz-Pathogene wie Botrytis und echter Mehltau |
| Osmotin | Bakterielle und Pilz-Pathogene wie Botrytis und echter Mehltau |
| Alpha Hordothionin | Bakterielle und Pilz-Pathogene wie Botrytis und echter Mehltau |
| Systemin | Bakterielle und Pilz-Pathogene wie |
| | Botrytis und echter Mehltau |
| Polygalacturonase-Inhibitoren | Bakterielle und Pilz-Pathogene wie Botrytis und echter Mehltau |
| Prf-Steuerungsgen | Bakterielle und Pilz-Pathogene wie Botrytis und echter Mehltau |
| Phytoalexine | Bakterielle und Pilz-Pathogene wie Botrytis und echter Mehltau |
| B-1,3-glucanase (Antisense) | Bakterielle und Pilz-Pathogene wie Botrytis und echter Mehltau |
| Rezeptorkinase | Bakterielle und Pilz-Pathogene wie Botrytis und echter Mehltau |
| Polypeptid mit der Wirkung, eine Über- | Bakterielle und Pilz-Pathogene wie Botrytis und |
| empfindlichkeitsreaktion auszulösen | echter Mehltau |
| Gene der systemischen erworbenen | Virale, bakterielle Pilz- und Nematoden- |
| Widerstandskraft (SAR) | Pathogene |
| Chitinasen | Bakterielle und Pilz-Pathogene wie Botrytis und echter Mehltau |
| Barnase | Bakterielle und Pilz-Pathogene wie Botrytis und echter Mehltau |
| Glucanasen | Bakterielle und Pilz-Pathogene wie Botrytis und echter Mehltau |
| Doppelstrang-Ribonuclease | Viren |
| Hüllproteine | Viren |
| 17kDa oder 60 kDa Protein | Viren |
| Einschlussproteine des Kerns z.B. a oder b oder | Viren |
| Nucleoprotein | |
| Pseudoubiquitin | Viren |
| Replicase | Viren |
| Toxine von Bacillus thuringiensis, VIP 3, | Lepidoptera, Blattläuse |
| Bacillus-cereus-Toxine, Photorabdus und | |
| Toxine von Xenorhabdus | |
| 3- Hydroxysteroidoxidase | Lepidoptera, Blattläuse |
| Peroxidase | Lepidoptera, Blattläuse |
| Aminopeptidase-Inhibitoren, z.B. Leucin | Lepidoptera, Blattläuse |
| Aminopeptidase-Inhibitor | |
| Lektine | Lepidoptera, Blattläuse |
| Protease-Inhibitoren, z.B. Cystatin, Patatin | Lepidoptera, Blattläuse |
| Ribosomeninaktivierendes Protein | Lepidoptera, Blattläuse |
| Stilbensynthase | Lepidoptera, Blattläuse, Krankheiten |
| HMG-CoA-Reductase | Lepidoptera, Blattläuse |
| Schlüpfauslösefaktor für Zystennematoden | Zystennematoden |
| Barnase | Nematoden, z.B. Wurzelknoten-Nematoden und |
| | Zystennematoden oder allgemeine Krankheiten |
| CBI | Wurzelknotennematoden |
| Prinzipien zur Verhinderung der Nahrungs- | Nematoden, z.B. Wurzelknoten-Nematoden |
| aufnahme | oder Wurzelzystennematoden |
| Pflanze: Ölraps | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie |
| | Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol- | Bakterielle und Pilz-Pathogene wie |
| Oxidase (Antisense) | Cylindrosporium, Phoma, Sklerotinia |
| Metallothionein | Bakterielle und Pilz-Pathogene wie Cylindrosporium, Phoma, Sklerotinia |
| Ribonuclease | Bakterielle und Pilz-Pathogene wie Cylindrosporium, Phoma, Sklerotinia |
| Pilzbekämpfendes Polypeptid AlyAFP | Bakterielle und Pilz-Pathogene wie Cylindrosporium, Phoma, Sklerotinia |
| Oxalatoxidase | Bakterielle und Pilz-Pathogene wie Cylindrosporium, Phoma, Sklerotinia |
| Glucoseoxidase | Bakterielle und Pilz-Pathogene wie Cylindrosporium, Phoma, Sklerotinia |
| Pyrrolnitrinsynthese-Gene | Bakterielle und Pilz-Pathogene wie Cylindrosporium, Phoma, Sklerotinia |
| Serin/Threonin-Kinasen | Bakterielle und Pilz-Pathogene wie Cylindrosporium, Phoma, Sklerotinia |
| Cecropin B | Bakterielle und Pilz-Pathogene wie Cylindrosporium, Phoma, Sklerotinia |
| Phenylalanin-Ammoniak-Lyase (PAL) | Bakterielle und Pilz-Pathogene wie Cylindrosporium, Phoma, Sklerotinia |
| Cf-Gene, z.B. Cf 9 Cf5 Cf4 Cf2 | Bakterielle und Pilz-Pathogene wie Cylindrosporium, Phoma, Sklerotinia |
| Osmotin | Bakterielle und Pilz-Pathogene wie Cylindrosporium, Phoma, Sklerotinia |
| Alpha Hordothionin | Bakterielle und Pilz-Pathogene wie Cylindrosporium, Phoma, Sklerotinia |
| Systemin | Bakterielle und Pilz-Pathogene wie Cylindrosporium, Phoma, Sklerotinia |
| Polygalacturonase-Inhibitoren | Bakterielle und Pilz-Pathogene wie Cylindrosporium, Phoma, Sklerotinia |
| Prf-Steuerungsgen | Bakterielle und Pilz-Pathogene wie Cylindrosporium, Phoma, Sklerotinia |
| Phytoalexine | Bakterielle und Pilz-Pathogene wie |
| | Cylindrosporium, Phoma, Sklerotinia |
| B-1,3-glucanase (Antisense) | Bakterielle und Pilz-Pathogene wie Cylindrosporium, Phoma, Sklerotinia |
| Rezeptorkinase | Bakterielle und Pilz-Pathogene wie Cylindrosporium, Phoma, Sklerotinia |
| Polypeptid mit der Wirkung, eine Über-empfindlichkeitsreaktion auszulösen | Bakterielle und Pilz-Pathogene wie Cylindrosporium, Phoma, Sklerotinia |
| Gene der systemischen erworbenen | Virale, bakterielle Pilz- und Nematoden- |
| Widerstandskraft (SAR) | Pathogene |
| Chitinasen | Bakterielle und Pilz-Pathogene wie Cylindrosporium, Phoma, Sklerotinia |
| Barnase | Bakterielle und Pilz-Pathogene wie Cylindrosporium, Phoma, Sklerotinia, Nematoden |
| Glucanasen | Bakterielle und Pilz-Pathogene wie Cylindrosporium, Phoma, Sklerotinia |
| Doppelstrang-Ribonuclease | Viren |
| Hüllproteine | Viren |
| 17kDa oder 60 kDa Protein | Viren |
| Einschlussproteine des Kerns z.B. a oder b oder | Viren |
| Nucleoprotein | |
| Pseudoubiquitin | Viren |
| Replicase | Viren |
| Toxine von Bacillus thuringiensis, VIP 3, | Lepidoptera, Blattläuse |
| Bacillus-cereus-Toxine, Photorabdus und | |
| Toxine von Xenorhabdus | |
| 3- Hydroxysteroidoxidase | Lepidoptera, Blattläuse |
| Peroxidase | Lepidoptera, Blattläuse |
| Aminopeptidase-Inhibitoren, z.B. Leucin Aminopeptidase-Inhibitor | Lepidoptera, Blattläuse |
| Lektine | Lepidoptera, Blattläuse |
| Protease-Inhibitoren, z.B. Cystatin, Patatin, CPTI | Lepidoptera, Blattläuse |
| Ribosomeninaktivierendes Protein | Lepidoptera, Blattläuse |
| Stilbensynthase | Lepidoptera, Blattläuse, Krankheiten |
| HMG-CoA-Reductase | Lepidoptera, Blattläuse |
| Schlüpfauslösefaktor für Zystennematoden | Zystennematoden |
| Barnase | Nematoden, z.B. Wurzelknoten-Nematoden und |
| | Zystennematoden |
| CBI | Wurzelknotennematoden |
| Prinzipien zur Verhinderung der Nahrungsauf- | Nematoden, z.B. Wurzelknoten-Nematoden und |
| nahmen, die an Nematoden-Nährstellen induziert werden | Wurzel- Zystennematoden |
| Pflanze: Brassica-Gemüse (Kohl, Kohlsprossen etc..) | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, zyklische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol- Oxidase (Antisense) | Bakterielle und Pilz-Pathogene |
| Metallothionein | Bakterielle und Pilz-Pathogene |
| Ribonuclease | Bakterielle und Pilz-Pathogene |
| Pilzbekämpfendes Polypeptid AlyAFP | Bakterielle und Pilz-Pathogene |
| Oxalatoxidase | Bakterielle und Pilz-Pathogene |
| Glucoseoxidase | Bakterielle und Pilz-Pathogene |
| Pyrrolnitrinsynthese-Gene | Bakterielle und Pilz-Pathogene |
| Serin/Threonin-Kinasen | Bakterielle und Pilz-Pathogene |
| Cecropin B | Bakterielle und Pilz-Pathogene |
| Phenylalanin-Ammoniak-Lyase (PAL) | Bakterielle und Pilz-Pathogene |
| Cf-Gene, z.B. Cf 9 Cf5 Cf4 Cf2 | Bakterielle und Pilz-Pathogene |
| Osmotin | Bakterielle und Pilz-Pathogene |
| Alpha Hordothionin | Bakterielle und Pilz-Pathogene |
| Systemin | Bakterielle und Pilz-Pathogene |
| Polygalacturonase-Inhibitoren | Bakterielle und Pilz-Pathogene |
| Prf-Steuerungsgen | Bakterielle und Pilz-Pathogene |
| Phytoalexine | Bakterielle und Pilz-Pathogene |
| B-1,3-glucanase (Antisense) | Bakterielle und Pilz-Pathogene |
| Rezeptorkinase | Bakterielle und Pilz-Pathogene |
| Polypeptid mit der Wirkung, eine Über-empfindlichkeitsreaktion auszulösen | Bakterielle und Pilz-Pathogene |
| Gene der systemischen erworbenen | Virale, bakterielle Pilz- und Nematoden- |
| Widerstandskraft (SAR) | Pathogene |
| Chitinasen | Bakterielle und Pilz-Pathogene |
| Barnase | Bakterielle und Pilz-Pathogene |
| Glucanasen | Bakterielle und Pilz-Pathogene |
| Doppelstrang-Ribonuclease | Viren |
| Hüllproteine | Viren |
| 17kDa oder 60 kDa Protein | Viren |
| Einschlussproteine des Kerns z.B. a oder b oder Nucleoprotein | Viren |
| Pseudoubiquitin | Viren |
| Replicase | Viren |
| Toxine von Bacillus thuringiensis, VIP 3, | Lepidoptera, Blattläuse |
| Bacillus-cereus-Toxine, Photorabdus und | |
| Toxine von Xenorhabdus | |
| 3- Hydroxysteroidoxidase | Lepidoptera, Blattläuse |
| Peroxidase | Lepidoptera, Blattläuse |
| Aminopeptidase-Inhibitoren, z.B. Leucin | Lepidoptera, Blattläuse |
| Aminopeptidase-Inhibitor | |
| Lektine | Lepidoptera, Blattläuse |
| Protease-Inhibitoren, z.B. Cystatin, Patatin, | Lepidoptera, Blattläuse |
| CPTI | |
| Ribosomeninaktivierendes Protein | Lepidoptera, Blattläuse |
| Stilbensynthase | Lepidoptera, Blattläuse, Krankheiten |
| HMG-CoA-Reductase | Lepidoptera, Blattläuse |
| Schlüpfauslösefaktor für Zystennematoden | Zystennematoden |
| Barnase | Nematoden, z.B. Wurzelknoten-Nematoden und |
| | Zystennematoden |
| CBI | Wurzelknotennematoden |
| Prinzipien zur Verhinderung der Nahrungs- | Nematoden, z.B. Wurzelknoten-Nematoden und |
| aufnahmen, die an Nematoden-Nährstellen | Wurzel-Zystennematoden |
| induziert werden | Zystennematoden |
| Pflanzen: Kernobst z.B. Äpfel, Birnen | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Bakterielle und Pilz-Pathogene wie |
| (Antisense) | Lagerschorf an Äpfeln oder Feuerbrand |
| Metallothionein | Bakterielle und Pilz-Pathogene wie |
| | Lagerschorf an Äpfeln oder Feuerbrand |
| Ribonuclease | Bakterielle und Pilz-Pathogene wie |
| | Lagerschorf an Äpfeln oder Feuerbrand |
| Pilzbekämpfendes Polypeptid AlyAFP | Bakterielle und Pilz-Pathogene wie |
| | Lagerschorf an Äpfeln oder Feuerbrand |
| Oxalatoxidase | Bakterielle und Pilz-Pathogene wie |
| | Lagerschorf an Äpfeln oder Feuerbrand |
| Glucoseoxidase | Bakterielle und Pilz-Pathogene wie |
| | Lagerschorf an Äpfeln oder Feuerbrand |
| Pyrrolnitrinsynthese-Gene | Bakterielle und Pilz-Pathogene wie |
| | Lagerschorf an Äpfeln oder Feuerbrand |
| Serin/Threonin-Kinasen | Bakterielle und Pilz-Pathogene wie |
| | Lagerschorf an Äpfeln oder Feuerbrand |
| Cecropin B | Bakterielle und Pilz-Pathogene wie |
| | Lagerschorf an Äpfeln oder Feuerbrand |
| Phenylalanin-Ammoniak-Lyase (PAL) | Bakterielle und Pilz-Pathogene wie |
| | Lagerschorf an Äpfeln oder Feuerbrand |
| Cf-Gene, z.B. Cf 9 Cf5 Cf4 Cf2 | Bakterielle und Pilz-Pathogene wie |
| | Lagerschorf an Äpfeln oder Feuerbrand |
| Osmotin | Bakterielle und Pilz-Pathogene wie |
| | Lagerschorf an Äpfeln oder Feuerbrand |
| Alpha Hordothionin | Bakterielle und Pilz-Pathogene wie |
| | Lagerschorf an Äpfeln oder Feuerbrand |
| Systemin | Bakterielle und Pilz-Pathogene wie |
| | Lagerschorf an Äpfeln oder Feuerbrand |
| Polygalacturonase-Inhibitoren | Bakterielle und Pilz-Pathogene wie |
| | Lagerschorf an Äpfeln oder Feuerbrand |
| Prf-Steuerungsgen | Bakterielle und Pilz-Pathogene wie |
| | Lagerschorf an Äpfeln oder Feuerbrand |
| Phytoalexine | Bakterielle und Pilz-Pathogene wie |
| | Lagerschorf an Äpfeln oder Feuerbrand |
| B-1,3-glucanase (Antisense) | Bakterielle und Pilz-Pathogene wie |
| | Lagerschorf an Äpfeln oder Feuerbrand |
| Rezeptorkinase | Bakterielle und Pilz-Pathogene wie |
| | Lagerschorf an Äpfeln oder Feuerbrand |
| Polypeptid mit der Wirkung, eine Über- | Bakterielle und Pilz-Pathogene wie Lager- |
| empfindlichkeitsreaktion auszulösen | schorf an Äpfeln oder Feuerbrand |
| Gene der systemischen erworbenen | Virale, bakterielle Pilz- und Nematoden- |
| Widerstandskraft (SAR) | Pathogene |
| lytisch wirkendes Protein | Bakterielle und Pilz-Pathogene wie |
| | Lagerschorf an Äpfeln oder Feuerbrand |
| Lysozym | Bakterielle und Pilz-Pathogene wie |
| | Lagerschorf an Äpfeln oder Feuerbrand |
| Chitinasen | Bakterielle und Pilz-Pathogene wie |
| | Lagerschorf an Äpfeln oder Feuerbrand |
| Barnase | Bakterielle und Pilz-Pathogene wie |
| | Lagerschorf an Äpfeln oder Feuerbrand |
| Glucanasen | Bakterielle und Pilz-Pathogene wie |
| | Lagerschorf an Äpfeln oder Feuerbrand |
| Doppelstrang-Ribonuclease | Viren |
| Hüllproteine | Viren |
| 17kDa oder 60 kDa Protein | Viren |
| Einschlussproteine des Kerns z.B. a oder b oder | Viren |
| Nucleoprotein | |
| Pseudoubiquitin | Viren |
| Replicase | Viren |
| Toxine von Bacillus thuringiensis, VIP 3, | Lepidoptera, Blattläuse, Milben |
| Bacillus-cereus-Toxine, Photorabdus und | |
| Toxine von Xenorhabdus | |
| 3- Hydroxysteroidoxidase | Lepidoptera, Blattläuse, Milben |
| Peroxidase | Lepidoptera, Blattläuse, Milben |
| Aminopeptidase-Inhibitoren, z.B. Leucin | Lepidoptera, Blattläuse, Milben |
| Aminopeptidase-Inhibitor | |
| Lektine | Lepidoptera, Blattläuse, Milben |
| Protease-Inhibitoren, z.B. Cystatin, Patatin, | Lepidoptera, Blattläuse, Milben |
| CPTI | |
| Ribosomeninaktivierendes Protein | Lepidoptera, Blattläuse, Milben |
| Stilbensynthase | Lepidoptera, Blattläuse, Krankheiten, Milben |
| HMG-CoA-Reductase | Lepidoptera, Blattläuse, Milben |
| Schlüpfauslösefaktor für Zystennematoden | Zystennematoden |
| Barnase | Nematoden, z.B. Wurzelknoten-Nematoden und |
| | Zystennematoden |
| CBI | Wurzelknotennematoden |
| Prinzipien zur Verhinderung der Nahrungs- | Nematoden, z.B. Wurzelknoten-Nematoden und |
| aufnahmen, die an Nematoden-Nährstellen | Wurzel-Zystennematoden |
| induziert werden | |
| Pflanze: Melone | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, zyklische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Bakterielle oder Pilz-Pathogene wie |
| (Antisense) | Phytophtora |
| Metallothionein | Bakterielle oder Pilz-Pathogene wie |
| | Phytophtora |
| Ribonuclease | Bakterielle oder Pilz-Pathogene wie |
| | Phytophtora |
| Pilzbekämpfendes Polypeptid AlyAFP | Bakterielle oder Pilz-Pathogene wie |
| | Phytophtora |
| Oxalatoxidase | Bakterielle oder Pilz-Pathogene wie Phytophtora |
| Glucoseoxidase | Bakterielle oder Pilz-Pathogene wie Phytophtora |
| Pyrrolnitrinsynthesegene | Bakterielle oder Pilz-Pathogene wie Phytophtora |
| Serin/Threonin-Kinasen | Bakterielle oder Pilz-Pathogene wie Phytophtora |
| Cecropin B | Bakterielle oder Pilz-Pathogene wie Phytophtora |
| Phenylalanin-Ammoniak-Lyase (PAL) | Bakterielle oder Pilz-Pathogene wie Phytophtora |
| Cf-Gene, z.B. Cf 9 Cf5 Cf4 Cf2 | Bakterielle oder Pilz-Pathogene wie Phytophtora |
| Osmotin | Bakterielle oder Pilz-Pathogene wie Phytophtora |
| Alpha Hordothionin | Bakterielle oder Pilz-Pathogene wie Phytophtora |
| Systemin | Bakterielle oder Pilz-Pathogene wie Phytophtora |
| Polygalacturonase-Inhibitoren | Bakterielle oder Pilz-Pathogene wie Phytophtora |
| Prf-Steuerungsgen | Bakterielle oder Pilz-Pathogene wie Phytophtora |
| Phytoalexine | Bakterielle oder Pilz-Pathogene wie Phytophtora |
| B-1,3-glucanase (Antisense) | Bakterielle oder Pilz-Pathogene wie Phytophtora |
| Rezeptorkinase | Bakterielle oder Pilz-Pathogene wie Phytophtora |
| Polypeptid mit der Wirkung, eine Über-empfindlichkeitsreaktion auszulösen | Bakterielle oder Pilz-Pathogene wie Phytophtora |
| Gene der systemischen erworbenen | Virale, bakterielle Pilz- und Nematoden- |
| Widerstandskraft (SAR) | Pathogene |
| Lytisch wirkendes Protein | Bakterielle oder Pilz-Pathogene wie |
| Lysozym | Phytophtora Bakterielle oder Pilz-Pathogene wie |
| | Phytophtora |
| Chitinasen | Bakterielle oder Pilz-Pathogene wie Phytophtora |
| Barnase | Bakterielle oder Pilz-Pathogene wie Phytophtora |
| Glucanasen | Bakterielle oder Pilz-Pathogene wie Phytophtora |
| Doppelstrang-Ribonuclease | Viren wie CMV, PRSV, WMV2, SMV, ZYMV |
| Hüllproteine | Viren wie CMV, PRSV, WMV2, SMV, ZYMV |
| 17kDa oder 60 kDa Protein | Viren wie CMV, PRSV, WMV2, SMV, ZYMV |
| Einschlussproteine des Kerns z.B. a oder b oder | Viren wie CMV, PRSV, WMV2, SMV, |
| Nucleoprotein | ZYMV |
| Pseudoubiquitin | Viren wie CMV, PRSV, WMV2, SMV, |
| | ZYMV |
| Replicase | Viren wie CMV, PRSV, WMV2, SMV, |
| | ZYMV |
| Toxine von Bacillus thuringiensis, VIP 3, | Lepidoptera, Blattläuse, Milben |
| Bacillus-cereus-Toxine, Photorabdus und | |
| Toxine von Xenorhabdus | |
| 3- Hydroxysteroidoxidase | Lepidoptera, Blattläuse, Milben, weiße Fliege |
| Peroxidase | Lepidoptera, Blattläuse, Milben, weiße Fliege |
| Aminopeptidase-Inhibitoren, z.B. Leucin | Lepidoptera, Blattläuse, Milben, weiße Fliege |
| Aminopeptidase-Inhibitor | |
| Lektine | Lepidoptera, Blattläuse, Milben, weiße Fliege |
| Protease-Inhibitoren, z.B. Cystatin, Patatin, | Lepidoptera, Blattläuse, Milben, weiße Fliege |
| CPTI, Virgiferin | |
| Ribosomeninaktivierendes Protein | Lepidoptera, Blattläuse, Milben, weiße Fliege |
| Stilbensynthase | Lepidoptera, Blattläuse, Milben, weiße Fliege |
| HMG-CoA-Reductase | Lepidoptera, Blattläuse, Milben, weiße Fliege |
| Schlüpfauslösefaktor für Zystennematoden | Zystennematoden |
| Barnase | Nematoden, z.B. Wurzelknoten-Nematoden und |
| | Zystennematoden |
| CBI | Wurzelknotennematoden |
| Prinzipien zur Verhinderung der Nahrungs- | Nematoden, z.B. Wurzelknoten-Nematoden und |
| aufnahmen, die an Nematoden-Nährstellen | Wurzel-Zystennematoden |
| induziert werden | |
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, zyklische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase (Antisense) | Bakterielle oder Pilz-Pathogene |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz-Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| Rezeptorkinase | Bakterielle oder Pilz-Pathogene |
| Polypeptid mit der Wirkung, eine Über-empfindlichkeitsreaktion auszulösen | Bakterielle oder Pilz-Pathogene |
| Gene der systemischen erworbenen | Virale, bakterielle Pilz- und Nematoden- |
| Widerstandskraft (SAR) | Pathogene |
| Lytisch wirkendes Protein | Bakterielle oder Pilz-Pathogene |
| Lysozym | Bakterielle oder Pilz-Pathogene |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie das Banana Bunchy Top Virus |
| | (BBTV) |
| Hüllproteine | Viren wie das Banana Bunchy Top Virus |
| | (BBTV) |
| 17kDa oder 60 kDa Protein | Viren wie das Banana Bunchy Top Virus |
| | (BBTV) |
| Einschlussproteine des Kerns z.B. a oder b oder | Viren wie das Banana Bunchy Top Virus |
| Nucleoprotein | (BBTV) |
| Pseudoubiquitin | Viren wie das Banana Bunchy Top Virus |
| | (BBTV) |
| Replicase | Viren wie das Banana Bunchy Top Virus |
| | (BBTV) |
| Toxine von Bacillus thuringiensis, VIP 3, | Lepidoptera, Blattläuse, Milben, Nematoden |
| Bacillus-cereus-Toxine, Photorabdus und | |
| Toxine von Xenorhabdus | |
| 3- Hydroxysteroidoxidase | Lepidoptera, Blattläuse, Milben, Nematoden |
| Peroxidase | Lepidoptera, Blattläuse, Milben, Nematoden |
| Aminopeptidase-Inhibitoren, z.B. Leucin | Lepidoptera, Blattläuse, Milben, Nematoden |
| Aminopeptidase-Inhibitor | |
| Lektine | Lepidoptera, Blattläuse, Milben, Nematoden |
| Protease-Inhibitoren, z.B. Cystatin, Patatin, | Lepidoptera, Blattläuse, Milben, Nematoden |
| CPTI, Virgiferin | |
| Ribosomeninaktivierendes Protein | Lepidoptera, Blattläuse, Milben, Nematoden |
| Stilbensynthase | Lepidoptera, Blattläuse, Milben, Nematoden |
| HMG-CoA-Reductase | Lepidoptera, Blattläuse, Milben, Nematoden |
| Schlüpfauslösefaktor für Zystennematoden | Zystennematoden |
| Barnase | Nematoden, z.B. Wurzelknoten-Nematoden und |
| | Zystennematoden |
| CBI | Wurzelknotennematoden |
| Prinzipien zur Verhinderung der Nahrungs- | Nematoden, z.B. Wurzelknoten-Nematoden und |
| aufnahmen, die an Nematoden-Nährstellen | Wurzel-Zystennematoden |
| induziert werden | |
| Pflanze: Baumwolle | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Arykoxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, zyklische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Bakterielle oder Pilz-Pathogene |
| (Antisense) | |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz-Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| Rezeptorkinase | Bakterielle oder Pilz-Pathogene |
| Polypeptid mit der Wirkung, eine Über- | Bakterielle oder Pilz-Pathogene |
| empfindlichkeitsreaktion auszulösen | |
| Gene der systemischen erworbenen | Virale, bakterielle Pilz- und Nematoden- |
| Widerstandskraft (SAR) | Pathogene |
| Lytisch wirkendes Protein | Bakterielle oder Pilz-Pathogene |
| Lysozym | Bakterielle oder Pilz-Pathogene |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie das Wundtumorvirus (WTV) |
| Hüllproteine | Viren wie das Wundtumorvirus (WTV) |
| 17kDa oder 60 kDa Protein | Viren wie das Wundtumorvirus (WTV) |
| Einschlussproteine des Kerns z.B. a oder b oder | Viren wie das Wundtumorvirus (WTV) |
| Nucleoprotein | |
| Pseudoubiquitin | Viren wie das Wundtumorvirus (WTV) |
| Replicase | Viren wie das Wundtumorvirus (WTV) |
| Toxine von Bacillus thuringiensis, VIP 3, | Lepidoptera, Blattläuse, Milben, Nematoden, |
| Bacillus-cereus-Toxine, Photorabdus und | weiße Fliege |
| Toxine von Xenorhabdus | |
| 3- Hydroxysteroidoxidase | Lepidoptera, Blattläuse, Milben, Nematoden, |
| | weiße Fliege |
| Peroxidase | Lepidoptera, Blattläuse, Milben, Nematoden, |
| | weiße Fliege |
| Aminopeptidase-Inhibitoren, z.B. Leucin | Lepidoptera, Blattläuse, Milben, Nematoden, |
| Aminopeptidase-Inhibitor | weiße Fliege |
| Lektine | Lepidoptera, Blattläuse, Milben, Nematoden, |
| | weiße Fliege |
| Protease-Inhibitoren, z.B. Cystatin, Patatin, CPTI, Virgiferin | Lepidoptera, Blattläuse, Milben, Nematoden, weiße Fliege |
| Ribosomeninaktivierendes Protein | Lepidoptera, Blattläuse, Milben, Nematoden, weiße Fliege |
| Stilbensynthase | Lepidoptera, Blattläuse, Milben, Nematoden, weiße Fliege |
| HMG-CoA-Reductase | Lepidoptera, Blattläuse, Milben, Nematoden, weiße Fliege |
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungs- | Nematoden, z.B. Wurzelknoten-Nematoden und |
| aufnahmen, die an Nematoden-Nährstellen | Wurzel-Zystennematoden |
| induziert werden | |
| Pflanze: Zuckerrohr | |
| Betroffene Merkmal/ Exprimiertes Protein | Merkmal der Pflanze / Toleranz gegenüber |
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, zyklische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase (Antisense) | Bakterielle oder Pilz-Pathogene |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz-Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| Rezeptorkinase | Bakterielle oder Pilz-Pathogene |
| Polypeptid mit der Wirkung, eine Über-empfindlichkeitsreaktion auszulösen | Bakterielle oder Pilz-Pathogene |
| Gene der systemischen erworbenen | Virale, bakterielle Pilz- und Nematoden- |
| Widerstandskraft (SAR) | Pathogene |
| Lytisch wirkendes Protein | Bakterielle oder Pilz-Pathogene |
| Lysozym | Bakterielle oder Pilz-Pathogene, z.B. Clavibacter |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie SCMV, SrMV |
| Hüllproteine | Viren wie SCMV, SrMV |
| 17kDa oder 60 kDa Protein | Viren wie SCMV, SrMV |
| Einschlussproteine des Kerns z.B. a oder b oder | Viren wie SCMV, SrMV |
| Nucleoprotein | |
| Pseudoubiquitin | Viren wie SCMV, SrMV |
| Replicase | Viren wie SCMV, SrMV |
| Toxine von Bacillus thuringiensis, VIP 3, | Lepidoptera, Blattläuse, Milben, Nematoden, |
| Bacillus-cereus-Toxine, Photorabdus und | weiße Fliege, Käfer wie z.B. der mexikanische |
| Toxine von Xenorhabdus | Reisbohrer |
| 3- Hydroxysteroidoxidase | Lepidoptera, Blattläuse, Milben, Nematoden, weiße Fliege, Käfer wie z.B. der mexikanische Reisbohrer |
| Peroxidase | Lepidoptera, Blattläuse, Milben, Nematoden, weiße Fliege, Käfer wie z.B. der mexikanische Reisbohrer |
| Aminopeptidase-Inhibitoren, z.B. Leucin | Lepidoptera, Blattläuse, Milben, Nematoden, |
| Aminopeptidase-Inhibitor | weiße Fliege, Käfer wie z.B. der mexikanische Reisbohrer |
| Lektine | Lepidoptera, Blattläuse, Milben, Nematoden, weiße Fliege, Käfer wie z.B. der mexikanische Reisbohrer |
| Protease-Inhibitoren, z.B. Cystatin, Patatin, | Lepidoptera, Blattläuse, Milben, Nematoden, |
| CPTI, Virgiferin | weiße Fliege, Käfer wie z.B. der mexikanische Reisbohrer |
| Ribosomeninaktivierendes Protein | Lepidoptera, Blattläuse, Milben, Nematoden, weiße Fliege, Käfer wie z.B. der mexikanische Reisbohrer |
| Stilbensynthase | Lepidoptera, Blattläuse, Milben, Nematoden, weiße Fliege, Käfer wie z.B. der mexikanische Reisbohrer |
| HMG-CoA-Reductase | Lepidoptera, Blattläuse, Milben, Nematoden, weiße Fliege, Käfer wie z.B. der mexikanische Reisbohrer |
| Schlüpfauslösefaktor für Zystennematoden | Zystennematoden |
| Barnase | Nematoden, z.B. Wurzelknoten-Nematoden und |
| | Zystennematoden |
| CBI | Wurzelknotennematoden |
| Prinzipien zur Verhinderung der Nahrungs- | Nematoden, z.B. Wurzelknoten-Nematoden und |
| aufnahmen, die an Nematoden-Nährstellen | Wurzel-Zystennematoden |
| induziert werden | |
| Pflanze: Sonnenblume | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, zyklische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Bakterielle oder Pilz-Pathogene |
| (Antisense) | |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene, z.B. |
| | Sklerotinia |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz-Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| Rezeptorkinase | Bakterielle oder Pilz-Pathogene |
| Polypeptid mit der Wirkung, eine Über- | Bakterielle oder Pilz-Pathogene |
| empfindlichkeitsreaktion auszulösen | |
| Gene der systemischen erworbenen | Virale, bakterielle Pilz- und Nematoden- |
| Widerstandskraft (SAR) | Pathogene |
| Lytisch wirkendes Protein | Bakterielle oder Pilz-Pathogene |
| Lysozym | Bakterielle oder Pilz-Pathogene |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie CMV, TMV |
| Hüllproteine | Viren wie CMV, TMV |
| 17kDa oder 60 kDa Protein | Viren wie CMV, TMV |
| Einschlussproteine des Kerns z.B. a oder b oder | Viren wie CMV, TMV |
| Nucleoprotein | |
| Pseudoubiquitin | Viren wie CMV, TMV |
| Replicase | Viren wie CMV, TMV |
| Toxine von Bacillus thuringiensis, VIP 3, | Lepidoptera, Blattläuse, Milben, Nematoden, |
| Bacillus-cereus-Toxine, Photorabdus und | weiße Fliege, Käfer |
| Toxine von Xenorhabdus | |
| 3- Hydroxysteroidoxidase | Lepidoptera, Blattläuse, Milben, Nematoden, |
| | weiße Fliege, Käfer |
| Peroxidase | Lepidoptera, Blattläuse, Milben, Nematoden, |
| | weiße Fliege, Käfer |
| Aminopeptidase-Inhibitoren, z.B. Leucin | Lepidoptera, Blattläuse, Milben, Nematoden, |
| Aminopeptidase-Inhibitor | weiße Fliege, Käfer |
| Lektine | Lepidoptera, Blattläuse, Milben, Nematoden, weiße Fliege, Käfer |
| Protease-Inhibitoren, z.B. Cystatin, Patatin, | Lepidoptera, Blattläuse, Milben, Nematoden, |
| CPTI, Virgiferin | weiße Fliege, Käfer |
| Ribosomeninaktivierendes Protein | Lepidoptera, Blattläuse, Milben, Nematoden, weiße Fliege, Käfer |
| Stilbensynthase | Lepidoptera, Blattläuse, Milben, Nematoden, weiße Fliege, Käfer |
| HMG-CoA-Reductase | Lepidoptera, Blattläuse, Milben, Nematoden, weiße Fliege, Käfer |
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungs- | Nematoden, z.B. Wurzelknoten-Nematoden und |
| aufnahmen, die an Nematoden-Nährstellen | Wurzel-Zystennematoden |
| induziert werden | |
| Pflanzen: Zuckerrübe, Rüben | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase (Antisense) | Bakterielle oder Pilz-Pathogene |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene, z.B. |
| | Sklerotinia |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Betroffene Struktur / exprimiertes Prinzip | Merkmal der Pflanze / Toleranz gegenüber |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz_Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| AX + WIN-Proteine | Bakterielle und Pilz-Pathogene wie |
| | Cercospora beticola |
| Rezeptorkinase | Bakterielle oder Pilz-Pathogene |
| Polypeptid mit der Wirkung, eine Über-empfindlichkeitsreaktion auszulösen | Bakterielle oder Pilz-Pathogene |
| Gene der systemischen erworbenen | Virale, bakterielle Pilz- und Nematoden- |
| Widerstandskraft (SAR) | Pathogene |
| Lytisch wirkendes Protein | Bakterielle oder Pilz-Pathogene |
| Lysozym | Bakterielle oder Pilz-Pathogene |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie etwa BNYVV |
| Hüllproteine | Viren wie etwa BNYVV |
| 17kDa oder 60 kDa Protein | Viren wie etwa BNYVV |
| Einschlussproteine des Kerns z.B. a oder b oder | Viren wie etwa BNYVV |
| Nucleoprotein | |
| Pseudoubiquitin | Viren wie etwa BNYVV |
| Replicase | Viren wie etwa BNYVV |
| Toxine von Bacillus thuringiensis, VIP 3, | Lepidoptera, Blattläuse, Milben, Nematoden, |
| Bacillus-cereus-Toxine, Photorabdus und | weiße Fliege, Käfer, Wurzelfliegen |
| Toxine von Xenorhabdus | |
| 3- Hydroxysteroidoxidase | Lepidoptera, Blattläuse, Milben, Nematoden, |
| | weiße Fliege, Käfer, Wurzelfliegen |
| Peroxidase | Lepidoptera, Blattläuse, Milben, Nematoden, |
| | weiße Fliege, Käfer, Wurzelfliegen |
| Aminopeptidase-Inhibitoren, z.B. Leucin | Lepidoptera, Blattläuse, Milben, Nematoden, |
| Aminopeptidase-Inhibitor | weiße Fliege, Käfer, Wurzelfliegen |
| Lektine | Lepidoptera, Blattläuse, Milben, Nematoden, |
| | weiße Fliege, Käfer, Wurzelfliegen |
| Protease-Inhibitoren, z.B. Cystatin, Patatin, | Lepidoptera, Blattläuse, Milben, Nematoden, |
| CPTI, Virgiferin | weiße Fliege, Käfer, Wurzelfliegen |
| Ribosomeninaktivierendes Protein | Lepidoptera, Blattläuse, Milben, Nematoden, |
| | weiße Fliege, Käfer, Wurzelfliegen |
| Stilbensynthase | Lepidoptera, Blattläuse, Milben, Nematoden, |
| | weiße Fliege, Käfer, Wurzelfliegen |
| HMG-CoA-Reductase | Lepidoptera, Blattläuse, Milben, Nematoden, |
| | weiße Fliege, Käfer, Wurzelfliegen |
| Schlüpfauslösefaktor für Zystennematoden | Zystennematoden |
| Barnase | Nematoden, z.B. Wurzelknoten-Nematoden und |
| | Zystennematoden |
| Resistenz-Stelle für Zystennematoden der | Zystennematoden |
| Rüben | |
| CBI | Wurzelknotennematoden |
| Prinzipien zur Verhinderung der Nahrungs- | Nematoden, z.B. Wurzelknoten-Nematoden und |
| aufnahmen, die Nahrungsaufnahmen, die | Wurzel-Zystennematoden |
| induziert werden | |

**Tabelle 2**

| | |
|---|---|
| Die folgenden Abkürzungen wurden in der Tabelle benutzt: | |
| Aktives Prinzip der transgenen Pflanze: AP | |
| Photorhabdus luminescens: PL | |
| Xenorhabdus nematophilus: XN | |
| Proteinase-Inhibitoren: Plnh. | |
| Pflanzenlektine PLec. | |
| Agglutinine: Aggl. | |
| 3-Hydroxysteroidoxidase: HO | |
| Cholesterinoxidase: CO | |
| Chitinase: CH | |
| Glucanase: GL | |
| Stilbensynthase SS | |
| AP Kontrolle von | |
| CrylA(a) | Adoxophyes spp. |
| CrylA(a) | Agrotis spp. |
| CrylA(a) | Alabama argiliaceae |
| CrylA(a) | Anticarsia gemmatalis |
| CrylA(a) | Chilo spp. |
| CrylA(a) | Clysia ambiguella |
| CrylA(a) | Crocidolomia binotalis |
| CrylA(a) | Cydia spp. |
| CrylA(a) | Diparopsis castanea |
| CrylA(a) | Earias spp. |
| CrylA(a) | Ephestia spp. |
| CrylA(a) | Heliothis spp. |
| CrylA(a) | Heliula undalis |
| CrylA(a) | Keiferia lycopersicella |
| CrylA(a) | Leucoptera scitella |
| CrylA(a) | Lithocollethis spp. |
| CrylA(a) | Lobesia botrana |
| CrylA(a) | Ostrinia nubilalis |
| CrylA(a) | Pandemis spp. |
| CrylA(a) | Pectinophora gossyp. |
| CrylA(a) | Phyllocnistis citrella |
| CrylA(a) | Pieris spp. |
| CrylA(a) | Plutella xylostella |
| CrylA(a) | Scirpophaga spp. |
| CrylA(a) | Sesamia spp. |
| CrylA(a) | Sparganothis spp. |
| CrylA(a) | Spodoptera spp. |
| CrylA(a) | Tortrix spp. |
| CrylA(a) | Trichoplusia ni |
| CrylA(a) | Agriotes spp. |
| CrylA(a) | Anthonomus grandis |
| CrylA(a) | Curculio spp. |
| CrylA(a) | Diabrotica balteata |
| CrylA(a) | Leptinotarsa spp. |
| CrylA(a) | Lissorhoptrus spp. |
| CrylA(a) | Otiorhynchus spp. |
| CrylA(a) | Aleurothrixus spp. |
| CrylA(a) | Aleyrodes spp. |
| CrylA(a) | Aonidiella spp. |
| CrylA(a) | Aphididea spp. |
| CrylA(a) | Aphis spp. |
| CrylA(a) | Bemisia tabaci |
| CrylA(a) | Empoasca spp. |
| CrylA(a) | Mycus spp. |
| CrylA(a) | Nephotettix spp. |
| CrylA(a) | Nilaparvata spp. |
| CrylA(a) | Pseudococcus spp. |
| CrylA(a) | Psylla spp. |
| CrylA(a) | Quadraspidiotus spp. |
| CrylA(a) | Schizaphis spp. |
| CrylA(a) | Trialeurodes spp. |
| CrylA(a) | Lyriomyza spp. |
| CrylA(a) | Oscinella spp. |
| CrylA(a) | Phorbia spp. |
| CrylA(a) | Frankliniella spp. |
| CrylA(a) | Thrips spp. |
| CrylA(a) | Scirtothrips aurantii |
| CrylA(a) | Aceria spp. |
| CrylA(a) | Aculus spp. |
| CrylA(a) | Brevipaipus spp. |
| CrylA(a) | Panonychus spp. |
| CrylA(a) | Phyllocoptruta spp. |
| CrylA(a) | Tetranychus spp. |
| CrylA(a) | Heterodera spp. |
| CrylA(a) | Meloidogyne spp. |
| CrylA(b) | Adoxophyes spp |
| CrylA(b) | Agrotis spp |
| CrylA(b) | Alabama argillaceae |
| CrylA(b) | Anticarsia gemmatalis |
| CrylA(b) | Chilo spp. |
| CrylA(b) | Ciysia ambiguella |
| CrylA(b) | Crocidolomia binotaiis |
| CrylA(b) | Cydia spp. |
| CrylA(b) | Diparopsis castanea |
| CrylA(b) | Earias spp. |
| CrylA(b) | Ephestia spp. |
| CrylA(b) | Heliothis spp. |
| CrylA(b) | Hellula undalis |
| CrylA(b) | Keiferia lycopersicella |
| CrylA(b) | Leucoptera scitella |
| CrylA(b) | Lithocollethis spp. |
| CrylA(b) | Lobesia botrana |
| CrylA(b) | Ostrinia nubilalis |
| CrylA(b) | Pandemis spp. |
| CrylA(b) | Pectinophora gossyp. |
| CrylA(b) | Phyllocnistis citrella |
| CrylA(b) | Pieris spp. |
| CrylA(b) | Plutelia xyiostella |
| CrylA(b) | Scirpophaga spp. |
| CrylA(b) | Sesamia spp. |
| CrylA(b) | Sparganothis spp. |
| CrylA(b) | Spodoptera spp. |
| CrylA(b) | Tortrix spp. |
| CrylA(b) | Trichoplusia ni |
| CrylA(b) | Agriotes spp. |
| CrylA(b) | Anthonomus grandis |
| CrylA(b) | Curculio spp. |
| CrylA(b) | Diabrotica balteata |
| CrylA(b) | Leptinotarsa spp. |
| CrylA(b) | Lissorhoptrus spp. |
| CrylA(b) | Otiorhynchus spp. |
| CrylA(b) | Aleurothrixus spp. |
| CrylA(b) | Aleyrodes spp. |
| CrylA(b) | Aonidiella spp. |
| CrylA(b) | Aphididae spp. |
| CrylA(b) | Aphis spp. |
| CrylA(b) | Bemisia tabaci |
| CrylA(b) | Empoasca spp. |
| CrylA(b) | Mycus spp. |
| CrylA(b) | Nephotettix spp. |
| CrylA(b) | Nilaparvata spp. |
| CrylA(b) | Pseudococcus spp. |
| CrylA(b) | Psylla spp. |
| CrylA(b) | Quadraspidiotus spp. |
| CrylA(b) | Schizaphis spp. |
| CrylA(b) | Trialeurodes spp. |
| CrylA(b) | Lyriomyza spp. |
| CrylA(b) | Oscinella spp. |
| CrylA(b) | Phorbia spp. |
| CrylA(b) | Frankliniella spp. |
| CrylA(b) | Thrips spp. |
| CrylA(b) | Scirtothrips aurantii |
| CrylA(b) | Aceria spp. |
| CrylA(b) | Aculus spp. |
| CrylA(b) | Brevipalpus spp. |
| CrylA(b) | Panonychus spp. |
| CrylA(b) | Phyllocoptruta spp. |
| CrylA(b) | Tetranychus spp. |
| CrylA(b) | Heterodera spp. |
| CrylA(b) | Meloidogyne spp. |
| CrylA(c) | Adoxophyes spp. |
| CrylA(c) | Agrotis spp. |
| CrylA(c) | Alabama argillaceae |
| CrylA(c) | Anticarsia gemmatalis |
| CrylA(c) | Chilo spp. |
| CrylA(c) | Ciysia ambiguella |
| CrylA(c) | Crocidolomia binotalis |
| CrylA(c) | Cydia spp. |
| CrylA(c) | Diparopsis castanea |
| CrylA(c) | Earias spp. |
| CrylA(c) | Ephestia spp. |
| CrylA(c) | Heliothis spp. |
| CrylA(c) | Hellula undalis |
| CrylA(c) | Keiferia lycopersicella |
| CrylA(c) | Leucoptera scitella |
| CrylA(c) | Lithocollethis spp. |
| CrylA(c) | Lobesia botrana |
| CrylA(c) | Ostrinia nubilalis |
| CrylA(c) | Pandemis spp. |
| CrylA(c) | Pectinophora gossypielia. |
| CrylA(c) | Phyllocnistis citrella |
| CrylA(c) | Pieris spp. |
| CrylA(c) | Plutella xyiostella |
| CrylA(c) | Scirpophaga spp. |
| CrylA(c) | Sesamia spp. |
| CrylA(c) | Sparganothis spp. |
| CrylA(c) | Spodoptera spp. |
| CrylA(c) | Tortrix spp. |
| CrylA(c) | Trichoplusia ni |
| CrylA(c) | Agriotes spp. |
| CrylA(c) | Anthonomus grandis |
| CrylA(c) | Curculio spp. |
| CrylA(c) | Diabrotica baiteata |
| CrylA(c) | Leptinotarsa spp. |
| CrylA(c) | Lissorhoptrus spp. |
| CrylA(c) | Otiorhynchus spp. |
| CrylA(c) | Aleurothrixus spp. |
| CrylA(c) | Aleyrodes spp. |
| CrylA(c) | Aonidiella spp. |
| CrylA(c) | Aphididae spp. |
| CrylA(c) | Aphis spp. |
| CrylA(c) | Bemisia tabaci |
| CrylA(c) | Empoasca spp. |
| CrylA(c) | Mycus spp. |
| CrylA(c) | Nephotettix spp. |
| CrylA(c) | Nilaparvata spp. |
| CrylA(c) | Pseudococcus spp. |
| CrylA(c) | Psylla spp. |
| CrylA(c) | Quadraspidiotus spp. |
| CrylA(c) | Schizaphis spp. |
| CrylA(c) | Trialeurodes spp. |
| CrylA(c) | Lyriomyza spp. |
| CrylA(c) | Oscinelia spp. |
| CrylA(c) | Phorbia spp. |
| CrylA(c) | Frankiiniella spp. |
| CrylA(c) | Thrips spp. |
| CrylA(c) | Scirtothrips aurantii |
| CrylA(c) | Aceria spp. |
| CrylA(c) | Aculus spp. |
| CrylA(c) | Brevipalpus spp. |
| CrylA(c) | Panonychus spp. |
| CrylA(c) | Phyllocoptruta spp. |
| CrylA(c) | Tetranychus spp. |
| CrylA(c) | Heterodera spp. |
| CrylA(c) | Meloidogyne spp. |
| CryllA | Adoxophyes spp. |
| CryllA | Agrotis spp. |
| CryllA | Alabama argillaceae |
| CryllA | Anticarsia gemmatalis |
| CryllA | Chilo spp. |
| CryllA | Clysia ambiguella |
| CryllA | Crocidolomia binotalis |
| CryllA | Cydia spp. |
| CryllA | Diparopsis castanea |
| CryllA | Earias spp. |
| CryllA | Ephestia spp. |
| CryllA | Heliothis spp. |
| CryllA | Hellula undalis |
| CryllA | Keiferia lycopersicella |
| CryllA | Leucoptera scitella |
| CryllA | Lithocoliethis spp. |
| CryllA | Lobesia botrana |
| CryllA | Ostrinia nubilalis |
| CryllA | Pandemis spp. |
| CryllA | Pectinophora gossyp. |
| CryllA | Phyllocnistis citrella |
| CryllA | Pieris spp. |
| CryllA | Plutella xylostella |
| CryllA | Scirpophaga spp. |
| CryllA | Sesamia spp. |
| CryllA | Sparganothis spp. |
| CryllA | Spodoptera spp. |
| CryllA | Tortrix spp. |
| CryllA | Trichoplusia ni |
| CryllA | Agriotes spp. |
| CryllA | Anthonomus grandis |
| CryllA | Curculio spp. |
| CryllA | Diabrotica balteata |
| CryllA | Leptinotarsa spp. |
| CryllA | Lissorhoptrus spp. |
| CryllA | Otiorhynchus spp. |
| CryllA | Aleurothrixus spp. |
| CryllA | Aleyrodes spp. |
| CryllA | Aonidiella spp. |
| CryllA | Aphididae spp. |
| CryllA | Aphis spp. |
| CryllA | Bemisia tabaci |
| CryllA | Empoasca spp. |
| CryllA | Mycus spp. |
| CryllA | Nephotettix spp. |
| CryllA | Nilaparvata spp. |
| CryllA | Pseudococcus spp. |
| CryllA | Psyila spp. |
| CryllA | Quadraspidiotus spp. |
| CryllA | Schizaphis spp. |
| CryllA | Trialeurodes spp. |
| CryllA | Lyriomyza spp. |
| CryllA | Oscinella spp. |
| CryllA | Phorbia spp. |
| CryllA | Frankliniella spp. |
| CryllA | Thrips spp. |
| CryllA | Scirtothrips aurantii |
| CryllA | Aceria spp. |
| CryllA | Acutus spp. |
| CryllA | Brevipalpus spp. |
| CryllA | Panonychus spp. |
| CryllA | Phyllocoptruta spp. |
| CryllA | Tetranychus spp. |
| CryllA | Heterodera spp. |
| CryllA | Meloidogyne spp. |
| CrylllA | Adoxophyes spp. |
| CrylllA | Agrotis spp. |
| CrylllA | Alabama argiiiaceae |
| CrylllA | Anticarsia gemmataiis |
| CrylllA | Chilo spp. |
| CrylllA | Ciysia ambiguelia |
| CrylllA | Crocodolomia binotalis |
| CrylllA | Cydia spp. |
| CrylllA | Diparopsis castanea |
| CrylllA | Earias spp. |
| CrylllA | Ephestia spp. |
| CrylllA | Heliothis spp. |
| CrylllA | Hellula undalis |
| CrylllA | Keiferia lycopersicella |
| CrylllA | Leucoptera scitella |
| CrylllA | Lithocollethis spp. |
| CrylllA | Lobesia botrana |
| CrylllA | Ostrinia nubilalis |
| CrylllA | Pandemis spp. |
| CrylllA | Pectinophora gossyp. |
| CrylllA | Phyllocnistis citrella |
| CrylllA | Pieris spp. |
| CrylllA | Plutella xylostella |
| CrylllA | Scirpophaga spp. |
| CrylllA | Sesamia spp. |
| CrylllA | Sparganothis spp. |
| CrylllA | Spodoptera spp. |
| CrylllA | Tortrix spp. |
| CrylllA | Trichoplusia ni |
| CrylllA | Agriotes spp. |
| CrylllA | Anthonomus grandis |
| CrylllA | Curculio spp. |
| CrylllA | Diabrotica balteata |
| CrylllA | Leptinotarsa spp. |
| CrylllA | Lissorhoptrus spp. |
| CrylllA | Otiorhynchus spp. |
| CrylllA | Aleurothrixus spp. |
| CrylllA | Aleyrodes spp. |
| CrylllA | Aonidiella spp. |
| CrylllA | Aphididae spp. |
| CrylllA | Aphis spp. |
| CrylllA | Bemisia tabaci |
| CrylllA | Empoasca spp. |
| CrylllA | Mycus spp. |
| CrylllA | Nephotettix spp. |
| CrylllA | Nilaparvata spp. |
| CrylllA | Pseudococcus spp. |
| CrylllA | Psylla spp. |
| CrylllA | Quadraspidiotus spp. |
| CrylllA | Schizaphis spp. |
| CrylllA | Trialeurodes spp. |
| CrylllA | Lyriomyza spp. |
| CrylllA | Oscinella spp. |
| CrylllA | Phorbia spp. |
| CrylllA | Frankliniella spp. |
| CrylllA | Thrips spp. |
| CrylllA | Scirtothrips aurantii |
| CrylllA | Aceria spp. |
| CrylllA | Aculus spp. |
| CrylllA | Brevipalpus spp. |
| CrylllA | Panonychus spp. |
| CrylllA | Phyllocoptruta spp. |
| CrylllA | Tetranychus spp. |
| CrylllA | Heterodera spp. |
| CrylllA | Meloidogyne spp. |
| CrylllB2 | Adoxophyes spp. |
| CrylllB2 | Agrotis spp. |
| CrylllB2 | Alabama argiilaceae |
| CrylllB2 | Anticarsia gemmatalis |
| CrylllB2 | Chilo spp. |
| CrylllB2 | Clysia ambiguella |
| CrylllB2 | Crocidolomia binotaiis |
| CrylllB2 | Cydia spp. |
| CrylllB2 | Diparopsis castanea |
| CrylllB2 | Earias spp. |
| CrylllB2 | Ephestia spp. |
| CrylllB2 | Heliothis spp. |
| CrylllB2 | Hellula undalis |
| CrylllB2 | Keiferia lycopersicella |
| CrylllB2 | Leucoptera sectelia |
| CrylllB2 | Lithocollethis spp. |
| CrylllB2 | Lobesia botrana |
| CrylllB2 | Ostrinia nubilalis |
| CrylllB2 | Pandemis spp. |
| CryllIB2 | Pectinophora gossyp. |
| CrylIIB2 | Phyllocnistis citrella |
| CrylllB2 | Pieris spp. |
| CrylllB2 | Plutella xylostella |
| CrylllB2 | Scirpophaga spp. |
| CrylllB2 | Sesamia spp. |
| CrylllB2 | Sparganothis spp. |
| CrylllB2 | Spodoptera spp. |
| CrylllB2 | Tortrix spp. |
| CrylllB2 | Trichoplusia ni |
| CrylllB2 | Agriotes spp. |
| CrylllB2 | Anthonomus grandis |
| CrylllB2 | Curculio spp. |
| CrylllB2 | Diabrotica balteata |
| CrylllB2 | Leptinotarsa spp. |
| CrylllB2 | Lissorhoptrus spp. |
| CrylllB2 | Otiorhynchus spp. |
| CrylllB2 | Aleurothrixus spp. |
| CrylllB2 | Aleyrodes spp. |
| CrylllB2 | Aonidiella spp. |
| CrylllB2 | Aphididae spp. |
| CrylllB2 | Aphis spp. |
| CrylllB2 | Bemisia tabaci |
| CrylllB2 | Empoasca spp. |
| CrylIIB2 | Mycus spp. |
| CrylllB2 | Nephotettix spp. |
| CrylllB2 | Nilaparvata spp. |
| CrylllB2 | Pseudococcus spp. |
| CrylllB2 | Psylla spp. |
| CrylllB2 | Quadraspidiotus spp. |
| CrylllB2 | Schizaphis spp. |
| CrylllB2 | Trialeurodes spp. |
| CrylllB2 | Lyriornyza spp. |
| CrylllB2 | Oscinella spp. |
| CrylllB2 | Phorbia spp. |
| CrylllB2 | Frankliniella spp. |
| CrylllB2 | Thrips spp. |
| CrylllB2 | Scirtothrips aurantii |
| CrylllB2 | Aceria spp. |
| CrylllB2 | Acutus spp. |
| CrylllB2 | Brevipalpus spp. |
| CrylllB2 | Panonychus spp. |
| CrylllB2 | Phyllocoptruta spp. |
| CrylllB2 | Tetranychus spp. |
| CrylllB2 | Heterodera spp. |
| CrylllB2 | Meloidogyne spp. |
| CytA | Adoxophyes spp. |
| CytA | Agrotis spp. |
| CytA | Alabama argiilaceae |
| CytA | Anticarsia gemmatalis |
| CytA | Chilo spp. |
| CytA | Clysia ambiguella |
| CytA | Crocidolomia binotaiis |
| CytA | Cydia spp. |
| CytA | Diparopsis castanea |
| CytA | Earias spp. |
| CytA | Ephestia spp. |
| CytA | Heliothis spp. |
| CytA | Hellula undalis |
| CytA | Keiferia lycopersicella |
| CytA | Leucoptera scitelia |
| CytA | Lithocollethis spp. |
| CytA | Lobesia botrana |
| CytA | Ostrinia nubilalis |
| CytA | Pandemis spp. |
| CytA | Pectinophora gossyp. |
| CytA | Phyllocnistis citrella |
| CytA | Pieris spp. |
| CytA | Plutella xylostella |
| CytA | Scirpophaga spp. |
| CytA | Sesamia spp. |
| CytA | Sparganothis spp. |
| CytA | Spodoptera spp. |
| CytA | Tortrix spp. |
| CytA | Trichoplusia ni |
| CytA | Agriotes spp. |
| CytA | Anthonomus grandis |
| CytA | Curculio spp. |
| CytA | Diabrotica balteata |
| CytA | Leptinotarsa spp. |
| CytA | Lissorhoptrus spp. |
| CytA | Otiorhynchus spp. |
| CytA | Aleurothrixus spp. |
| CytA | Aleyrodes spp. |
| CytA | Aonidielia spp. |
| CytA | Aphididae spp. |
| CytA | Aphis spp. |
| CytA | Bemisia tabaci |
| CytA | Empoasca spp. |
| CytA | Mycus spp. |
| CytA | Nephotettix spp. |
| CytA | Nilaparvata spp. |
| CytA | Pseudococcus spp. |
| CytA | Psylla spp. |
| CytA | Quadraspidiotus spp. |
| CytA | Schizaphis spp. |
| CytA | Trialeurodes spp. |
| CytA | Lyriomyza spp. |
| CytA | Oscinella spp. |
| CytA | Phorbia spp. |
| CytA | Frankliniella spp. |
| CytA | Thrips spp. |
| CytA | Scirtothrips aurantii |
| CytA | Aceria spp. |
| CytA | Acutus spp. |
| CytA | Brevipalpus spp. |
| CytA | Panonychus spp. |
| CytA | Phyllocoptruta spp. |
| CytA | Tetranychus spp. |
| CytA | Heterodera spp. |
| CytA | Meloidogyne spp. |
| VIP3 | Adoxophyes spp. |
| VIP3 | Agrotis spp. |
| VIP3 | Alabama argillaceae |
| VIP3 | Anticarsia gemmatalis |
| VIP3 | Chilo spp. |
| VIP3 | Clysia ambiguella |
| VIP3 | Crocidolomia binotalis |
| VIP3 | Cydia spp. |
| VIP3 | Diparopsis castanea |
| VIP3 | Earias spp. |
| VIP3 | Ephestia spp. |
| VIP3 | Heliothis spp. |
| VIP3 | Hellula undalis |
| VIP3 | Keiferia |
| | lycopersicella |
| VIP3 | Leucoptera scitella |
| VIP3 | Lithocollethis spp. |
| VIP3 | Lobesia botrana |
| VIP3 | Ostrinia nubilalis |
| VIP3 | Pandemis spp. |
| VIP3 | Pectinophora gossyp. |
| VIP3 | Phyllocnistis citrella |
| VIP3 | Pieris spp. |
| VIP3 | Piutella xylostella |
| VIP3 | Scirpophaga spp. |
| VIP3 | Sesamia spp. |
| VIP3 | Sparganothis spp. |
| VIP3 | Spodoptera spp. |
| VIP3 | Tortrix spp. |
| VIP3 | Trichoplusia ni |
| VIP3 | Agriotes spp. |
| VIP3 | Anthonomus grandis |
| VIP3 | Curculio spp. |
| VIP3 | Diabrotica balteata |
| VIP3 | Leptinotarsa spp. |
| VIP3 | Lissorhoptrus spp. |
| VIP3 | Otiorhynchus spp. |
| VIP3 | Aleurothrixus spp. |
| VIP3 | Aleyrodes spp. |
| VIP3 | Aonidiella spp. |
| VIP3 | Aphididae spp. |
| VIP3 | Aphis spp. |
| VIP3 | Bemisia tabaci |
| VIP3 | Empoasca spp. |
| VIP3 | Mycus spp. |
| VIP3 | Nephotettix spp. |
| VIP3 | Niiaparvata spp. |
| VIP3 | Pseudococcus spp. |
| VIP3 | Psylla spp. |
| VIP3 | Quadraspidiotus spp. |
| VIP3 | Schizaphis spp. |
| VIP3 | Trialeurodes spp. |
| VIP3 | Lyriomyza spp. |
| VIP3 | Oscinella spp. |
| VIP3 | Phorbia spp. |
| VIP3 | Frankliniella spp. |
| VIP3 | Thrips spp. |
| VIP3 | Scirtothrips aurantii |
| VIP3 | Aceria spp. |
| VIP3 | Acutus spp. |
| VIP3 | Brevipalpus spp. |
| VIP3 | Panonychus spp. |
| VIP3 | Phyllocoptruta spp. |
| VIP3 | Tetranychus spp. |
| VIP3 | Heterodera spp. |
| VIP3 | Meloidogyne spp. |
| GL | Adoxophyes spp. |
| GL | Agrotis spp. |
| GL | Alabama argillaceae |
| GL | Anticarsia gemmatalis |
| GL | Chilo spp. |
| GL | Clysia ambiguella |
| GL | Crocidolomia binotaiis |
| GL | Cydia spp. |
| GL | Diparopsis castanea |
| GL | Earias spp. |
| GL | Ephestia spp. |
| GL | Heliothis spp. |
| GL | Hellula undalis |
| GL | Keiferia lycopersicella |
| GL | Leucoptera scitella |
| GL | Lithocollethis spp. |
| GL | Lobesia botrana |
| GL | Ostrinia nubilalis |
| GL | Pandemis spp. |
| GL | Pectinophora gossyp. |
| GL | Phyliocnistis citrella |
| GL | Pieris spp. |
| GL | Plutella xylostella |
| GL | Scirpophaga spp. |
| GL | Sesamia spp. |
| GL | Sparganothis spp. |
| GL | Spodoptera spp. |
| GL | Tortrix spp. |
| GL | Trichoplusia ni |
| GL | Agriotes spp. |
| GL | Anthonomus grandis |
| GL | Curculio spp. |
| GL | Diabrotica balteata |
| GL | Leptinotarsa spp. |
| GL | Lissorhoptrus spp. |
| GL | Otiorhynchus spp. |
| GL | Aleurothrixus spp. |
| GL | Aleyrodes spp. |
| GL | Aonidiella spp. |
| GL | Aphididae spp. |
| GL | Aphis spp. |
| GL | Bemisia tabaci |
| GL | Empoasca spp. |
| GL | Mycus spp. |
| GL | Nephotettix spp. |
| GL | Nilaparvata spp. |
| GL | Pseudococcus spp. |
| GL | Psylia spp. |
| GL | Quadraspidiotus spp. |
| GL | Schizaphis spp. |
| GL | Trialeurodes spp. |
| GL | Lyriomyza spp. |
| GL | Oscinella spp. |
| GL | Phorbia spp. |
| GL | Frankliniella spp. |
| GL | Thrips spp. |
| GL | Scirtothrips aurantii |
| GL | Aceria spp. |
| GL | Aculus spp. |
| GL | Brevipalpus spp. |
| GL | Panonychus spp. |
| GL | Phyliocoptruta spp. |
| GL | Tetranychus spp. |
| GL | Heterodera spp. |
| GL | Meioidogyne spp. |
| PL | Adoxophyesspp. |
| PL | Agrotis spp. |
| PL | Alabama argillaceae |
| PL | Anticarsia gemmatalis |
| PL | Chilo spp. |
| PL | Clysia ambiguella |
| PL | Crocidolomia binotalis |
| PL | Cydia spp. |
| PL | Diparopsis castanea |
| PL | Earias spp. |
| PL | Ephestia spp. |
| PL | Heliothis spp. |
| PL | Hellula undaiis |
| PL | Keiferia lycopersicella |
| PL | Leucoptera scitella |
| PL | Lithocollethis spp. |
| PL | Lobesia botrana |
| PL | Ostrinia nubilalis |
| PL | Pandemis spp. |
| PL | Pectinophora gossyp. |
| PL | Phyllocnistis citrella |
| PL | Pieris spp. |
| PL | Plutella xylostella |
| PL | Scirpophaga spp. |
| PL | Sesamia spp. |
| PL | Sparganothis spp. |
| PL | Spodoptera spp. |
| PL | Tortrix spp. |
| PL | Trichoplusia ni |
| PL | Agriotes spp. |
| PL | Anthonomus grandis |
| PL | Curculio spp. |
| PL | Diabrotica balteata |
| PL | Leptinotarsa spp. |
| PL | Lissorhoptrus spp. |
| PL | Otiorhynchus spp. |
| PL | Aleurothrixus spp. |
| PL | Aleyrodes spp. |
| PL | Aonidiella spp. |
| PL | Aphididae spp. |
| PL | Aphis spp. |
| PL | Bemisia tabaci |
| PL | Empoasca spp. |
| PL | Mycus spp. |
| PL | Nephotettix spp. |
| PL | Nilaparvata spp. |
| PL | Pseudococcus spp. |
| PL | Psylla spp. |
| PL | Quadraspidiotus spp. |
| PL | Schizaphis spp. |
| PL | Trialeurodes spp. |
| PL | Lyriomyza spp. |
| PL | Oscinella spp. |
| PL | Phorbia spp. |
| PL | Franklinieila spp. |
| PL | Thrips spp. |
| PL | Scirtothrips auranii |
| PL | Aceria spp. |
| PL | Aculus spp. |
| PL | Brevipalpus spp. |
| PL | Panonychus spp. |
| PL | Phyllocoptruta spp. |
| PL | Tetranychus spp. |
| PL | Heterodera spp. |
| PL | Meloidogyne spp. |
| XN | Adoxophyes spp. |
| XN | Agrotis spp. |
| XN | Alabama argiliaceae |
| XN | Anticarsia gemmatalis |
| XN | Chilo spp. |
| XN | Clysia ambiguella |
| XN | Crocidolomia binotalis |
| XN | Cydia spp. |
| XN | Diparopsis castanea |
| XN | Earias spp. |
| XN | Ephestia spp. |
| XN | Heliothis spp. |
| XN | Helluia undaiis |
| XN | Keiferia lycopersicella |
| XN | Leucoptera scitella |
| XN | Lithocollethis spp. |
| XN | Lobesia botrana |
| XN | Ostrinia nubilalis |
| XN | Pandemis spp. |
| XN | Pectinophora gossyp. |
| XN | Phyllocnistis citrella |
| XN | Pieris spp. |
| XN | Plutella xylostella |
| XN | Scirpophaga spp. |
| XN | Sesamia spp. |
| XN | Sparganothis spp. |
| XN | Spodoptera spp. |
| XN | Tortrix spp. |
| XN | Trichoplusia ni |
| XN | Agriotes spp. |
| XN | Anthonomus grandis |
| XN | Curculio spp. |
| XN | Diabrotica balteata |
| XN | Leptinotarsa spp. |
| XN | Lissorhoptrus spp. |
| XN | Otiorhynchus spp. |
| XN | Aleurothrixus spp. |
| XN | Aleyrodes spp. |
| XN | Aonidiella spp. |
| XN | Aphididae spp. |
| XN | Aphis spp. |
| XN | Bemisia tabaci |
| XN | Empoasca spp. |
| XN | Mycus spp. |
| XN | Nephotettix spp. |
| XN | Nilaparvata spp. |
| XN | Pseudococcus spp. |
| XN | Psylla spp. |
| XN | Quadraspidiotus spp. |
| XN | Schizaphis spp. |
| XN | Trialeurodes spp. |
| XN | Lyriomyza spp. |
| XN | Oscinella spp. |
| XN | Phorbia spp. |
| XN | Frankliniella spp. |
| XN | Thrips spp. |
| XN | Scirtothrips aurantii |
| XN | Aceria spp. |
| XN | Aculus spp. |
| XN | Brevipalpus spp. |
| XN | Panonychus spp. |
| XN | Phyllocoptruta spp. |
| XN | Tetranychus spp. |
| XN | Heterodera spp. |
| XN | Meloidogyne spp. |
| Plnh. | Adoxophyes spp. |
| Plnh. | Agrotis spp. |
| Plnh. | Alabama argiliaceae |
| Plnh. | Anticarsia gemmatalis |
| Plnh. | Chilo spp. |
| Plnh. | Clysia ambiguella |
| Plnh. | Crocidolomia |
| | binotalis |
| Plnh. | Cydia spp. |
| Plnh. | Diparopsis castanea |
| Plnh. | Earias spp. |
| Plnh. | Ephestia spp. |
| Plnh. | Heliothis spp. |
| Plnh. | Heliuia undalis |
| Plnh. | Keiferia lycopersicella |
| Plnh. | Leucoptera scitella |
| Plnh. | Lithocollethis spp. |
| Plnh. | Lobesia botrana |
| Plnh. | Ostrinia nubilalis |
| Plnh. | Pandemis spp. |
| Plnh. | Pectinophora gossyp. |
| Plnh. | Phyllocnistis citrelia |
| Plnh. | Pieris spp. |
| Plnh. | Plutella xylostella |
| Plnh. | Scirpophaga spp. |
| Plnh. | Sesamia spp. |
| Plnh. | Sparganothis spp. |
| Plnh. | Spodoptera spp. |
| Plnh. | Tortrix spp. |
| Plnh. | Trichoplusia ni |
| Plnh. | Agriotes spp. |
| Plnh. | Anthonomus grandis |
| Plnh. | Curculio spp. |
| Plnh. | Diabrotica balteata |
| Plnh. | Leptinotarsa spp. |
| Plnh. | Lissorhoptrus spp. |
| Plnh. | Otiorhynchus spp. |
| Plnh. | Aleurothrixus spp. |
| Plnh. | Aleyrodes spp. |
| Plnh. | Aonidiella spp. |
| Plnh. | Aphididae spp. |
| Plnh. | Aphis spp. |
| Plnh. | Bemisia tabaci |
| Plnh. | Empoasca spp. |
| Plnh. | Mycus spp. |
| Plnh. | Nephotettix spp. |
| Plnh. | Nilaparvata spp. |
| Plnh. | Pseudococcus spp. |
| Plnh. | Psylla spp. |
| Plnh. | Quadraspidiotus spp. |
| Plnh. | Schizaphis spp. |
| Plnh. | Trialeurodes spp. |
| Plnh. | Lyriomyza spp. |
| Plnh. | Oscinella spp. |
| Plnh. | Phorbia spp. |
| Plnh. | Frankliniella spp. |
| Plnh. | Thrips spp. |
| Plnh. | Scirtothrips aurantii |
| Plnh. | Aceria spp. |
| Plnh. | Acutus spp. |
| Plnh. | Brevipalpus spp. |
| Plnh. | Panonychus spp. |
| Plnh. | Phyllocoptruta spp. |
| Plnh. | Tetranychus spp. |
| Plnh. | Heterodera spp. |
| Plnh. | Meloidogyne spp. |
| PLec. | Adoxophyes spp. |
| PLec. | Agrotis spp. |
| PLec. | Alabama argillaceae |
| PLec. | Anticarsia gemmatalis |
| PLec. | Chilo spp. |
| PLec. | Clysia ambiguella |
| PLec. | Crocidolomia binotalis |
| PLec. | Cydia spp. |
| PLec. | Diparopsis castanea |
| PLec. | Earias spp. |
| PLec. | Ephestia spp. |
| PLec. | Heliothis spp. |
| PLec. | Hellula undalis |
| PLec. | Keiferia lycopersicella |
| PLec. | Leucoptera scitella |
| PLec. | Lithocollethis spp. |
| PLec. | Lobesia botrana |
| PLec. | Ostrinia nubilalis |
| PLec. | Pandemis spp. |
| PLec. | Pectinophora gossyp. |
| PLec. | Phyllocnistis citrella |
| PLec. | Pieris spp. |
| PLec. | Plutella xylostella |
| PLec. | Scirpophaga spp. |
| PLec. | Sesamia spp. |
| PLec. | Sparganothis spp. |
| PLec. | Spodoptera spp. |
| PLec. | Tortrix spp. |
| PLec. | Trichoplusia ni |
| PLec. | Agriotes spp. |
| PLec. | Anthonomus grandis |
| PLec. | Curculio spp. |
| PLec. | Diabrotica balteata |
| PLec. | Leptinotarsa spp. |
| PLec. | Lissorhoptrus spp. |
| PLec. | Otiorhynchus spp. |
| PLec. | Aleurothrixus spp. |
| PLec. | Aleyrodes spp. |
| PLec. | Aonidiella spp. |
| PLec. | Aphididae spp. |
| PLec. | Aphis spp. |
| PLec. | Bemisia tabaci |
| PLec. | Empoasca spp. |
| PLec. | Mycus spp. |
| PLec. | Nephotettix spp. |
| PLec. | Nilaparvata spp. |
| PLec. | Pseudococcus spp. |
| PLec. | Psylia spp. |
| PLec. | Quadraspidiotus spp. |
| PLec. | Schizaphis spp. |
| PLec. | Trialeurodes spp. |
| PLec. | Lyriomyza spp. |
| PLec. | Oscinella spp. |
| PLec. | Phorbia spp. |
| PLec. | Frankliniella spp. |
| PLec. | Thrips spp. |
| PLec. | Scirtothnps aurantii |
| PLec. | Aceria spp. |
| PLec. | Aculus spp. |
| PLec. | Brevipalpus spp. |
| PLec. | Panonychus spp. |
| PLec. | Phyllocoptruta spp. |
| PLec. | Tetranychus spp. |
| PLec. | Heterodera spp. |
| PLec. | Meloidogyne spp. |
| Aggl. | Adoxophyes spp. |
| Aggl. | Agrotis spp. |
| Aggl. | Alabama |
| | argillaceae |
| Aggl. | Anticarsia gemmatalis |
| Aggl. | Chilo spp. |
| Aggl. | Clysia ambiguella |
| Aggl. | Crocidolomia |
| | binotalis |
| Aggl. | Cydia spp. |
| Aggl. | Diparopsis |
| | castanea |
| Aggl. | Earias spp. |
| Aggl. | Ephestia spp. |
| Aggl. | Heliothis spp. |
| Aggl. | Hellula undalis |
| Aggl. | Keiferia |
| | lycopersicella |
| Aggl. | Leucoptera scitella |
| Aggl. | Lithocollethis spp. |
| Aggl. | Lobesia botrana |
| Aggl. | Ostrinia nubilalis |
| Aggl. | Pandemis spp. |
| Aggl. | Pectinophora |
| | gossyp. |
| Aggl. | Phyllocnistis citrella |
| Aggl. | Pieris spp. |
| Aggl. | Plutiia xylostella |
| Aggl. | Scirpophaga spp. |
| Aggl. | Sesamia spp. |
| Aggl. | Sparganothis spp. |
| Aggl. | Spodoptera spp. |
| Aggl. | Tortrix spp. |
| Aggl. | Trichoplusia ni |
| Aggl. | Agriotes spp. |
| Aggl. | Anthonomus grandis |
| Aggl. | Curculio spp. |
| Aggl. | Diabrotica balteata |
| Aggl. | Leptinotarsa spp. |
| Aggl. | Lissorhoptrus spp. |
| Aggl. | Otiorhynchus spp. |
| Aggl. | Aleurothrixus spp. |
| Aggl. | Aleyrodes spp. |
| Aggl. | Aonidiella spp. |
| Aggl. | Aphididae spp. |
| Aggl. | Aphis spp. |
| Aggl. | Bemisia tabaci |
| Aggl. | Empoasca spp. |
| Aggl. | Mycus spp. |
| Aggl. | Nephotettix spp. |
| Aggl. | Nilaparvata spp. |
| Aggl. | Pseudococcus spp. |
| Aggl. | Psylla spp. |
| Aggl. | Quadraspidiotus spp. |
| Aggl. | Schizaphis spp. |
| Aggl. | Trialeurodes spp. |
| Aggl. | Lyriomyza spp. |
| Aggl. | Oscinella spp. |
| Aggl. | Phorbia spp. |
| Aggl. | Frankliniella spp. |
| Aggl. | Thrips spp. |
| Aggl. | Scirtothrips auranti |
| Aggl. | Aceria spp. |
| Aggl. | Aculus spp. |
| Aggl. | Brevipalpus spp. |
| Aggl. | Panonychus spp. |
| Aggl. | Phyllocoptruta spp |
| Aggl. | Tetranychus spp. |
| Aggl. | Heterodera spp. |
| Aggl. | Meloidogyne spp. |
| CO | Adoxophyes spp. |
| CO | Agrotis spp. |
| CO | Alabama argiliaceae |
| CO | Anticarsia gemmatalis |
| CO | Chilo spp. |
| CO | Ciysia ambiguella |
| CO | Crocidolomia binotalis |
| CO | Cydia spp. |
| CO | Diparopsis castanea |
| CO | Earias spp. |
| CO | Ephestia spp. |
| CO | Heliothis spp. |
| CO | Hellula undalis |
| CO | Keiferia lycopersicella |
| CO | Leucoptera scitella |
| CO | Lithocollethis spp. |
| CO | Lobesia botrana |
| CO | Ostrinia nubilalis |
| CO | Pandemis spp. |
| CO | Pectinophora gossyp. |
| CO | Phyllocnistis citrella |
| CO | Pieris spp. |
| CO | Plutella xylostella |
| CO | Scirpophaga spp. |
| CO | Sesamia spp. |
| CO | Sparganothis spp. |
| CO | Spodoptera spp. |
| CO | Tortrix spp. |
| CO | Trichoplusia ni |
| CO | Agriotes spp. |
| CO | Anthonomus grandis |
| CO | Curculio spp. |
| CO | Diabrotica balteata |
| CO | Leptinotarsa spp. |
| CO | Lissorhoptrus spp. |
| CO | Otiorhynchus spp. |
| CO | Aleurothrixus spp. |
| CO | Aleyrodes spp. |
| CO | Aonidielia spp. |
| CO | Aphididae spp. |
| CO | Aphis spp. |
| CO | Bemisia tabaci |
| CO | Empoasca spp. |
| CO | Mycus spp. |
| CO | Nephotettix spp. |
| CO | Nilaparvata spp. |
| CO | Pseudococcus spp. |
| CO | Psylla spp. |
| CO | Quadraspidiotus spp. |
| CO | Schizaphis spp. |
| CO | Trialeurodes spp. |
| CO | Lyriomyza spp. |
| CO | Oscinella spp. |
| CO | Phorbia spp. |
| CO | Frankliniella spp. |
| CO | Thrips spp. |
| CO | Scirtothrips aurantii |
| CO | Aceria spp. |
| CO | Acutus spp. |
| CO | Brevipalpus spp. |
| CO | Panonychus spp. |
| CO | Phyllocoptruta spp. |
| CO | Tetranychus spp. |
| CO | Heterodera spp. |
| CO | Meloidogyne spp. |
| CH | Adoxophyes spp. |
| CH | Agrotis spp. |
| CH | Alabama argillaceae |
| CH | Anticarsia |
| | gemmatalis |
| CH | Chilo spp. |
| CH | Clysia ambiguella |
| CH | Crocidolomia binotalis |
| CH | Cydia spp. |
| CH | Diparopsis castanea |
| CH | Earias spp. |
| CH | Ephestia spp. |
| CH | Heliothis spp. |
| CH | Hellula undalis |
| CH | Keiferia lycopersicella |
| CH | Leucoptera scitella |
| CH | Lithocollethis spp. |
| CH | Lobesia botrana |
| CH | Ostrinia nubilalis |
| CH | Pandemis spp. |
| CH | Pectinophora gossyp. |
| CH | Phyllocnistis citrella |
| CH | Pieris spp. |
| CH | Plutella xylostella |
| CH | Scirpophaga spp. |
| CH | Sesamia spp. |
| CH | Sparganothis spp. |
| CH | Spodoptera spp. |
| CH | Tortrix spp. |
| CH | Trichoplusia ni |
| CH | Agriotes spp. |
| CH | Anthonomus |
| | grandis |
| CH | Curculio spp. |
| CH | Diabrotica balteata |
| CH | Leptinotarsa spp. |
| CH | Lissorhoptrus spp. |
| CH | Otiorhynohus spp. |
| CH | Aleurothrixus spp. |
| CH | Aleyrodes spp. |
| CH | Aonidiella spp. |
| CH | Aphididae spp. |
| CH | Aphis spp. |
| CH | Bemisia tabaci |
| CH | Empoasca spp. |
| CH | Mycus spp. |
| CH | Nephotettix spp. |
| CH | Nilaparvata spp. |
| CH | Pseudococcus spp. |
| CH | Psylla spp. |
| CH | Quadraspidiotus spp. |
| CH | Schizaphis spp. |
| CH | Trialeurodes spp. |
| CH | Lyriomyza spp. |
| CH | Oscinella spp. |
| CH | Phorbia spp. |
| CH | Frankliniella spp. |
| CH | Thrips spp. |
| CH | Scirtothrips aurantii |
| CH | Aceria spp. |
| CH | Aculus spp. |
| CH | Brevipalpus spp. |
| CH | Panonychus spp. |
| CH | Phyllocoptruta spp. |
| CH | Tetranychus spp. |
| CH | Heterodera spp. |
| CH | Meloidogyne spp. |
| SS | Adoxophyes spp. |
| SS | Agrotis spp. |
| SS | Alabama argillaceae |
| SS | Anticarsia gemmatalis |
| SS | Chilo spp. |
| SS | Clysia ambiguella |
| SS | Crocidolomia binotalis |
| SS | Cydia spp. |
| SS | Diparopsis castanea |
| SS | Earias spp. |
| SS | Ephestia spp. |
| SS | Heliothis spp. |
| SS | Hellula undalis |
| SS | Keiferia lycopersicella |
| SS | Leucoptera scitella |
| SS | Lithocollethis spp. |
| SS | Lobesia botrana |
| SS | Ostrinia nubilalis |
| SS | Pandemis spp. |
| SS | Pectinophora gossyp. |
| SS | Phyllocnistis citrella |
| SS | Pieris spp. |
| SS | Plutella xylostella |
| SS | Scirpophaga spp. |
| SS | Sesamia spp. |
| SS | Sparganothis spp. |
| SS | Spodoptera spp. |
| SS | Tortrix spp. |
| SS | Trichopiusia ni |
| SS | Agriotes spp. |
| SS | Anthonomus grandis |
| SS | Curculio spp. |
| SS | Diabrotica balteata |
| SS | Leptinotarsa spp. |
| SS | Lissorhoptrus spp. |
| SS | Otiorhynchus spp. |
| SS | Aleurothrixus spp. |
| SS | Aleyrodes spp. |
| SS | Aonidielia spp. |
| SS | Aphididae spp. |
| SS | Aphis spp. |
| SS | Bemisia tabaci |
| SS | Empoasca spp. |
| SS | Mycus spp. |
| SS | Nephotettix spp. |
| SS | Nilaparvata spp. |
| SS | Pseudococcus spp. |
| SS | Psylla spp. |
| SS | Quadraspidiotus spp. |
| SS | Schizaphis spp. |
| SS | Trialeurodes spp. |
| SS | Lyriomyza spp. |
| SS | Oscinella spp. |
| SS | Phorbia spp. |
| SS | Frankliniella spp. |
| SS | Thrips spp. |
| SS | Scirtothrips aurantii |
| SS | Aceria spp. |
| SS | Aculus spp. |
| SS | Brevipalpus spp. |
| SS | Panonychus spp. |
| SS | Phyllocoptruta spp. |
| SS | Tetranychus spp. |
| SS | Heterodera spp. |
| SS | Meloidogyne spp. |
| HO | Adoxophyes spp. |
| HO | Agrotis spp. |
| HO | Alabama argillaceae |
| HO | Anticarsia gemmatalis |
| HO | Chilo spp. |
| HO | Clysia ambiguella |
| HO | Crocidolomia binotalis |
| HO | Cydia spp. |
| HO | Diparopsis castanea |
| HO | Earias spp. |
| HO | Ephestia spp. |
| HO | Heliothis spp. |
| HO | Hellula undalis |
| HO | Keiferia lycopersicella |
| HO | Leucoptera scitella |
| HO | Lithocollethis spp. |
| HO | Lobesia botrana |
| HO | Ostrinia nubilalis |
| HO | Pandemis spp. |
| HO | Pectinophora gossypiella |
| HO | Phyllocnistis citrella |
| HO | Pieris spp. |
| HO | Plutella xylostella |
| HO | Scirpophaga spp. |
| HO | Sesamia spp. |
| HO | Sparganothis spp. |
| HO | Spodoptera spp. |
| HO | Tortrix spp. |
| HO | Trichoplusia ni |
| HO | Agriotes spp. |
| HO | Anthonomus grandis |
| HO | Curculio spp. |
| HO | Diabrotica balteata |
| HO | Leptinotarsa spp. |
| HO | Lissorhoptrus spp. |
| HO | Otiorhynchus spp. |
| HO | Aleurothrixus spp. |
| HO | Aleyrodes spp. |
| HO | Aonidiella spp. |
| HO | Aphididae spp. |
| HO | Aphis spp. |
| HO | Bemisia tabaci |
| HO | Empoasca spp. |
| HO | Mycus spp. |
| HO | Nephotettix spp. |
| HO | Nilaparvata spp. |
| HO | Pseudococcus spp. |
| HO | Psylla spp. |
| HO | Quadraspidiotus spp. |
| HO | Schizaphis spp. |
| HO | Trialeurodes spp. |
| HO | Lyriomyza spp. |
| HO | Oscinella spp. |
| HO | Phorbia spp. |
| HO | Frankliniella spp. |
| HO | Thrips spp. |
| HO | Scirtothrips aurantii |
| HO | Aceria spp. |
| HO | Acutus spp. |
| HO | Brevipalpus spp. |
| HO | Panonychus spp. |
| HO | Phyllocoptruta spp. |
| HO | Tetranychus spp. |
| HO | Heterodera spp. |
| HO | Meloidogyne spp. |

**Tabelle 3**

| Abkürzungen: | | |
|---|---|---|
| Acetyl-CoA-Carboxylase: ACCase | | |
| Acetolactatsynthase: ALS | | |
| Hydroxyphenylpyruvat-Dioxygenase: HPPD | | |
| Hemmung der Proteinsynthese: IPS | | |
| Hormonimitation: HO | | |
| Glutaminsynthetase: GS | | |
| Protoporphyrinogenoxidase: PROTOX | | |
| 5-Enolpyruvyl-3-Phosphoshikimat-Synthase: EPSPS | | |
| Prinzip | Toleranz gegenüber | Pflanze |
| ALS | Sulfonylharnstoffverbin-dungen usw.*** | Baumwolle |
| ALS | Sulfonylharnstoffverbin-dungen usw. *** | Reis |
| ALS | Sulfonylharnstoffverbin-dungen usw. *** | Brassica |
| ALS | Sulfonylharnstoffverbin-dungen usw. *** | Kartoffeln |
| ALS | Sulfonylharnstoffverbin-dungen usw. *** | Tomaten |
| ALS | Sulfonylharnstoffverbin-dungen usw. *** | Kürbis |
| ALS | Sulfonylharnstoffverbin-dungen usw. *** | Sojabohnen |
| ALS | Sulfonylharnstoffverbin-dungen usw. *** | Mais |
| ALS | Sulfonylharnstoffverbin-dungen usw. *** | Weizen |
| ALS | Sulfonylharnstoffver-bindungen usw. *** | Kernobst |
| ALS | Sulfonylharnstoffver-bindungen usw. *** | Steinobst |
| ALS | Sulfonylharnstoffver-bindungen usw. *** | Zitrus |
| ACCase | +++ | Baumwolle |
| ACCase | +++ | Reis |
| ACCase | +++ | Brassica |
| ACCase | +++ | Kartoffel |
| ACCase | +++ | Tomaten |
| ACCase | +++ | Kürbis |
| ACCase | +++ | Sojabohnen |
| ACCase | +++ | Mais |
| ACCase | +++ | Weizen |
| ACCase | +++ | Kernobst |
| ACCase | +++ | Steinobst |
| ACCase | +++ | Zitrus |
| HPPD | Isoxaflutol, Mesotrion Isoxachlotol, Sulcotrion, | Baumwolle |
| HPPD | Isoxaflutol, Mesotrion Isoxachlotol, Sulcotrion, | Reis |
| HPPD | Isoxaflutol, Mesotrion Isoxachlotol, Sulcotrion, | Brassica |
| HPPD | Isoxaflutol, Mesotrion Isoxachlotol, Sulcotrion, | Kartoffeln |
| HPPD | Isoxaflutol, Mesotrion Isoxachlotol, Sulcotrion, | Tomaten |
| HPPD | Isoxaflutol, Mesotrion Isoxachlotol, Sulcotrion, | Kürbis |
| HPPD | Isoxaflutol, Mesotrion Isoxachlotol, Sulcotrion, | Sojabohnen |
| HPPD | Isoxaflutol, Mesotrion Isoxachlotol, Sulcotrion, | Mais |
| HPPD | Isoxaflutol, Mesotrion Isoxachlotol, Sulcotrion, | Weizen |
| HPPD | Isoxaflutol, Mesotrion Isoxachlotol, Sulcotrion, | Kernobst |
| HPPD | Isoxaflutol, Mesotrion Isoxachlotol, Sulcotrion, | Steinobst |
| HPPD | Isoxaflutol, Isoxachlotol, Sulcotrion, Mesotrion | Zitrus |
| Nitrilase | Bromoxynil, Loxynil | Baumwolle |
| Nitrilase | Bromoxynil, Loxynil | Reis |
| Nitrilase | Bromoxynil, Loxynil | Brassica |
| Nitrilase | Bromoxynil, Loxynil | Kartoffeln |
| Nitrilase | Bromoxynil, Loxynil | Tomaten |
| Nitrilase | Bromoxynil, Loxynil | Kürbis |
| Nitrilase | Bromoxynil, Loxynil | Sojabohnen |
| Nitrilase | Bromoxynil, Loxynil | Mais |
| Nitrilase | Bromoxynil, Loxynil | Weizen |
| Nitrilase | Bromoxynil, Loxynil | Kernobst |
| Nitrilase | Bromoxynil, Loxynil | Steinobst |
| Nitrilase | Bromoxynil, Loxynil | Zitrus |
| IPS | Chloroactanilide &&& | Baumwolle |
| IPS | Chloroactanilide &&& | Reis |
| IPS | Chloroactanilid &&& | Brassica |
| IPS | Chloroactanilide &&& | Kartoffeln |
| IPS | Chloroactanilide &&& | Tomaten |
| IPS | Chloroactanilide &&& | Kürbis |
| IPS | Chloroactanilide &&& | Sojabohnen |
| IPS | Chloroactanilide &&& | Mais |
| IPS | Chloroactanilide &&& | Weizen |
| IPS | Chloroactanilide &&& | Kernobst |
| IPS | Chloroactanilide &&& | Steinobst |
| IPS | Chloroactanilide &&& | Zitrus |
| HOM | 2,4-D, Mecoprop-P | Baumwolle |
| HOM | 2,4-D, Mecoprop-P | Reis |
| HOM | 2,4-D, Mecoprop-P | Brassica |
| HOM | 2,4-D, Mecoprop-P | Kartoffeln |
| HOM | 2,4-D, Mecoprop-P | Tomaten |
| HOM | 2,4-D, Mecoprop-P | Kürbis |
| HOM | 2,4-D, Mecoprop-P | Sojabohnen |
| HOM | 2,4-D, Mecoprop-P | Mais |
| HOM | 2,4-D, Mecoprop-P | Weizen |
| HOM | 2,4-D, Mecoprop-P | Kernobst |
| HOM | 2,4-D, Mecoprop-P | Steinobst |
| HOM | 2,4-D, Mecoprop-P | Zitrus |
| PROTOX | Protox-Inhibitoren /// | Baumwolle |
| PROTOX | Protox-Inhibitoren /// | Reis |
| PROTOX | Protox-Inhibitoren /// | Brassica |
| PROTOX | Protox-Inhibitoren /// | Kartoffeln |
| PROTOX | Protox-Inhibitoren /// | Tomaten |
| PROTOX | Protox-Inhibitoren /// | Kürbis |
| PROTOX | Protox-Inhibitoren /// | Sojabohnen |
| PROTOX | Protox-Inhibitoren /// | Mais |
| PROTOX | Protox-Inhibitoren /// | Weizen |
| PROTOX | Protox-Inhibitoren /// | Kernobst |
| PROTOX | Protox-Inhibitoren /// | Steinobst |
| PROTOX | Protox-Inhibitoren /// | Zitrus |
| EPSPS | Glyphosat und/oder Sulphosat | Baumwolle |
| EPSPS | Glyphosat und/oder Sulphosat | Reis |
| EPSPS | Glyphosat und/oder Sulphosat | Brassica |
| EPSPS | Glyphosat und/oder Sulphosat | Kartoffeln |
| EPSPS | Glyphosat und/oder Sulphosat | Tomaten |
| EPSPS | Glyphosat und/oder Sulphosat | Kürbis |
| EPSPS | Glyphosat und/oder Sulphosat | Sojabohnen |
| EPSPS | Glyphosat und/oder Sulphosat | Mais |
| EPSPS | Glyphosat und/oder Sulphosat | Weizen |
| EPSPS | Glyphosat und/oder Sulphosat | Kernobst |
| EPSPS | Glyphosat und/oder Sulphosat | Steinobst |
| EPSPS | Glyphosat und/oder Sulphosat | Zitrus |
| GS | Gluphosinat und/oder Sulphosat | Baumwolle |
| GS | Gluphosinat und/oder Sulphosat | Reis |
| GS | Gluphosinat und/oder Sulphosat | Brassica |
| GS | Gluphosinat und/oder Sulphosat | Kartoffeln |
| GS | Gluphosinat und/oder Sulphosat | Tomaten |
| GS | Gluphosinat und/oder Sulphosat | Kürbis |
| GS | Gluphosinat und/oder Sulphosat | Sojabohnen |
| GS | Gluphosinat und/oder Sulphosat | Mais |
| GS | Gluphosinat und/oder Sulphosat | Weizen |
| GS | Gluphosinat und/oder Sulphosat | Kernobst |
| GS | Gluphosinat und/oder Sulphosat | Stein-obst |
| GS | Gluphosinat und/oder Sulphosat | Zitrus |

| | | |
|---|---|---|
| *** einbezogen sind Sulfonylharnstoffverbindungen, Imidazolinone, Triazolpyrimidine, Dimethoxypyrimidine und N-Acylsulfonamide: | | |

Sulfonylharnstoffverbindungen wie Chlorsulfuron, Chlorimuron, Ethamethsulfuron, Metsulfuron, Primisulfuron, Prosulfuron, Triasulfuron, Cinosulfuron, Trifusulfuron, Oxasulfuron, Bensulfuron, Tribenuron, ACC 322140, Fluzasulfuron, Ethoxysulfuron, Fluzasdulfuron, Nicosulfuron, Rimsulfuron, Thifensulfuron, Pyrazosulfuron, Clopyrasulfuron, NC 330, Azimsulfuron, Imazosulfuron, Sulfosulfuron, Amidosulfuron, Flupyrsulfuron, CGA 362622

Imidazolinone wie Imazamethabenz, Imazaquin, Imazamethypyr, Imazethapyr, Imazapyr und Imazamox;

Triazolpyrimidine wie DE 511, Flumetsulam und Chloransulam;

Dimethoxypyrimidine wie etwa Pyrithiobac, Pyriminobac, Bispyribac und Pyribenzoxim.

+++ Tolerant gegenüber Diclofop-methyl, Fluazifop-P-butyl, Haloxyfop-P-methyl, Haloxyfop-P-ethyl, Quizalafop-P-ethyl, Clodinafop-propargyl, Fenoxaprop-ethyl, Tepraloxydim, Alloxydim, Sethoxydim, Cycloxydim, Cloproxydim, Tralkoxydim, Butoxydim, Caloxydim, Clefoxydim, Clethodim.

&&& Chloroacetanilide wie etwa Alachlor, Acetochlor, Dimethenamid

/// Protox-Inhibitoren: Zum Beispiel Diphenyether wie etwa Acifluorfen, Aclonifen, Bifenox, Chlornitrofen, Ethoxyfen, Fluoroglycofen, Fomesafen, Lactofen, Oxyfluorfen; Imide wie etwa Azafenidin, Carfentrazone-ethyl, Cinidon-ethyl, Flumiclorac-pentyl, Flumioxazin, Fluthiacetmethyl, Oxadiargyl, Oxadiazon, Pentoxazone, Sulfentrazone, Imide und andere Verbindungen wie etwa Flumipropyn, Flupropacil, Nipyraclofen and Thidiazimin; sowie Fluazola und Pyraflufenethyl.

**Tabelle 4**

| Liste von Beispielen transgener Pflanzen mit modifizierten Eigenschaften: | |
|---|---|
| Transgene Pflanzen | Transgen modifizierte Eigenschaften |
| Dianthus caryophyllus (Nelke) Linie 66 [Florigene Pty. Ltd.] | Verlängerte Haltbarkeit durch reduzierte Ethylen-Akkumulation aufgrund der Expression der ACC Synthase; Sulfonylharnstoff-Herbizid Toleranz |
| | |
| Dianthus caryophyllus (Nelke) Linien 4, 11, 15, 16 [Florigene Pty. Ltd.] | Modifizierte Blütenfarbe; Sulfonylharnstoff-Herbizid Toleranz |
| | |
| Dianthus caryophyllus (Nelke) Linien 959A, 988A, 1226A, 1351A, 1363A, 1400A [Florigene Pty. Ltd.] | Modifizierte Blütenfarbe; Sulfonylharnstoff-Herbizid Toleranz |
| | |
| Brassica napus (Argentinischer Raps) Linien 23-18-17, 23-198 [Monsanto Company] | Modifizierter Fettsäuregehalt im Samen |
| | |
| Zea mays L. (Mais) Linien REN-∅∅∅38-3 (LY038) [Monsanto Company] | Erhöhter Lysingehalt |
| | |
| Zea mays L. (Mais) Linien REN-∅∅∅38-3, MON-∅∅81∅S-6 (MON-∅∅81∅-6 x LY038) | Erhöhter Lysingehalt, Resistenz gegen den Maiszünsler; |
| [Monsanto Company] | |
| | |
| Cucumis melo (Melone) Linien A, B [Agritope Inc.] | Verzögerte Reife durch Expression der S-Adenosylmethionin Hydrolase |
| | |
| Carica papaya (Papaya) Linien 55-1/63-1 [Cornell University] | Resistenz gegen den Papaya Ringspot Virus (PRSV) |
| | |
| Solanum tuberosum L. (Kartoffel) Linien RBMT21-129, RBMT21-350, RBMT22-082 [Monsanto Company] | Resistenz gegen den Colorado Kartoffelkäfer und den Kartoffelblattrollvirus (PLRV) |
| | |
| Solanum tuberosum L. (Kartoffel) Linien RBMT15-101, SEMT15-02, SEMT15-15 [Monsanto Company] | Resistenz gegen den Colorado Kartoffelkäfer und den Kartoffelvirus Y (PVY) |
| | |
| Glycine max L. (Sojabohne) Linien DD-∅26∅∅5-3 (G94-1, G94-19, G168 [DuPont Canada Agricultural Products] | Modifizierter Fettsäuregehalt im Samen, insbesondere erhöhter Ölsäuregehalt |
| | |
| Glycine max L. (Sojabohne) Linien OT96-15 [Agriculture & Agri-Food Canada] | Modifizierter Fettsäuregehalt im Samen, insbesondere reduzierter Linolensäuregehalt |
| Cucurbita pepo (Kürbis) Linie ZW20 [Upjohn (USA); Seminis Vegetable Inc. (Canada)] | Resistenz gegen virale Infektionen, Wassermelonen Mosaik Virus (WMV) 2 und Zucchini Gelbmosaik Virus (ZYMV) |
| | |
| Cucurbita pepo (Kürbis) Linie CZW-3 [Asgrow (USA); Seminis Vegetable Inc. (Canada)] | Resistenz gegen virale Infektionen, Gurken Mosaik Virus (CMV), Wassermelonen Mosaik Virus (WMV) 2 und Zucchini Gelbmosaik Virus (ZYMV) |
| | |
| Nicotiana tabacum L. (Tabak) Linie Vector 21-41 [Vector Tobacco] | Reduzierter Nikotingehalt |
| | |
| Lycopersicon esculentum (Tomate) Linie 1345-4 [DNA Plant Technology] | Verlängerte Haltbarkeit durch reduzierte Ethylen-Akkumulation aufgrund der Expression der ACC Synthase |
| | |
| Lycopersicon esculentum (Tomate) Linie 35 1 N [Agritope Inc.] | Verzögerte Reife durch Expression der S-Adenosylmethionin Hydrolase |
| | |
| Lycopersicon esculentum (Tomate) Linie CGN-89322-3 (8338) [Monsanto Company] | Verzögerte Reife durch Expression von ACCd |
| | |
| Lycopersicon esculentum (Tomate) Linien B, Da, F [Zeneca Seeds] | Verzögertes Weichwerden ("anti-Matsch") durch eine verminderte Expression der Polygalacturonase |
| | |
| Lycopersicon esculentum (Tomate) Linie CGN-89564-2 (FLAVR SAVR) [Calgene Inc.] | Verzögertes Weichwerden ("anti-Matsch") durch eine verminderte Expression der Polygalacturonase |

**Tabelle 5**

| **Nr.** | **Linie/ Merkmal** | **Handelsname** | **Pflanze** | **Unternehmen** | **transgen modifizierte Eigenschaften** |
|---|---|---|---|---|---|
| B-1 | ASR368 | | *Agrostis stolonifera Weißes Straußgras* | Scotts Seeds | Glyphosate-Toleranz, die durch Insertieren eines modifizierten, für die 5-Enolpyruvylshikimat-3-phosphatsynthase (EPSPS) codierenden Gens aus Agrobacterium tumefaciens erhalten wurde. |
| B-2 | H7-1 | Roundup Ready Sugar Beet | *Beta vulgaris* (Zuckerrübe) | Monsanto Company | Zuckerrübe mit Toleranz für das Herbizid Glyphosate; Erzeugung durch Insertieren eines Gens für das Enzym 5- Enolypyruvylshikimat-3-phosphate synthase (EPSPS) aus dem Agrobacterium tumefaciens-Stamm CP4. |
| B-3 | T120-7 | | *Beta vulgaris* (Zuckerrübe) | Bayer CropScience (Aventis CropScience (AgrEvo)) | Einführen des Gens für die PPT-Acetyltransferase (PAT) aus Streptomyces viridochromogenes, einem aeroben Bodenbakterium Die Wirkung der PPT besteht normalerweise darin, die Glutaminsynthetase zu hemmen, was zu einer tödlichen Akkumulation von Ammoniak führt. Die acetylierte PPT ist inaktiv. |
| B-4 | GTSB77 | | *Beta vulgaris* (Zuckerrübe) | Novartis Seeds; Monsanto Company | Zuckerrübe mit Toleranz für das Herbizid Glyphosate; Erzeugung durch Insertieren eines Gens für das Enzym 5- Enolypyruvylshikimat-3-phosphate synthase (EPSPS) aus dem Agrobacterium tumefaciens-Stamm CP4. |
| B-5 | 23-18-17, 23-198 | | *Brassica napus* (Argentinischer Canola-Raps) | Monsanto Company (ehemals Calgene) | Canola-Raps mit hohem Laurinsäure- (12:0) und Myristinsäure- (14:0)-Gehalt; Erzeugung durch Insertieren eines Gens für Thioesterase aus dem Kalifornischen Lorbeer (Umbellularia californica). |
| B-6 | 45A37, 46A40 | | *Brassica napus* (Argentinischer Canola-Raps) | Pioneer Hi-Bred International Inc. | Canola-Raps mit hohem Ölsäure- und niedrigem Linolensäuregehalt, Erzeugung durch eine Kombination von chemischer Mutagenese für die Selektion auf eine Fettsäuredesaturase-Mutante mit erhöhtem Ölsäuregehalt und traditionelle Rückkreuzung zur Einführung des Merkmals niedriger Linolensäuregehalt. |
| B-7 | 46A12, 46A16 | | *Brassica napus* (Argentinischer Canola-Raps) | Pioneer Hi-Bred International Inc. | Kombination von chemischer Mutagenese zur Erzielung des Merkmals hoher Ölsäuregehalt und traditioneller Züchtung mit eingetragenen Canola-Rapssorten. |
| B-8 | GT200 | | *Brassica napus* (Argentinischer Canola-Raps) | Monsanto Company | Canola-Raps mit Toleranz für das Herbizid Glyphosate; Erzeugung durch Insertieren von Genen für die Enzyme 5-Enolypyruvylshikimat-3-phosphatsynthase (EPSPS) aus dem Agrobacterium tumefaciens-Stamm CP4 und Glyphosate-Oxidase aus Ochrobactrum anthropi. |
| B-9 | GT73, RT73 | Roundup Ready™ canola | *Brassica napus* (Argentinischer Canola-Raps) | Monsanto Company | Canola-Raps mit Toleranz für das Herbizid Glyphosate; Erzeugung durch Insertieren von Genen für die Enzyme 5-Enolypyruvylshikimat-3-phosphatsynthase (EPSPS) aus dem Agrobacterium tumefaciens-Stamm CP4 und Glyphosate-Oxidase aus Ochrobactrum anthropi. |
| B-10 | HCN10 | | *Brassica napus* (Argentinischer Canola-Raps) | Aventis CropScience | Einführen des Gens für die PPT-Acetyltransferase (PAT) aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. |
| B-11 | Topas 19/2 (HCN92) | In Vigor® Canola | *Brassica napus* (Argentinischer Canola-Raps) | Bayer CropScience (Aventis CropScience (AgrEvo)) | Einführen des Gens für die PPT-Acetyltransferase (PAT) aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. |
| B-12 | MS1, RF1 =>PGS1 | | *Brassica napus* (Argentinischer Canola-Raps) | Aventis CropScience (ehemals Plant Genetic Systems) | Pollensterilitäts/Fertilitäts-restorations/Bestäubungskontrollsystem mit Toleranz für das Herbizid Glufosinate. Die MS-Linien enthielten das Barnase-Gen aus Bacillus amyloliquefaciens, die RF-Linien enthielten das barstar- Gen aus demselben Bakterium, und beide Linien enthielten das Gen für die Phosphinotricin-N-Acetyltransferase (PAT) aus Streptomyces hygroscopicus. |
| B-13 | MS1, RF2 =>PGS2 | | *Brassica napus* (Argentinischer Canola-Raps) | Aventis CropScience (ehemals Plant Genetic Systems) | Pollensterilitäts/Fertilitätsrestorations/Bestäubungskontrollsystem mit Toleranz für das Herbizid Glufosinate. Die MS Linien enthielten das Barnase-Gen aus Bacillus amyloliquefaciens, die RF-Linien enthielten das barstar-Gen aus demselben Bakterium, und beide Linien enthielten das Gen für die Phosphinotricin-N-Acetyltransferase (PAT) aus Streptomyces hygroscopicus. |
| B-14 | MS8xRF3 | In Vigor® Canola | *Brassica napus* (Argentinischer Canola-Raps) | Bayer CropScience (Aventis CropScience (AgrEvo)) | Pollensterilitäts/Fertilitätsrestorations/Bestäubungskontrollsystem mit Toleranz für das Herbizid Glufosinate. Die MS-Linien enthielten das Barnase-Gen aus Bacillus amyloliquefaciens, die RF-Linien enthielten das barstar-Gen aus demselben Bakterium, und beide Linien enthielten das Gen für die Phosphinotricin-N-Acetyltransferase (PAT) aus Streptomyces hygroscopicus. |
| B-15 | NS738, NS1471, NS1473 | | *Brassica napus* (Argentinischer Canola-Raps) | Pioneer Hi-Bred International Inc. | Selektion von somaklonalen Varianten mit veränderten Acetolactatsynthase (ALS)- Enzymen und anschließendechemische Mutagenese. Zwei Linien (P1, P2) mit Modifikationen an verschiedenen, nicht gekoppelten Loci wurden ursprünglich selektiert. NS738 enthält nur die P2-Mutation. |
| B-16 | OXY-235 | | *Brassica napus* (Argentinischer Canola-Raps) | Aventis CropScience (ehemals Rhöne Poulenc Inc.) | Toleranz für die Herbizide Bromoxynil und Ioxynil durch Einbau des Nitrilase-Gens (oxy) aus Klebsiella pneumoniae. |
| B-17 | MS8 | In Vigor® Canola | *Brassica napus* (Argentinischer Canola-Raps) | Bayer CropScience | Merkmale: Glufosinate-Toleranz, Pollensterilitätsgene: bar, Barnase |
| B-18 | PHY14, PHY35 | | *Brassica napus* (Argentinischer Canola-Raps) | Aventis CropScience (ehemals Plant Genetic Systems) | Erzeugung der Pollensterilität wurde mittels Insertion des Barnase-Ribonukleasegens aus Bacillus amyloliquefaciens; Restoration der Fertilität durch Insertieren des barstar-RNase-Hemmers; Erzeugung der PPT-Resistenz wurde mittels PPT-Acetyltransferase (PAT) aus Streptomyces hygroscopicus. |
| B-19 | PHY36 | | *Brassica napus* (Argentinischer Canola-Raps) | Aventis CropScience (ehemals Plant Genetic Systems) | Erzeugung der Pollensterilität wurde mittels Insertion des Barnase-Ribonukleasegens aus Bacillus amyloliquefaciens; Restoration der Fertilität durch Insertieren des barstar-RNase-Hemmers; Erzeugung der PPT-Resistenz wurde mittels PPT-Acetyltransferase (PAT) aus Streptomyces hygroscopicus. |
| B-20 | RF1,(B93-101) | In Vigor® Canola | *Brassica napus* (Argentinischer Canola-Raps) | Bayer CropScience | Gene: bar, barstar, Neomycinphosphotransferase II (npt II); Merkmale: Fertilitätsrestoration, Glufosinat-Toleranz, Kanamycinrestistenz |
| B-21 | RF2, (B94-101) | | *Brassica napus* (Argentinischer Canola-Raps) | Bayer CropScience | Gene: bar, barstar, Neomycinphosphotransferase II (npt II); Merkmale: Fertilitätsrestoration, Glufosinat-Toleranz, Kanamycinrestistenz |
| B-22 | RF3, ACS-BNØØ3-6 | In Vigor® Canola | *Brassica napus* (Argentinischer Canola-Raps) | Bayer CropScience | Merkmale: Fertilitätsrestoration, Glufosinat-Toleranz; Gene bar, barstar |
| B-23 | MS1 (B91-4) | In Vigor® Canola | *Brassica napus* (Argentinischer Canola-Raps) | Bayer CropScience | Merkmale: Glufosinat-Toleranz, Kanamycinresistenz, Pollensterilität; Gene: bar, Barnase, Neomycin Phosphotransferase II (npt II) |
| B-24 | T45 (HCN28) | In Vigor® Canola | *Brassica napus* (Argentinischer Canola-Raps) | Bayer CropScience (Aventis CropScience (AgrEvo)) | Einführen des für die PPT-Acetyltransferase (PAT) codierendes Gens aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. |
| B-25 | HCR-1 | | *Brassica rapa* (Polnischer Canola-Raps) | Bayer CropScience (Aventis CropScience(Ag rEvo)) | Einführung des Merkmals Toleranz für das Herbizid Glufosinate-Ammonium aus der transgenen B.napus-Linie B45. Dieses Merkmal wird von dem Gen für die Phosphinotricinacetyltransferase (PAT) aus S. viridochromogenes vermittelt. |
| B-26 | ZSR500/502 | | *Brassica rapa* (Polnischer Canola-Raps) | Monsanto Company | Einführung einer modifizierten 5-Enolpyruvylshikimat-3-phosphatsynthase (EPSPS) und eines Gens aus Achromobacter sp., das Glyphosate durch Umwandlung in Aminomethylphosphonsäure (AMPA) und Glyoxylat abbaut, mittels Artkreuzung mitGT73. |
| B-27 | 55-1/63-1 | | *Carica papaya* (Papaya) | Cornell University | Gegen das Papaya-Ringspot-Virus (PRSV) resistente Papaya, die durch Insertion der für das Hüllprotein (CP) codierenden Sequenzen von diesem Pflanzen-Potyvirus erzeugt wurde. |
| B-28 | RM3-3, RM3-4, RM3-6 | | *Cichorium intybus* (Chicorée) | Bejo Zaden BV | Erzeugung der Pollensterilität wurde mittels Insertion des Barnase-Ribonukleasegens aus Bacillus amyloliquefaciens; die PPT-Resistenz mittels dem bar-Gen aus S. hygroscopicus, das für das PAT-Enzym codiert. |
| B-29 | A, B | | *Cucumis melo* (Melone) | Agritope Inc. | Verringerte Akkumulation von S-Adenosylmethionin (SAM), und daher verringerte Ethylensynthese, durch Einführung des für die S-Adenosylmethioninhydrolase codierenden Gens. |
| B-30 | CZW-3 | | *Cucurbita pepo* (Kürbis) | Asgrow (USA); Seminis Vegetable Inc. (Kanada) | Gegen das Gurkenmosaikvirus (CMV), das Zucchini Yellows Mosaic-Virus (ZYMV) und das Wassermelonenmosaik-Virus (WMV) 2 resistenter Kürbis (Curcurbita pepo); Erzeugung durch Insertieren der für das Hüllprotein (CP) codierenden Sequenzen von jedem dieser Pflanzenviren in das Wirtsgenom. |
| B-31 | ZW20 | | *Cucurbita pepo* (Kürbis) | Upjohn (USA); Seminis Vegetable Inc. (Kanada) | Gegen das Zucchini Yellows Mosaic-Virus (ZYMV) und das Wassermelonenmosaik-Virus (WMV) 2 resistenter Kürbis (Curcurbita pepo); Erzeugung durch Insertieren der für das Hüllprotein (CP) codierenden Sequenzen von jedem dieser Pflanzen-Potyviren in das Wirtsgenom. |
| B-32 | 66 | | *Dianthus caryophyllus* (Nelke) | Florigene Pty Ltd. | Gegen Sulfonylharnstoffherbizide tolerante Nelken mit verzögerter Seneszenz; Erzeugung durch Insertieren einer verkürzten Kopie des Gens für die Aminocyclopropancyclase (ACC)-Synthase aus der Nelke zwecks Unterdrückung der Expression des endogenen nichtmodifizierten Gens, das für die normale Ethylenbiosynthese erforderlich ist Die Toleranz für Sulfonylharnstoffherbizide wurde durch Einführung einer chlorsulfurontoleranten Version des Gens für die Acetolactatsynthase (ALS) aus Tabak erzeugt. |
| B-33 | 4, 11, 15, 16 | | *Dianthus caryophyllus* (Nelke) | Florigene Pty Ltd. | Sulfonylharnstoffherbizidetolerante Nelken mit modifizierter Farbe, die dadurch erzeugt wurden, daß zwei Anthocyanbiosynthesegene insertiert wurden, deren Expression zu einer violett/malvenfarbenen Färbung führt. Die Toleranz für Sulfonylharnstoffherbizide wurde durch Einführung einer chlorsulfurontoleranten Version des Gens für die Acetolactatsynthase (ALS) aus Tabak erzeugt. |
| B-34 | 11363 | Moonshadow | *Dianthus caryophyllus* (Nelke) | Florigene Pty Ltd. | Merkmale: Färbung; Gene ALS, Dihydroflavonolreduktase (dfr), Flavonoid-3',5'-Hydroxylase (F3'5'H) |
| B-35 | 959A, 988A, 1226A, 1351A, 1363A, 1400A | | *Dianthus caryophyllus* (Nelke) | Florigene Pty Ltd. | Einführung von zwei Anthocyan-Biosynthesegenen, die zu einer violetten/malvenfarbenen Färbung fiihrt; Einführung einer Variante der Acetolactatsynthase (ALS). |
| B-36 | 123.2. (40619) | Moonshade | *Dianthus caryophyllus* (Nelke) | Florigene Pty Ltd. | Merkmale: Färbung; Gene ALS, Dihydroflavonolreduktase (dfr), Flavonoid-3',5'-Hydroxylase (F3'5'H) |
| B-37 | 123.8.8 (40685) | Moonvista | *Dianthus caryophyllus* (Nelke) | Florigene Pty Ltd. | |
| B-38 | 11 (7442) | Moondust | *Dianthus caryophyllus* (Nelke) | Florigene Pty Ltd. | |
| B-39 | A2704-12, A2704-21, A5547-35 | | *Glycine max* L. (Sojabohne) | Aventis CropScience | Sojabohne mit Toleranz für Glufosinate-Ammonium-Herbizide; Erzeugung durch Insertieren eines modifizierten Gens für die Phosphinotricinacetyltransferase (PAT) aus dem Bodenbakterium Streptomyces viridochromogenes |
| B-40 | A5547-127 | LibertyLink® Soybean | *Glycine max* L. (Sojabohne) | Bayer CropScience (Aventis CropScience (AgrEvo)) | Sojabohne mit Toleranz für Glufosinate-Ammonium-Herbizide, die durch Insertieren eines modifizierten Gens für die Phosphinotricinacetyltransferase (PAT) aus dem Bodenbakterium Streptomyces viridochromogenes |
| B-41 | G94-1, G94-19, G168 | | *Glycine max* L. (Sojabohne) | DuPont Canada Agricultural Products | Sojabohne mit hohem Ölsäuregehalt; Erzeugung durch Insertieren einer zweiten Kopie des Gens für eine Fettsäuredesaturase (GmFad2-1) aus der Sojabohne, was zu einem "Abschatten" des endogenen Wirtsgens führte. |
| B-42 | GTS 40-3-2 | Roundup Ready^{™} Soybeans | *Glycine max* L. (Sojabohne) | Monsanto Company | Glyphosate-tolerante Sojabohnensorte; Erzeugung durch Insertieren eines modifizierten Gens für die 5-Enolpyruvylshikimat-3-phosphatsynthase (EPSPS) aus dem Bodenbakterium Agrobacterium tumefaciens. |
| B-43 | GU262 | | *Glycine max* L. (Sojabohne) | Bayer CropScience (Aventis CropScience (AgrEvo)) | Sojabohne mit Toleranz für Glufosinate-Ammonium-Herbizide; Erzeugung durch Insertieren eines modifizierten Gens für die Phosphinotricinacetyltransferase (PAT) aus dem Bodenbakterium Streptomyces viridochromogenes. |
| B-44 | MON89788 | Roundup RReady2Yield ^{™} Soybean | *Glycine max* L. (Sojabohne) | Monsanto Company | Glyphosate-tolerante Sojabohnensorte; Erzeugung durch Insertieren eines modifizierten aroA (epsps)-Gens für die 5-Enolpyruvylshikimate-3-phosphatsynthase (EPSPS) aus dem Bodenbakterium Agrobacterium tumefaciens CP4. |
| B-45 | OT96-15 | | *Glycine max* L. (Sojabohne) | Agriculture & Agri-Food Kanada | Sojabohne mit niedrigem Linolsäuregehalt; Erzeugung durch traditionelle Kreuzung zwecks Einbau des neuen Merkmals aus einer natürlich vorkommenden fan 1-Genmutante, die auf niedrigen Linolensäuregehalt selektiert worden war. |
| B-46 | W62, W98 | | *Glycine max* L. (Sojabohne) | Bayer CropScience (Aventis CropScience (AgrEvo)) | Sojabohne mit Toleranz für Glufosinate-Ammonium-Herbizide; Erzeugung durch Insertieren eines modifizierten Gens für die Phosphinotricinacetyltransferase (PAT) aus dem Bodenbakterium Streptomyces hygroscopicus. |
| B-47 | 15985 | Bollgard II cotton | *Gossypium hirsutum* L. (Baumwolle) | Monsanto Company | Insektenresistente Baumwolle; Erzeugung durch Transformation der Elternsorte DP50B, die Event 531 (mit Expression des Cry1Ac-Proteins) enthielt, mit aufgereinigter Plasmid-DNA, die das cry2Ab-Gen aus B. thuringiensis subsp. Kurstaki enthielt. |
| B-48 | 19-51A | | *Gossypium hirsutum* L. (Baumwolle) | DuPont Canada Agricultural Products | Einführung einer Acetolactatsynthase (ALS)-Variante. |
| B-49 | 281-24-236 | | *Gossypium hirsutum* L. (Baumwolle) | DOW AgroSciences LLC | Insektenresistente Baumwolle; Erzeugung durch Insertieren des cry1F-Gens aus Bacillus thuringiensisvar. aizawai. Das Gen für die PAT aus Streptomyces viridochromogenes wurde als Selektionsmarker eingeführt. |
| B-50 | 3006-210-23 | WideStrike™ | *Gossypium hirsutum* L. (Baumwolle) | DOW AgroSciences LLC | Insektenresistente Baumwolle; Erzeugung durch Insertieren des cry1Ac-Gens aus Bacillus thuringiensissubsp. kurstaki. Das Gen für die PAT aus Streptomyces viridochromogenes wurde als Selektionsmarker eingeführt. |
| B-51 | 31807/31808 | | *Gossypium hirsutum* L. (Baumwolle) | Calgene Inc. | Insektenresistente Baumwolle mit Toleranz für das Herbizid Bromoxynil; Herstellung durch Insertion des cry1Ac-Gens aus Bacillus thuringiensis und eines Gens für Nitrilase aus Klebsiella pneumoniae. |
| B-52 | BXN | | *Gossypium hirsutum* L. (Baumwolle) | Calgene Inc. | Baumwolle mit Toleranz für das Herbizid Bromoxynil, Herstellung durch Insertion eines Gens für Nitrilase aus Klebsiella pneumoniae. |
| B-53 | COT102 | | *Gossypium hirsutum* L. (Baumwolle) | Syngenta Seeds, Inc. | Insektenresistene Baumwolle; Erzeugung durch Insertieren des vip3A(a)-Gens aus Bacillus thuringiensis AB88. Das Gen für APH4 aus E. coli wurde als Selektionsmarker eingeführt |
| B-54 | DAS-21Ø23-5 x DAS-24236-5 | | *Gossypium hirsutum* L. (Baumwolle) | DOW AgroSciences LLC | WideStrike™, eine Baumwolle mit Insektenresistenzkombination; Erzeugung durch traditionelles Kreuzen der Elternlinien 3006-210-23 (OECD-Bezeichnung: DAS-21023-5) und 281-24-236 (OECD-Bezeichung: DAS-24236-5). |
| B-55 | DAS-21Ø23-5 x DAS-24236-5 x MON88913 | | *Gossypium hirsutum* L. (Baumwolle) | DOW AgroSciences LLC und Pioneer Hi-Bred International Inc. | Baumwolle mit einer Kombination von Insektenresistenz und Glyphosate-Toleranz; Erzeugung durch traditionelles Kreuzen von WideStrike-Baumwolle (OECD-Bezeichnung: DAS-21Ø23-5 x DAS-24236-5) mit MON88913, bekannt unter der Bezeichnung RoundupReady Flex (OECD-Bezeichnung: MON-88913-8). |
| B-56 | DAS-21023-5 x DAS-24236-5 x MON-01445-2 | | *Gossypium hirsutum* L. (Baumwolle) | DOW AgroSciences LLC | WideStrike™/Roundup Ready®-Baumwolle, eine Baumwolle mit einer Kombination von Insektenresistenz und Glyphosate-Toleranz; Erzeugung durch traditionelles Kreuzen von WideStrike-Baumwolle (OECD-Bezeichnung: DAS-21023-5 x DAS-24236-5) mit MON1445 (OECD-Bezeichnung: MON-Ø1445-2). |
| B-57 | LLCotton25 | | *Gossypium hirsutum* L. (Baumwolle) | Bayer CropScience (Aventis CropScience (AgrEvo)) | Baumwolle mit Toleranz gegen das Herbizid Glufosinate-Ammonium; Erzeugung durch Insertieren eines modifizierten Gens für die Phosphinotricinacetyltransferase (PAT) aus dem Bodenbakterium Streptomyces hygroscopicus. |
| B-58 | LLCotton25 x MON15985 | | *Gossypium hirsutum* L. (Baumwolle) | Bayer CropScience (Aventis CropScience(Ag rEvo)) | Baumwolle mit einer Kombination von Herbizidtoleranz und Insektenresistenz, bei der die Toleranz für das Herbizid Glufosinate-Ammonium aus LLCotton25 (OECD-Bezeichnung: ACS-GHØØ1-3) mit Resistenz gegen Insekten aus MON15985 (OECD-Bezeichnung: MON-15985-7) kombiniert ist. |
| B-59 | MON1445/1 698 | Roundup Ready^{™} cotton | *Gossypium hirsutum* L. (Baumwolle) | Monsanto Company | Baumwolle mit Toleranz für das Herbizid Glyphosate; Erzeugung durch Insertieren einer natürlichen Glyphosat-toleranten Form des Enzyms 5-Enolpyruvylshikimat-3-phosphatsynthase (EPSPS) aus dem A. tumefaciens-Stamm CP4. |
| B-60 | MON15985 x MON88913 | | *Gossypium hirsutum* L. (Baumwolle) | Monsanto Company | Baumwolle mit einer Kombination von Insektenresistenz und Glyphosate-Toleranz; Erzeugung durch traditionelles Kreuzen der Elternlinien MON88913 (OECD-Bezeichnung: MON-88913-8) und 15985 (OECD-Bezeichnung: MON-15985-7). Glyphosate-Toleranz stammt von der Linie MON88913, die zwei Gene enthält, die für das Enzym 5-Enolypyruvylshikimat-3-Phosphatsynthase (EPSPS) aus dem Agrobacterium tumefaciens-Stamm CP4 codieren. Die Insektenresistenz stammt von der Linie MON15985, die durch Transformation der Elternsorte DP50B, die Event 531 (Expression des Cry1Ac-Proteins) enthielt, mit aufgereinigter Plasmid-DNA, die das cry2Ab-Gen aus B. thuringiensis subsp. kurstaki enthielt, erzeugt wurde. |
| B-61 | MON-15985-7 x MON-Ø1445-2 | | *Gossypium hirsutum* L. (Baumwolle) | Monsanto Company | Baumwolle mit einer Kombination von Insektenresistenz und Herbizidtoleranz; Erzeugung durch traditionelles Kreuzen der Elternlinien 15985 (OECD-Bezeichnung: MON-15985-7) und MON-1445 (OECD-Bezeichnung: MON-Ø1445-2). |
| B-62 | MON531/75 7/1076 | Bollgard ™(Ingard®) | *Gossypium hirsutum* L. (Baumwolle) | Monsanto Company | Insektenresistente Baumwolle; Erzeugung durch Insertieren des cry1Ac-Gens aus Bacillus thuringiensis subsp. kurstaki HD-73 (B.t.k.). |
| B-63 | MON88913 | Roundup Ready Flex Cotton | *Gossypium hirsutum* L. (Baumwolle) | Monsanto Company | Baumwolle mit Toleranz für das Herbizid Glyphosate; Erzeugung durch Insertieren von zwei Genen für das Enzym 5-Enolypyruvylshikimat-3-phosphat-synthase (EPSPS) aus dem Agrobacterium tumefaciens-Stamm CP4. |
| B-64 | MON-ØØ531-6 x MON-01445-2 | | *Gossypium hirsutum* L. (Baumwolle) | Monsanto Company | Baumwolle mit einer Kombination von Insektenresistenz und Herbizidtoleranz; Erzeugung durch traditionelles Kreuzen der Elternlinien MON531 (OECD-Bezeichnung: MON-ØØ531-6) und MON-1445 (OECD-Bezeichnung: MON-Ø1445-2). |
| B-65 | T304-40 | | *Gossypium hirsutum* L. (Baumwolle) | Bayer BioScience N.V., Technologiepark 38 B-9052 Gent Belgien | Genetische Elemente, die den Phänotyp Insektenresistenz und Toleranz gegen das Herbizid Glufosinate-Ammonium vermitteln: - cry1 : Codiersequenz des cry-Gens aus Bacillus thuringiensis, die das Merkmal Insektenresistenz vermittelt. - bar: Codiersequenz des Phosphinotricinacetyltransferase-Gens (bar) aus Streptomyces hygroscopicus, das das Merkmal Herbizidresistenz vermittelt. |
| B-66 | GHB714 | | *Gossypium hirsutum* L. (Baumwolle) | Bayer BioScience N.V., Technologiepark 38 B-9052 Gent Belgien | Genetische Elemente, die den Phänotyp Insektenresistenz und Toleranz gegen das Herbizid Glufosinate-Ammonium vermitteln: - cry2: Codiersequenz des cry-Gens aus Bacillus thuringiensis, die das Merkmal Insektenresistenz vermittelt. - bar: Codiersequenz des Phosphinotricinacetyltransferase-Gens (bar) aus Streptomyces hygroscopicus, das das Merkmal Herbizidresistenz vermittelt. |
| B-67 | GHB119 | | *Gossypium hirsutum* L. (Baumwolle) | Bayer BioScience N.V., Technologiepark 38 B-9052 Gent Belgien | Genetische Elemente, die den Phänotyp Insektenresistenz und Toleranz gegen das Herbizid Glufosinate-Ammonium vermitteln: - cry2: Codiersequenz des cry-Gens aus Bacillus thuringiensis, die das Merkmal Insektenresistenz vermittelt. - bar: Codiersequenz des Phosphinotricinacetyltransferase-Gens (bar) aus Streptomyces hygroscopicus, das das Merkmal Herbizidresistenz vermittelt. |
| B-68 | T303-3 | | *Gossypium hirsutum* L. (Baumwolle) | Bayer BioScience N.V., Technologiepark 38 B-9052 Gent Belgien | - cry1: Codiersequenz des cry-Gens aus Bacillus thuringiensis, die das Merkmal Insektenresistenz vermittelt. - bar: Codiersequenz des Phosphinotricinacetyltransferase-Gens (bar) aus Streptomyces hygroscopicus, das das Merkmal Herbizidresistenz vermittelt. |
| B-69 | GHB614 | | *Gossypium hirsutum* L. (Baumwolle) | Bayer BioScience N.V., Technologiepark 38 B-9052 Gent Belgien | 2mepsps: Codierequenz von 2mepsps des Maises, die das Merkmal Resistenz gegen das Herbizid Glyphosate verleiht. |
| B-70 | X81359 | | *Helianthus annuus* (Sonnen-blume) | BASF Inc. | Toleranz für Imidazolinonherbizide durch Selektieren auf eine natürlich vorkommende Mutante. |
| B-71 | RH44 | | *Lens culinaris* (Linse) | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvat-lyase bekannt. |
| B-72 | FP967 | | *Linum usitatissimum* L. (Flachs, Lein) | University of Saskatchewan, Crop Dev. Centre | Eine Acetolactatsynthase (ALS)-Variante wurde von einer chlorsulfurontoleranten Linie von A. thaliana erhalten und zur Transformation von Flachs eingesetzt. |
| B-73 | 5345 | | *Lycopersicon esculentum* (Tomate) | Monsanto Company | Resistenz gegen Schadlepidopteren durch Einführen des cry1Ac-Gens aus Bacillus thuringiensis subsp. Kurstaki. |
| B-74 | 8338 | | *Lycopersicon esculentum* (Tomate) | Monsanto Company | Einführung einer Gensequenz, die für das Enzym 1-Aminocyclopropan-1-carbonsäuredeaminase (ACCd) codiert, das die Vorstufe des Fruchtreifungshormons Ethylen metabolisiert. |
| B-75 | 1345-4 | | *Lycopersicon esculentum* (Tomate) | DNA Plant Technology Corporation | Tomaten mit verzögerter Reife wurden dadurch erzeugt, daß man eine zusätzliche Kopie eines verkürzten Gens für die 1-Aminocyclopropan-1 -carbonsäure (ACC) -Synthase insertierte, was zur Herunterregulation der endogenen ACC-Synthase und zu einer verringerten Ethylenakkumulation führte. |
| B-76 | 35 1 N | | *Lycopersicon esculentum* (Tomate) | Agritope Inc. | Einführung einer Gensequenz, die für das Enzym S-adenosylmethioninhydrolase codiert, das die Vorstufe des Fruchtreifungshormons Ethylen metabolisiert. |
| B-77 | B, Da, F | | *Lycopersicon esculentum* (Tomate) | Zeneca Seeds | Tomaten mit verzögertem Weichwerden wurden dadurch erzeugt, daß man eine verkürzte Version des Gens für die Polygalacturonase (PG) in sense-oder antisense-Orientierung insertierte, um die Expression des endogenen PG-Gens zu reduzieren und so den Pektinabbau zu reduzieren. |
| B-78 | FLAVR SAVR | FLAVR SAVR | *Lycopersicon esculentum* (Tomate) | Calgene Inc. | Tomaten mit verzögertem Weichwerden wurden dadurch erzeugt, daß man eine zusätzliche Kopie des Gens für die Polygalacturonase (PG) in antisense-Orientierung insertierte, um die Expression des endogenen PG-Gens zu reduzieren und so den Pektinabbau zu reduzieren. |
| B-79 | J101, J163 | Roundup Ready Alfalfa | *Medicago sativa* (Luzerne) | Monsanto Company und Forage Genetics International | Eine für das Herbizid Glyphosate tolerante Luzerne wurde dadurch erzeugt, daß man ein Gen für das Enzym 5-Enolypyruvylshikimat-3-phosphatsynthase (EPSPS) aus dem Agrobacterium tumefaciens-Stamm CP4 insertierte. |
| B-80 | C/F/93/08-02 | | *Nicotiana tabacum* L. (Tabak) | Societe National d'Exploitation des Tabacs et Allumettes | Toleranz für die Herbizide Bromoxynil und loxynil durch Einbau des Nitrilasegens aus Klebsiella pneumoniae. |
| B-81 | Vector 21-41 | | *Nicotiana tabacum* L. (Tabak) | Vector Tobacco Inc. | Reduzierter Nikotingehalt durch Einführung einer zweiten Kopie der Chinolinsäurephosphoribosyl-transferase (QTPase) aus dem Tabak in antisense-Orientierung. Das für NPTII codierende Gen aus E. coli wurde als Selektionsmarker eingeführt, um Transformanten zu identfizieren. |
| B-82 | CL121, CL141, CFX51 | | *Oryza sativa* (Reis) | BASF Inc. | Toleranz für das Imidazolinonherbizid Imazethapyr wurde durch chemische Mutagenese des Enzyms Acetolactatsynthase (ALS) mittels Ethylmethansulfonat (EMS) induziert.. |
| B-83 | IMINTA-1, IMINTA-4 | Clearfield^{™} | *Oryza sativa* (Reis) | BASF Inc. | Toleranz für Imidazolinonherbizide wurde durch chemische Mutagenese des Enzyms Acetolactatsynthase (ALS) mittels Natriumazid induziert. |
| B-84 | LLRICE06, LLRICE62 | LibertyLink® Rice | *Oryza sativa* (Reis) | Aventis CropScience | Für das Herbizid Glufosinate-Ammonium toleranter Reis; Erzeugung durch Insertieren eines modifizierten Gens für die Phosphinotricinacetyltransferase (PAT) aus dem Bodenbakterium Streptomyces hygroscopicus). |
| B-85 | LLRICE601 | | *Oryza sativa* (Reis) | Bayer CropScience (Aventis CropScience (AgrEvo)) | Für das Herbizid Glufosinate-Ammonium toleranter Reis; Erzeugung durch Insertieren eines modifizierten Gens für die Phosphinotricinacetyltransferase (PAT) aus dem Bodenbakterium Streptomyces hygroscopicus). |
| B-86 | PWC16 | | *Oryza sativa* (Reis) | BASF Inc. | Toleranz für das Imidazolinon-Herbizid Imazethapyr wurde durch chemische Mutagenese des Enzyms Acetolactatsynthase (ALS) mittels Ethylmethansulfonat (EMS) induziert. |
| B-87 | ATBT04-6, ATBT04-27, ATBT04-30, ATBT04-31, ATBT04-36, SPBT02-5, SPBT02-7 | NewLeaf Atlantic | *Solanum tuberosum* L. (Kartoffel) | Monsanto Company | Kartoffelkäferresistente Kartoffeln, Erzeugung durch Insertieren des cry3A-Gens aus Bacillus thuringiensis (subsp. tenebrionis). |
| B-88 | BT6, BT10, BT12, BT16, BT17, BT18, BT23 | NewLeaf Russet Burbank | *Solanum tuberosum* L. (Kartoffel) | Monsanto Company | Kartoffelkäferresistente Kartoffeln, Erzeugung durch Insertieren des cry3A-Gens aus Bacillus thuringiensis (subsp. tenebrionis). |
| B-89 | RBMT15-101, SEMT15-02, SEMT15-15 | | *Solanum tuberosum* L. (Kartoffel) | Monsanto Company | Kartoffeln mit Resistenz gegen den Kartoffelkäfer und das Y-Virus der Kartoffel (PVY); Erzeugung durch Insertieren des cry3A-Gens aus Bacillus thuringiensis (subsp. tenebrionis) und des PVY-Gens für das Hüllprotein. |
| B-90 | RBMT21-129, RBMT21-350, RBMT22-082 | | *Solanum tuberosum* L. (Kartoffel) | Monsanto Company | Kartoffeln mit Resistenz gegen den Kartoffelkäfer und das Kartoffel-Blattrollvirus (PLRV); Erzeugung durch Insertieren des cry3A-Gens aus Bacillus thuringiensis (subsp. tenebrionis) und des PLRV-Gens für Replikase. |
| B-91 | AM02-1003, AM01-1005, AM02-1012, AM02-1017, AM99-1089 and AM99-2003 | | *Solanum tuberosum* L. (Kartoffel) | BASF Plant Science GmbH | a) Ein Gen, das die Codierregion der Kartoffel-GBSS in antisense-Orientierung in Bezug auf den Promoter, flankiert von dem GBSS-Promoter aus Solanum tuberosum und der Polyadenylierungssequenz aus dem Agrobacterium tumefaciens-Nopalinsynthasegen, enthält, wurde in die Kartoffelsorte Seresta (Linien AM02-1003, AM01-1005, AM02-1012) und Kuras (Linie AM02-1017) insertiert, wodurch die Amylosemenge in der Stärkefraktion reduziert wurde. Ein AHAS-Gen (Acetohydroxysäure-synthase) aus Arabidopsis thaliana, flankiert vom nos-Gen-Promoter und der Octopinsynthase-Polyadenylierungssequenz aus Agrobacterium tumefaciens, dient als Selektionsmarker, der Toleranz für Imazamox vermittelt. b) AM99-1089 dient als Referenzlinie. Das insertierte Gen besteht aus dem Kartoffel-GBSS (granule bound starch synthase)-Promoter, der Codierregion der Kartoffel-GBSS in antisense-Orientierung und der Polyadenylierungssequenz aus dem Agrobacterium tumefaciens-Nopalinsynthasegen, wodurch die Amylosemenge in der Stärkefraktion reduziert wird. Außerdem wurde das Neomycinphosphotransferasegen (nptII) in Verknüpfung mit dem Agrobacterium tumefaciens-Nopalinsynthasepromoter und der g7-Polyadenylierungssequenz aus Agrobacterium tumefaciens als Selektionsmarkergen, das Resistenz gegen Kanamycin vermittelt, insertiert. c) Bei der Kartoffellinie AM99-2003 wurde ein Gen, das aus dem GBSS-Promoter aus Solanum tuberosum, den Codierregionfragmenten von BE1 und BE2 (starch-branching enzyme, Stärkeverzweigungsenzym) in Tandem- und antisense-Orientierung in bezug auf den Promoter und der nos-Polyadenylierungssequenz aus Agrobacterium tumefaciens besteht, in die Kartoffelsorte Dinamo insertiert, wodurch die Amylopektinmenge in der Stärkefraktion der Knolle reduziert wird. Außerdem wurde das Neomycinphosphotransferasegen (nptII) in Verknüpfung mit dem Agrobacterium tumefaciens-Nopalinsynthasepromoter und der g7-Polyadenylierungssequenz aus Agrobacterium tumefaciens als Selektionsmarkergen, das Resistenz gegen Kanamycin vermittelt, insertiert. |
| B-92 | EH92-527-1 | Amflora | *Solanum tuberosum L*. (Kartoffel) | BASF Plant Science GmbH | Bei dem Kartoffel-Event EH92-527-1 wurde ein Gen, das aus einem Kartoffel-GBSS (granule bound starch synthase) -Promoter, einem Fragment der Codierregion der Kartoffel-GBSS in antisense-Orientierung in Bezug auf den Promoter und der Polyadenylierungssequenz aus dem Agrobacterium tumefaciens-Nopalinsynthasegen (Genkonstrukt pHoxwG) besteht, in die Kartoffelsorte Prevalent insertiert, wodurch die Amylosemenge in der Stärkefraktion reduziert wird. Außerdem wurde das Neomycinphosphotransferasegen (nptII) in Verknüpfung mit dem Agrobacterium tumefaciens-Nopalinsynthasepromoter und dem Polyadenylierungssignal als Selektionsmarkergen, das Resistenz gegen Kanamycin vermittelt, insertiert. |
| B-93 | AP205CL | | *Triticum aestivum* (Weizen) | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvat-lyase bekannt. |
| B-94 | AP602CL | | *Triticum aestivum* (Weizen) | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvat-lyase bekannt. |
| B-95 | BW255-2, BW238-3 | Clearfield™ | *Triticum aestivum* (Weizen) | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvat-lyase bekannt. |
| B-96 | MON71800 | | *Triticum aestivum* (Weizen) | Monsanto Company | Glyphosatetolerante Weizensorte; Erzeugung durch Insertieren eines modifizierten Gens für die 5-Enolpyruvylshikimat-3-phosphatsynthase (EPSPS) aus dem Bodenbakterium Agrobacterium tumefaciens Stamm CP4. |
| B-97 | SWP965001 | | *Triticum aestivum* (Weizen) | Cyanamid Crop Protection | Selektion auf eine mutagenisierte Version des Enzyms Acetohydroxysäuresynthase (AHAS), auch unter der Bezeichnung Acetolactatsynthase (ALS) oder Acetolactatpyruvat-lyase bekannt. |
| B-98 | DW2, DW6, DW12 | Clearfield™ | *Triticum aestivum* (Weizen) | BASF Inc. | |
| B-99 | BW7 | Clearfield™ | *Triticum aestivum* (Weizen) | BASF Inc. | Toleranz für Imidazolinonherbizide. |
| B-100 | Teal 11A | | *Triticum aestivum* (Weizen) | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvat-lyase bekannt. |
| B-101 | 176 | Knockout™, NautureGard™ | *Zea mays* L. (Mais) | Syngenta Seeds, Inc., Novartis, Mycogen | Insektenresistenter Mais; Erzeugung durch Insertieren des cry1Ab-Gens aus Bacillus thuringiensis subsp. kurstaki. Die genetische Modifikation vermittelt eine Resistenz gegen Schädigung durch den Maiszünsler. |
| B-102 | 3751IR | | *Zea mays* L. (Mais) | Pioneer Hi-Bred International Inc. | Selektion von somaklonalen Varianten durch Embryokultur auf imidazolinonhaltigen Medien. |
| B-103 | 676, 678, 680 | LibertyLink® Male Sterile | *Zea mays* L. (Mais) | Pioneer Hi-Bred International Inc. | Pollensteriler Mais mit Toleranz für das Herbizid Glufosinate-Ammonium; Erzeugung durch Insertieren von Genen für die DNA-Adeninmethylase und die Phosphinotricinacetyltransferase (PAT) aus Escherichia coli bzw. Streptomyces viridochromogenes. |
| B-104 | ACS-ZMØØ3-2 x MON-ØØ81Ø-6 | | *Zea mays* L. (Mais) | Bayer CropScience (Aventis CropScience(Ag rEvo)) | Maishybrid mit einer Kombination aus Insektenresistenz und Herbizidtoleranz; Erzeugung durch traditionelles Kreuzen der Elternlinien T25 (OECD-Bezeichnung: ACS-ZMØØ3-2) und MON810 (OECD-Bezeichnung: MON-ØØ81Ø-6). |
| B-105 | B16 (DLL25) | | *Zea mays* L. (Mais) | Dekalb Genetics Corporation | Mais mit Toleranz für das Herbizid Glufosinate-Ammonium; Erzeugung durch Insertieren des Gens für die Phosphinotricinacetyltransferase (PAT) aus Streptomyces hygroscopicus. |
| B-106 | BT11 (X4334CBR , X4734CBR) | BiteGard® | *Zea mays* L. (Mais) | Syngenta Seeds, Inc. | Insektenresistenter und herbizidtoleranter Mais; Erzeugung durch Insertieren des cry1Ab-Gens aus Bacillus thuringiensis subsp. kurstaki, und des Gens für die Phosphinotricin N-Acetyltransferase (PAT) aus S. viridochromogenes. |
| B-107 | CBH-351 | StarLink® | *Zea mays* L. (Mais) | Aventis CropScience | Mais mit Insektenresistenz und Toleranz für das Herbizid Glufosinate-Ammonium; Entwicklung durch Insertieren des Gens für das Cry9C-Protein aus Bacillus thuringiensis subsp. tolworthi und des Gens für die Phosphinotricinacetyltransferase (PAT) aus Streptomyces hygroscopicus. |
| B-108 | DAS-06275-8 | | *Zea mays* L. (Mais) | DOW AgroSciences LLC | Maissorte mit Resistenz gegen Lepidoptereninsekten und Toleranz für das Herbizid Glufosinate-Ammonium; Erzeugung durch Insertieren des cry1F-Gens aus Bacillus thuringiensis var. aizawai und der Phosphinotricinacetyltransferase (PAT) aus Streptomyces hygroscopicus. |
| B-109 | DAS-59122-7 | Herculex RW Rootworm Protection Maize | *Zea mays* L. (Mais) | DOW AgroSciences LLC and Pioneer Hi-Bred International Inc. | Mais mit Resistenz gegen den Maiswurzelbohrer; Erzeugung durch Insertieren des cry34Ab1-und des cry35Ab1-Gens aus dem Bacillus thuringiensis-Stamm PS149B1. Das für PAT codierende Gen aus Streptomyces viridochromogenes wurde als Selektionsmarker eingeführt. |
| B-110 | DAS-59122-7 x NK603 | | *Zea mays* L. (Mais) | DOW AgroSciences LLC and Pioneer Hi-Bred International Inc. | Mais mit einer Kombination von Insektenresistenz und Herbizidtoleranz; Erzeugung durch traditionelles Kreuzen der Elternlinien DAS-59122-7 (nur für die OECD gültige Bezeichnung: DAS-59122-7) mit NK603 (nur für die OECD gültige Bezeichnung: MON-00603-6). Die Resistenz gegen den Maiswurzelbohrer stammt von der Linie DAS-59122-7, die das cry34Ab1- und das cry35Ab1-Gen aus dem Bacillus thuringiensis-Stamm PS149B1 enthält. Die Toleranz für das Herbizid Glyphosate stammt von NK603. |
| B-111 | DAS-59122-7xTC1507 x NK603 | | *Zea mays* L. (Mais) | DOW AgroSciences LLC and Pioneer Hi-Bred International Inc. | Mais mit einer Kombination von Insektenresistenz und Herbizidtoleranz; Erzeugung durch traditionelles Kreuzen der Elternlinien DAS-59122-7 (nur für die OECD gültige Bezeichnung: DAS-59122-7) und TC1507 (nur für die OECD gültige Bezeichnung: DAS-Ø15Ø7-1) mit NK603 (nur für die OECD gültige Bezeichnung: MON-ØØ6Ø3-6). Die Resistenz gegen den Maiswurzelbohrer stammt von der Linie DAS-59122-7, die das cry34Ab1- und das cry35Ab1-Gen aus dem Bacillus thuringiensis-Stamm PS149B1 enthält. Die Lepidopterenresistenz und die Toleranz für das Herbizid Gluphosinate-Ammonium stammen von TC1507. Die Toleranz für das Herbizid Glyphosate stammt von NK603. |
| B-112 | DAS-01507-1 x MON-00603-6 | | *Zea mays* L. (Mais) | DOW AgroSciences LLC | Mais mit einer Kombination von Insektenresistenz und Herbizidtoleranz; Erzeugung durch traditionelles Kreuzen der Elternlinien 1507 (OECD-Bezeichnung: DAS-Ø15Ø7-1) und NK603 (OECD-Bezeichnung: MON-00603-6). |
| B-113 | DBT418 | Bt-XTRA® | *Zea mays* L. (Mais) | Dekalb Genetics Corporation | Mais mit Insektenresistenz und Toleranz für das Herbizid Glufosinate-Ammonium; Entwicklung durch Insertieren von aus Bacillus thuringiensis subsp kurstaki für das Cry1AC-Protein Genen und die Phosphinotricinacetyltransferase (PAT) aus Streptomyces hygroscopicus. |
| B-114 | DK404SR | | *Zea mays* L. (Mais) | BASF Inc. | Somaklonale Varianten mit einer modifizierten Acetyl-CoA-Carboxylase (ACCase) wurden durch Embryokultur auf mit Sethoxydim angereichertem Medium selektiert. |
| B-115 | EXP1910IT | | *Zea mays* L. (Mais) | Syngenta Seeds, Inc. (ehemals Zeneca Seeds) | Eine Toleranz für das Imidazolinonherbizid Imazethapyr wurde durch chemische Mutagenese des Enzyms Acetolactatsynthase (ALS) mit Hilfe von Ethylmethansulfonat (EMS) induziert. |
| B-116 | GA21 | Roundup Ready® | *Zea mays* L. (Mais) | Monsanto Company | Eine modifizierte 5-Enolpyruvylshikimat-3-Phosphatsynthase (EPSPS), ein Enzym, das am Shikimat-Biosyntheseweg für die Bildung der aromatischen Aminosäuren beteiligt ist, wurde durch Beschuß mit der Genkanone induziert. |
| B-117 | IT | | *Zea mays* L. (Mais) | Pioneer Hi-Bred International Inc. | Eine Toleranz für das Imidazolinonherbizid Imazethapyr wurde durch in-vitro-Selektion von somaklonalen Varianten erhalten. |
| B-118 | LY038 | Mavera™ High Value Corn with Lysine | *Zea mays* L. (Mais) | Monsanto Company | Veränderte Aminosäurezusammensetzung, insbesondere erhöhte Lysingehalte, durch Einführung des cordapA Gens aus Corynebacterium glutamicum, das für das Enzym Dihydrodipicolinatsynthase (cDHDPS) codiert. |
| B-119 | MIR604 | Agrisure RW Rootworm-Protected Corn | *Zea mays* L. (Mais) | Syngenta Seeds, Inc. | Ein gegen den Maiswurzelbohrer resistenter Mais wurde durch Transformation mit einem modifizierten cry3A-Gen erzeugt. Das Phosphomannoseisomerase-Gen aus E.coli wurde als Selektionsmarker eingesetzt. |
| B-120 | MON80100 | | *Zea mays* L. (Mais) | Monsanto Company | Insektenresistenter Mais; Erzeugung durch Insertieren des cry1Ab-Gens aus Bacillus thuringiensis subsp. kurstaki. Die genetische Modifikation vermittelt Resistenz gegen Befall durch den Maiszünsler. |
| B-121 | MON802 | Roundup Ready® | *Zea mays* L. (Mais) | Monsanto Company | Mais mit Insektenresistenz und Toleranz für das Herbizid Glyphosate; Erzeugung durch Insertieren der Gene für das Cry1Ab-Protein aus Bacillus thuringiensis und die 5-Enolpyruvylshikimat-3-Posphatsynthase (EPSPS) aus dem A. tumefaciens-Stamm CP4. |
| B-122 | MON809 | | *Zea mays* L. (Mais) | Pioneer Hi-Bred International Inc. | Resistenz gegen den Maiszünsler (Ostrinia nubilalis) durch Einführen eines synthetischen cry1Ab-Gens. Glyphosate-Resistenz durch Einführen der bakteriellen Version eines pflanzlichen Enzyms, der 5-Enolpyruvylshikimat-3-phosphatsynthase (EPSPS). |
| B-123 | MON810 | YieldGard® | *Zea mays* L. (Mais) | Monsanto Company | Insektenresistenter Mais; Erzeugung durch Insertieren einer verkürzten Form des cry1Ab-Gens aus Bacillus thuringiensis subsp. kurstaki HD-1. Die genetische Modifikation vermittelt eine Resistenz gegen Befall durch den Maiszünsler. |
| B-124 | MON810 x MON88017 | | *Zea mays* L. (Mais) | Monsanto Company | Mais mit einer Kombination von Insektenresistenz und Glyphosate-Toleranz; Erzeugung durch traditionelles Kreuzen der Elternlinien MON810(OECD-Bezeichnung: MON-ØØ81Ø-6) und MON88017 (OECD-Bezeichnung: MON-88017-3). Die Resistenz gegen den Maiszünsler stammt von einer verkürzten Form des cry1Ab-Gens aus Bacillus thuringiensis subsp. kurstaki HD-1, die in MON810 vorliegt. Die Resistenz gegen den Maiswurzelbohrer stammt vom cry3Bb1-Gen aus Bacillus thuringiensis subspecies kumamotoensis, Stamm EG4691, das in MON88017 vorliegt. Die Toleranz für Glyphosate stammt von einem Gen für die 5-Enolpyruvylshikimat-3-phosphatsynthase (EPSPS) aus dem Agrobacterium tumefaciens-Stamm CP4, das in MON88017 vorliegt. |
| B-125 | MON832 | | *Zea mays* L. (Mais) | Monsanto Company | Einführung einer modifizierten 5-Enolpyruvylshikimat-3-phosphatsynthase (EPSPS), eines Enzyms, das am Shikimat-Biosyntheseweg für die Bildung der aromatischen Aminosäuren beteiligt ist, und der Glyphosate-Oxidase (GOX) durch Beschuß mit der Genkanone. |
| B-126 | MON863 | YieldGard® Rootworm | *Zea mays* L. (Mais) | Monsanto Company | Mais mit Resistenz gegen den Maiswurzelbohrer; Erzeugung durch Insertieren des cry3Bb1-Gens aus Bacillus thuringiensis subsp. kumamotoensis. |
| B-127 | MON88017 | | *Zea mays* L. (Mais) | Monsanto Company | Mais mit Resistenz gegen den Maiswurzelbohrer; Erzeugung durch Insertieren des cry3Bb1-Gens aus Bacillus thuringiensis subsp. Kumamotoensis, Stamm EG4691. Eine Toleranz für Glyphosate wurde dadurch erhalten, daß man ein Gen für die 5-Enolpyruvylshikimat-3-Phosphatsynthase (EPSPS) aus dem Agrobacterium tumefaciens-Stamm CP4 insertierte. |
| B-128 | MON-00603-6 x MON-ØØ81Ø-6 | | *Zea mays* L. (Mais) | Monsanto Company | Maishybrid mit einer Kombination von Insektenresistenz und Herbizidtoleranz, Erzeugung durch traditionelles Kreuzen der Elternlinien NK603 (OECD-Bezeichnung: MON-00603-6) und MON810 (OECD-Bezeichnung: MON-ØØ81Ø-6). |
| B-129 | MON-ØØ81Ø-6 x LY038 | | *Zea mays* L. (Mais) | Monsanto Company | Mais mit einer Kombination von Insektenresistenz und erhöhtem Lysingehalt, Erzeugung durch traditionelles Kreuzen der Elternlinien MON810 (OECD-Bezeichnung: MON-ØØ81Ø-6) und LY038 (OEC-Bezeichnung: REN-00038-3). |
| B-130 | MON-00863-5 x MON-00603-6 | | *Zea mays* L. (Mais) | Monsanto Company | Maishybrid mit einer Kombination von Insektenresistenz und Herbizidtoleranz, Erzeugung durch traditionelles Kreuzen der Elternlinien MON863 (OECD-Bezeichnung: MON-00863-5) und NK603 (OEC-Bezeichnung: MON-00603-6). |
| B-131 | MON-00863-5 x MON-ØØ81Ø-6 | YieldGard® Plus | *Zea mays* L. (Mais) | Monsanto Company | Maishybrid mit einer Insektenresistenzkombination; Erzeugung durch traditionelles Kreuzen der Elternlinien MON863 (OECD-Bezeichnung: MON-00863-5) und MON810 (OECD-Bezeichnung: Mohn-ØØ81Ø-6) |
| B-132 | MON-00863-5 x MON-ØØ81Ø-6 x MON-00603-6 | YieldGard® Plus, Roundup Ready® | *Zea mays* L. (Mais) | Monsanto Company | Maishybrid mit einer Kombination von Insektenresistenz und Herbizidtoleranz, Erzeugung durch traditionelles Kreuzen des kombinationshaltigen Hybriden MON-00863-5 x MON-ØØ81Ø-6 und NK603 (OECD-Bezeichnung: MON-00603-6). |
| B-133 | MON-ØØ21-9 x MON-ØØ81Ø-6 | | *Zea mays* L. (Mais) | Monsanto Company | Maishybrid mit einer Kombination von Insektenresistenz und Herbizidtoleranz, Erzeugung durch traditionelles Kreuzen der Elternlinien GA21 (OECD-Bezeichnung: MON-00021-9) und MON810 (OECD-Bezeichnung: MON-ØØ81Ø-6). |
| B-134 | MS3 | | *Zea mays* L. (Mais) | Bayer CropScience (Aventis CropScience(Ag rEvo)) | Pollensterilität durch Expression des barnase-Ribonuklease-Gens aus Bacillus amyloliquefaciens; die PPT-Resistenz wurde über die PPT-Acetyltransferase (PAT) erzielt. |
| B-135 | MS6 | LibertyLink® Male Sterile | *Zea mays* L. (Mais) | Bayer CropScience (Aventis CropScience(Ag rEvo)) | Pollensterilität durch Expression des barnase-Ribonuklease-Gens aus Bacillus amyloliquefaciens; die PPT-Resistenz wurde über die PPT-Acetyltransferase (PAT) erzielt. |
| B-136 | NK603 | Roundup Ready® corn | *Zea mays* L. (Mais) | Monsanto Company | Einführung einer modifizierten 5-Enolpyruvylshikimat-3-Phosphatsynthase (EPSPS), eines Enzyms, das am Shikimat-Biosyntheseweg für die Bildung der aromatischen Aminosäuren beteiligt ist, durch Beschuß mit der Genkanone. |
| B-137 | SYN-BTØ11-1x MON-ØØØ21-9 | | *Zea mays* L. (Mais) | Syngenta Seeds, Inc. | Maishybrid mit einer Kombination von Insektenresistenz und Herbizidtoleranz, Erzeugung durch traditionelles Kreuzen der Elternlinien BT11 (nur für die OECD gültige Bezeichnung: SYN-BTØ11-1) und GA21 (nur für die OECD gültige Bezeichnung: MON-ØØØ21-9). |
| B-138 | T14,T25 | LibertyLink™ | *Zea mays* L. (Mais) | Bayer CropScience (Aventis CropScience (AgrEvo)) | Mais mit Toleranz für das Herbizid Glufosinate; Herstellung durch Insertieren des Gens für die Phosphinotricin-N-Acetyltransferase (PAT) des aeroben Actinomyceten Streptomyces viridochromogenes. |
| B-139 | TC1507 | Herculex I® | *Zea mays* L. (Mais) | Mycogen (c/o Dow AgroSciences); Pioneer (c/o Dupont) | Mais mit Insektenresistenz und Toleranz für das Herbizid Glufosinate-Ammonium; Herstellung durch Insertieren des cry 1F-Gens aus Bacillus thuringiensis var. aizawai und des für die Phosphinotricin-N-acetyltransferase-Gens aus Streptomyces viridochromogenes. |
| B-140 | TC1507 x DAS-59122-7 | | *Zea mays* L. (Mais) | DOW AgroSciences LLC and Pioneer Hi-Bred International Inc. | Mais mit einer Kombination aus Insektenresistenz und Herbizidtoleranz; Herstellung durch traditionelles Kreuzen der Elternlinien TC1507 (nur für die OECD gültige Bezeichnung: DAS-Ø15Ø7-1) mit DAS-59122-7 (nur für die OECD gültige Bezeichnung: DAS-59122-7). Die Resistenz gegen Lepidopteren-Insekten stammt von TC1507 aufgrund des Vorhandenseins des cry1F-Gens aus Bacillus thuringiensis var. aizawai. Die Resistenz gegen den Maiswurzelbohrer stammt von der Linie DAS-59122-7, die das cry34Ab1- und das cry35Ab1-Gen aus dem Bacillus thuringiensis-Stamm PS 149B1 enthält. Die Toleranz für das Herbizid Glufosinate-Ammonium stammt von TC1507 von dem Gen für die Phosphinotricin-N-acetyltransferase aus Streptomyces viridochromogenes. |
| B-141 | SYTGA21 | | *Zea mays* L. (Mais) | Syngenta Agrisure GT | Toleranz für das Herbizid Glyphosate |
| B-142 | SYTGA21 + Bt11 | | *Zea mays* L. (Mais) | Syngenta Agrisure GT/CB YieldGard Liberty Link | Schutz gegen den Maiszünsler durch Cry1Ab Toleranz für das Herbizid Glyphosate |
| B-143 | MON810 + SYTGA21 | | *Zea mays* L. (Mais) | MonsantoYield Gard Roundup Ready | Schutz gegen den Maiszünsler durch Cry1Ab Toleranz für das Herbizid Glyphosate |
| B-144 | MON89034 | | *Zea mays* L. (Mais) | Monsanto Agrar Deutschland GmbH | Eine volle Beschreibung der genetischen Elemente in MON 89034, einschließlich der ungefähren Größe, der Herkunft und der Funktion findet sich in Tabelle 1. Tabelle 1. Zusammenstellung der in MON 89034 insertierten genetischen Elemente B1-Linke Border*: 239 Bp lange DNA-Region von der B?Linken Border-Region, die nach der Integration verbleibt Pp2-e35S : Modifizierter Promoter und Leitsequenz für die 35S-RNA aus dem Blumenkohlmosaikvirus (CaMV), enthaltend die duplizierte Enhancer-Region L3-Cab : 5'-nichttranslatierte |
| | | | | | Leitsequenz des Chlorophyll a/b?-Bindungsproteins aus dem Weizen I4-Ract1: Intron aus dem Actin-Gen des Reises CS5-cry1A.105 : Codiersequenz für das Cry 1 A.105-Protein aus Bacillus thuringiensis T6-Hsp17: 3'-Transkriptions-terminationssequenz für das Hitzeschockprotein 17.3 aus dem Weizen, das die Transkription beendet und die Polyadenylierung steuert. P-FMV : 35S-Promoter des Figwort Mosaic-Virus I-Hsp70 :Erstes Intron des Gens für das Hitzeschockprotein 70 aus dem Mais TS7-SSU-CTP : DNA- |
| | | | | | Region, die die Zielsteuerungssequenz für die Transitpeptidregion der kleinen Untereinheit der Ribulose-1,5-biphosphatcarboxylase aus dem Mais und das erste Intron enthält CS-cry2Ab2: Codierungsequenz für ein cry2Ab2-Protein aus Bacillus thuringiensis. Bei dieser Codiersequenz wird ein modifizierter "codon usage" verwendet. T-nos: 3'-Transkriptionsterminations-sequenz der für die Nopalinsynthase (nos) codierenden Sequenz aus Agrobacterium tumefaciens, die die Transkription terminiert und die Polyadenylierung steuert. B-Left Border: 230 Bp lange DNA- |
| | | | | | Region von der B-Linken Border-Region, die nach der Integration verbleibt *Analysen der MON 89034-Insertsequenz haben ergeben, daß der e35S-Promoter, der die Expression der cry1A.105-Codiersequenz reguliert, modifiziert war: die in PV-ZMIR245 vorhandene Rechte Border-Sequenz war durch die Linke Border -Sequenz ersetzt. Es ist anzunehmen, daß diese Modifikation das Ergebnis eines Crossover-Rekombinations-Events ist, das stattfand, bevor die DNA in das Genom insertiert worden war. |
| B-145 | MON 89034 × MON 88017 | | *Zea mays L*. (Mais) | Monsanto Agrar Deutschland GmbH | |
| B-146 | MON 89034 × NK603 | | *Zea mays L*. (Mais) | Monsanto Agrar Deutschland GmbH | |
| B-147 | DP-Ø9814Ø-6 | | *Zea mays L*. (Mais) | Pioneer Hi-Bred Seeds Agro SRL | 98140-Mais wurde dadurch genetisch modifiziert, daß man das Gen für die Glyphosate-N-acetyltransferase (gat4621) und ein modifiziertes Mais-Acetolactatsynthase (zm-hra) -Gen gemeinsam mit den für die Genexpression in der Maispflanze erforderlichen Regulationselementen insertierte. Das gat4621-Gen codiert für das GAT4621-Protein, das von dem Bodenbakterium Bacillus licheniformis abstammte und das eine Toleranz für Glyphosate |
| | | | | | enthaltende Herbizide vermittelt. Das zm-hra-Gen codiert für das ZM-HRA-Protein und vermittelt eine Toleranz für verschiedene ALS-hemmende Herbizide wie Sulfonylharnstoffe. |
| B-148 | 3243M | | *Zea mays L.*. (Mais) | Syngenta Seeds SA | Regulationssequenzen: Promotersequenzen vom Mais. Die Funktion dieser Sequenzen besteht darin, die Expression des Insektenresistenzgens zu kontrollieren. Insektenresistenzgen: cry1Abr-Gen von Bacillus thuringiensis. Die Funktion des Produkts dieses Gens besteht darin, Resistenz gegenüber gewissen Schadlepidopteren zu vermitteln. NOS-Terminator: Terminatorsequenz des Nopalinsynthasegens, isoliert aus Agrobacterium tumefaciens. Die Funktion dieser Sequenz besteht darin, ein Signal für die Termination der Expression des Insektenresistenzgens zu geben. ZmUbilntron: Promoter aus einem Mais-Ubiquitin-Gen zusammen mit dem ersten Intron des Gens. Die Funktion dieser Sequenzen besteht darin, die Expression des Phosphomannoseisomerase (pmi)-Gens zu kontrollieren und zu verstärken. pmi: Codiersequenz des Phospho-mannoseisomerase (pmi)-Gens, |
| | | | | | isoliert aus Escherichia coli. Die Funktion dieses Genprodukts besteht darin, als Selektionsmarker für die Transformation zu dienen, da es eine positive Selektion von transformierten Zellen, die auf |
| | | | | | Mannose wachsen, ermöglicht. NOS-Terminator: Terminatorsequenz des Nopalinsynthasegens, isoliert aus Agrobacterium tumefaciens. Die Funktion dieser Sequenz besteh t darin, ein Signal für die Termination der Expression des Markergens (pmi) zu geben. |
| B-149 | DP 444 BG/RR | Bollgard/Roun dupReady, from US 2003213029-A1 | Gossypium hirsutum L. (Baumwolle) | Delta and Pine Land company | Bollgard®, RoundupReady® |
| B-150 | VSN-BTCRW | Bt-toxin corn root worm | Zea mays L. (Mais) | | |
| B-151 | HCL201CR W2RR x LH324 | Bt-toxin corn root worm | Zea mays L. (Mais) | Monsanto Company | |
| B-152 | LH324 | from US 7223908 B1 | Zea mays L. (Mais) | Monsanto Company | |
| B-153 | VSN-RR Bt | RoundupReady Bt-toxin | Zea mays L. (Mais) | | |
| B-154 | FR1064LL x FR2108 | Lit.: Gerdes, J. T., Behr, C. F., Coors, J. G., und Tracy, W. F. 1993. Compilation of North American Maize Breeding | Zea mays L. (Mais) | Illinois Foundation Seeds | |
| | | Germplasm. W. F. Tracy, J. G. Coors, und J. L. Geadelmann, Hrsg. Crop Science Society of America, Madison, WI und US 6407320 B1 | | | |
| B-155 | VSN-Bt | Bt-toxin | Zea mays L. (Mais) | | |

**Tabelle 6**

| **Nr.** | **Handelsname** | **Pflanze** | **Unternehmen** | **transgen modifizierte Eigenschaften** | **zusätzliche Informationen** |
|---|---|---|---|---|---|
| 4-1 | Roundup Ready® | *Beta vulgaris* (Zuckerrübe) | Monsanto Company | Toleranz für Glyphosate | |
| 4-2 | In Vigor® | *Brassica napus* (Argentinischer Canola-Raps) | BayerCropScience | Canola-Raps wurde mit folgendem Ergebnis genetisch modifiziert: Ø Expression eines Gens, das Toleranz für das Herbizid Glyfosinate-Ammonium vermittelt; Ø Einführung eines neuen Hybrid-züchtungssystems für Canola-Raps, das auf genetisch modifizierten Pollensterilitäts-(MS) und Fertilitätsrestorer-(RF) Linien beruht; Ø Expression eines Gens für Antibiotikaresistenz. | |
| 4-3 | Liberty Link® | *Brassica napus* (Argentinischer Canola-Raps) | BayerCropScience | Toleranz für Phosphinotricin | |
| 4-4 | Roundup Ready® | *Brassica napus* (Canola-Raps) | Monsanto Company | Toleranz für Glyphosate | |
| 4-5 | Clearfield® | (Canola-Raps) | BASF Corporation | nicht-GMO, Toleranz für Imazamox | |
| 4-6 | Optimum™ GAT™ | *Glycine max* L. (Sojabohne) | Pioneer Hi-Bred International, Inc | Toleranz für Glyphosate und ALS-Herbizide | |
| 4-7 | Roundup Ready® | *Glycine max* L. (Sojabohne-) | Monsanto Company | Toleranz für Glyphosate | |
| 4-8 | Roundup RReady2Yield TM | *Glycine max* L. (Sojabohne) | Monsanto Company | Toleranz für Glyphosate | |
| 4-9 | STS® | *Glycine max* L. (Sojabohne) | DuPont | Toleranz für Sulfonylharnstoffe | |
| 4-10 | YIELD GARD® | *Glycine max* L. (Sojabohne) | Monsanto Company | | |
| 4-11 | AFD® | *Gossypium hirsutum* L. (Baumwolle) | BayerCropScience | Zu den Linien zählen z.B. AFD5062LL, AFD5064F, AFD 5065B2F; AFD-Saatgut ist in verschiedenen Sorten mit integrierter Technologie verfügbar, wie zum Beispiel die Bollgard®-, Bollgard II-, Roundup Ready-, Roundup Ready Flex- und LibertyLink®-Technologien | |
| 4-12 | Bollgard II® | *Gossypium hirsutum* L. (Baumwolle) | Monsanto Company | MON 15985-Event: Cry2(A)b1; Cry1A(c) | |
| 4-13 | Bollgard® | *Gossypium hirsutum* L. (Baumwolle) | Monsanto Company | Cry1Ac | |
| 4-14 | FiberMax® | *Gossypium hirsutum* L. (Baumwolle) | BayerCropScience | | |
| 4-15 | Liberty Link® | *Gossypium hirsutum* L. (Baumwolle) | BayerCropScience | Toleranz gegen Phosphinotricin | |
| 4-16 | Nucotn 33B | *Gossypium hirsutum* L. (Baumwolle) | Delta Pine and Land | Bt-Toxin in den Linien von Delta Pine: Cry1Ac | |
| 4-17 | Nucotn 35B | *Gossypium hirsutum* L. (Baumwolle) | Delta Pine and Land | Bt-Toxin in den Linien von Delta Pine: Cry1Ac | |
| 4-18 | Nucotn® | *Gossypium hirsutum* L. (Baumwolle) | Delta Pine and Land | Bt-Toxin in Linien von Delta Pine | |
| 4-19 | PhytoGen™ | *Gossypium hirsutum* L. (Baumwolle) | PhytoGen Seed Company, Dow AgroSciences LLC | umfaßt Sorten, die zum Beispiel Roundup Ready flex, Widestrike enthalten | |
| 4-20 | Roundup Ready Flex® | *Gossypium hirsutum* L. (Baumwolle) | Monsanto Company | Toleranz für Glyphosate | |
| 4-21 | Roundup Ready® | *Gossypium hirsutum* L. (Baumwolle) | Monsanto Company | Toleranz für Glyphosate | |
| 4-22 | Widestrike™ | *Gossypium hirsutum* L. (Baumwolle) | Dow AgroSciences LLC | Cry1F und Cry1Ac | Monsanto/Dow |
| 4-23 | YIELD GARD® | *Gossypium hirsutum* L. (Baumwolle) | Monsanto Company | | http://www.garstsee d.com/GarstClient/ Technology/agrisur e.aspx |
| 4-24 | Roundup Ready® | *Medicago sativa* (Luzerne) | Monsanto Company | Toleranz für Glyphosate | |
| 4-25 | Clearfield® | *Oryza sativa* (Reis) | BASF Corporation | nicht-GMO, Toleranz für Imazamox | |
| 4-26 | NewLeaf® | *Solanum tuberosum* L. (Kartoffel) | Monsanto Company | Resistenz gegen Infektion durch Kartoffel-Blattroll-virus (PLRV) und Fraßschaden durch den Kartoffelkäfer Leptinotarsa decemlineata | |
| 4-27 | NewLeaf® plus | *Solanum tuberosum* L. (Kartoffel) | Monsanto Company | Resistenz gegen Infektion durch Kartoffel-Blattroll-virus (PLRV) und Fraßschaden durch den Kartoffelkäfer Leptinotarsa decemlineata | http://www.dowagr o.com/phytogen/ind ex.htm |
| 4-28 | Protecta® | *Solanum tuberosum* L. (Kartoffel) | ? | | |
| 4-29 | Clearfield® | Sonnenblume | BASF Corporation | nicht-GMO, Toleranz für Imazamox | |
| 4-30 | Roundup Ready® | *Triticum aestivum* (Weizen) | Monsanto Company | Toleranz für Glyphosate, NK603 | |
| 4-31 | Clearfield® | Weizen | BASF Corporation | nicht-GMO, Toleranz für Imazamox | |
| 4-32 | Agrisure® (Familie) | *Zea mays* L. (Mais) | Syngenta Seeds, Inc. | hierzu zählen Agrisure CB/LL (BT 11-Event plus Toleranz für Phosphinotricin durch GA21-Event); Agrisure CB/LL/RW (Bt 11-Event, modifiziertes synthetisches Cry3A-Gen, Toleranz für Phosphinotricin durch GA21-Event); Agrisure GT (Toleranz für Glyphosate) ; Agrisure GT/CB/LL(Toler-anz für Glyphosate und für Phosphinotricin durch GA21-Event, Bt 11-Event); Agrisure 3000GT (CB/LL/RW/GT: Toleranz für Glyphosate und gegen Phosphinotricin durch GA21-Event, Bt 11-Event, modifiziertes synthetisches Cry3A-Gen) ; Agrisure GT/RW (Toleranz für Glyphosate, modifiziertes synthetisches Cry3A-Gen) ; Agrisure RW (modifiziertes synthetisches Cry3A-Gen); Zukünftige Merkmale | |
| 4-33 | BiteGard® | *Zea mays* L. (Mais) | Novartis Seeds | cry1A(b)-Gen. | |
| 4-34 | Bt-Xtra® | *Zea mays* L. (Mais) | DEKALB Genetics Corporation | cry1Ac-Gen. | |
| 4-35 | Clearfield® | *Zea mays* L. (Mais) | BASF Corporation | nicht-GMO, Toleranz für Imazamox | |
| 4-36 | Herculex® (Familie) | *Zea mays* L. (Mais) | Dow AgroSciences LLC | | |
| 4-37 | IMI® | *Zea mays* L. (Mais) | DuPont | Toleranz für Imidazolinone | |
| 4-38 | KnockOut® | *Zea mays* L. (Mais) | Syngenta Seeds, Inc. | SYN-EV176-9: cry 1A(b)-Gen. | |
| 4-39 | Mavera® | *Zea mays* L. (Mais) | Renessen LLC | lysinreich | http://www.dowagr o.com/widestrike/ |
| 4-40 | NatureGard® | *Zea mays* L. (Mais) | Mycogen | cry1A(b)-Gen. | |
| 4-41 | Roundup Ready® | *Zea mays* L. (Mais) | Monsanto Company | Toleranz für Glyphosate | http://www.starlinkc orn.com/starlinkcor n.htm |
| 4-42 | Roundup Ready® 2 | *Zea mays* L. (Mais) | Monsanto Company | Toleranz für Glyphosate | |
| 4-43 | SmartStax | *Zea mays* L. (Mais) | Monsanto Company | Kombination von acht Genen | |
| 4-44 | StarLink® | *Zea mays* L. (Mais) | Aventis CropScience ->Ba yer CropScience | Cry9c-Gen. | |
| 4-45 | STS® | *Zea mays* L. (Mais) | DuPont | Toleranz für Sulfonylharnstoffe | |
| 4-46 | YIELD GARD® | *Zea mays* L. (Mais) | Monsanto Company | Mon810, Cry1Ab1; Resistenz gegen den Maiszünsler | http://www.dowagr o.com/herculex/abo ut/herculexfamily/ |
| 4-47 | YieldGard® Plus | *Zea mays* L. (Mais) | Monsanto Company | Mon810xMon863, Zweierkombination, Resistenz gegen Maiszünsler und Maiswurzelbohrer | |
| 4-48 | YieldGard® Rootworm | *Zea mays* L. (Mais) | Monsanto Company | Mon863, Cry3Bb1, Resistenz gegen Maiswurzelbohrer | |
| 4-49 | YieldGard® VT | *Zea mays* L. (Mais) | Monsanto Company | Merkmals-kombination | |
| 4-50 | YieldMaker™ | *Zea mays* L. (Mais) | DEKALB Genetics Corporation | enthält Roundup Ready 2-Technologie, YieldGard VT, YieldGard Corn Borer, YieldGard Rootworm und YieldGard Plus | |

### Beispiele

Die Erfindung wird durch die folgenden Beispiele näher erläutert, ohne sie dadurch einzuschränken.

### Beispiel 1

Einzeln getopfte transgene Baumwollpflanzen mit einer Lepidopteren - und einer Herbizidresistenz (Linie DP444 BG/RR) werden in 2 Replikationen gegen Larven der Weißen Fliege *(Bemisia tabaci)* behandelt. Die Applikation erfolgt durch Tauchbehandlung mit dem jeweiligen Wirkstoff in der gewünschten Aufwandmenge.

Nach der gewünschten Zeit wird die Abtötung in % bestimmt. Dabei bedeutet 100 %, dass alle Weißen Fliegen abgetötet wurden; 0 % bedeutet, dass keine Weißen Fliegen abgetötet wurden.

Es ist dabei eine deutliche Verbesserung der Bekämpfung der Schädlinge im Vergleich zu den nicht erfindungsgemäß behandelten Kontrollpflanzen zu erkennen.

### Beispiel 2

Einzeln getopfte transgene Baumwollpflanzen mit einer Lepidopteren - und einer Herbizidresistenz (Linie DP444 BG/RR) werden in 2 Replikationen gegen eine gemischte Population der Gemeinen Spinnmilbe *(Tetranychus urticae)* behandelt. Die Applikation erfolgt durch Tauchbehandlung mit dem jeweiligen Wirkstoff in der gewünschten Aufwandmenge.

Nach der gewünschten Zeit wird die Abtötung in % bestimmt. Dabei bedeutet 100 %, dass alle Spinnmilben abgetötet wurden; 0 % bedeutet, dass keine Spinnmilben abgetötet wurden.

Es ist dabei eine deutliche Verbesserung der Bekämpfung der Schädlinge im Vergleich zu den nicht erfindungsgemäß behandelten Kontrollpflanzen zu erkennen.

## Patentansprüche

1. Verfahren zur Verbesserung der Nutzung des Produktionspotentials einer transgenen Pflanze, **dadurch gekennzeichnet, dass** die Pflanze mit einer wirksamen Menge mindestens eines TSD-Derivats behandelt wird.

2. Verfahren nach Anspruch 1, **gekennzeichnet durch** ein TSD-Derivat der Formel I.

3. Verfahren nach Anspruch 1 oder 2, **gekennzeichnet durch** ein TSD-Derivat der Formel I-1 oder I-2.

4. Verfahren nach einem der Ansprüche 1 bis 3, **dadurch gekennzeichnet, dass** die Pflanze mindestens eine genetisch veränderte Struktur oder eine Toleranz gemäß der Tabelle 1 aufweist.

5. Verfahren nach einem der Ansprüche 1 bis 3, **dadurch gekennzeichnet, dass** es sich um eine Pflanze mit mindestens einem geänderten Wirkprinzip gemäß Tabelle 3 handelt.

6. Verfahren nach einem der Ansprüche 1 bis 3, **dadurch gekennzeichnet, dass** es sich um eine transgene Pflanze gemäß einer der Tabellen 4 bis 6 handelt.

7. Verfahren nach einem der Ansprüche 1 bis 3, **dadurch gekennzeichnet, dass** die Pflanze mindestens eine genetische Modifikation gemäß der Tabelle 2 enthält.

8. Verfahren nach einem der Ansprüche 1 bis 3, **dadurch gekennzeichnet, dass** die transgene Pflanze mindestens ein Gen oder ein Genfragment codierend ein Bt-Toxin enthält.

9. Verfahren nach Anspruch 1 oder 2, **dadurch gekennzeichnet, daß** es sich bei der transgenen Pflanze um eine Gemüse-, Mais-, Soja-, Baumwoll- , Tabak-, Reis-, Zuckerrüben-, oder Kartoffelpflanze handelt.

10. Verfahren nach einem der obigen Ansprüche, **dadurch gekennzeichnet, dass** das TSD-Derivat zur Kontrolle von Blattläusen (Aphidina), Weißen Fliegen (Trialeurodes), Thrips (Thysanoptera), Spinnmilben (Arachnida), Schild- oder Schmierläusen (Coccoidae bzw. Pseudococcoidae) eingesetzt werden.

11. Verfahren nach einem der obigen Ansprüche, **dadurch gekennzeichnet, dass** Aufwandmengen des TSD-Derivats zwischen 0,1 g/ha und 5,0 kg/ha, bevorzugt 0,1 bis 500 g/ha, besonders bevorzugt 50 bis 500 g/ha, insbesondere bevorzugt 50 bis 200 g/ha verwendet werden.

12. Verfahren nach einem der vorherigen Ansprüche, **dadurch gekennzeichnet, daß** die Anwendungsform des TSD-Derivats in einer Mischung mit mindestens einem Mischpartner vorliegt.

13. Verfahren nach einem der vorherigen Ansprüche, **dadurch gekennzeichnet, daß** mit der Behandlung der Pflanze mit dem TSD-Derivat eine Abtötung von Schadorganismen von mindestens 20% im Vergleich zur Kontrolle erreicht wird.

14. Pflanzenteile, insbesondere Saat- oder Vermehrungsmaterial, transgener Pflanzen, **dadurch gekennzeichnet, dass** sie durch ein Verfahren nach einem der Ansprüche 1 bis 13 erhältlich sind.

15. Pflanzenteile, insbesondere Saat- oder Vermehrungsmaterial, transgener Pflanzen, **dadurch gekennzeichnet, dass** sie mit einem Verfahren nach einem der Ansprüche 1 bis 13 behandelt wurden.
